(19)

Europäisches
Patentamt
European
Patent Office
Office européen
des brevets

(11) **EP 4 509 476 A1**

(12) **EUROPEAN PATENT APPLICATION**
published in accordance with Art. 153(4) EPC

(43) Date of publication:
**19.02.2025 Bulletin 2025/08**

(21) Application number: **23788430.9**

(22) Date of filing: **14.04.2023**

(51) International Patent Classification (IPC):
***C03C 27/12*** *(2006.01)*    ***B60J 1/02*** *(2006.01)*

(52) Cooperative Patent Classification (CPC):
**B32B 17/00; B60J 1/02**

(86) International application number:
**PCT/JP2023/015239**

(87) International publication number:
**WO 2023/200013 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.04.2022 JP 2022067713**

(71) Applicant: **Sekisui Chemical Co., Ltd.
Osaka 530-8565 (JP)**

(72) Inventor: **ISHIDA, Jun
6045 JB Roermond (NL)**

(74) Representative: **Ter Meer Steinmeister & Partner
Patentanwälte mbB
Nymphenburger Straße 4
80335 München (DE)**

(54) **INTERLAYER FOR LAMINATED GLASS AND METHOD FOR PRODUCING SAME, AND LAMINATED GLASS AND METHOD FOR PRODUCING SAME**

(57) Provided is an interlayer film for laminated glass capable of 1) suppressing generation of double images, 2) suppressing color irregularities, and 3) keeping the haze value small in laminated glass. The interlayer film for laminated glass according to the present invention has one end and the other end, and when a distance between the one end and the other end is referred to as X, the thickness of the interlayer film at an arbitrary position (1) of the interlayer film within a region of 0.1X to 0.9X from the one end toward the other end, the thickness of the interlayer film at a position (2) where the thickness of the interlayer film is smaller than the thickness of the interlayer film at the position (1) within a region of 0.1X to 0.9X from the one end toward the other end by 25 μm or more, the visible light transmittance at the position (1) of the laminated glass including the interlayer film, and the visible light transmittance at the position (2) of the laminated glass including the interlayer film satisfy specific relationships.

[FIG. 1]

**Description**

**TECHNICAL FIELD**

The present invention relates to an interlayer film for laminated glass that is used for obtaining laminated glass, and a method for producing the same. Also, the present invention relates to a laminated glass and a method for producing the same.

**BACKGROUND ART**

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates.

Moreover, as the laminated glass used for automobiles, a head-up display (HUD) has been known. In a HUD, it is possible to display measured information including automobile traveling data such as speed on the windshield of the automobile, and the driver can recognize as if the display were shown in front of the windshield. In the HUD, however, there is a problem that the measured information or the like is doubly observed. In order to suppress double images, a wedge-like interlayer film has been used (for example, Patent Document 1).

**Related Art Document**

**Patent Document**

Patent Document 1: WO2021/145328 A1

**SUMMARY OF THE INVENTION**

**PROBLEMS TO BE SOLVED BY THE INVENTION**

In laminated glass prepared with a conventional wedge-like interlayer film, even though generation of double images can be inhibited to some extent, the balance of the visible light transmittance may be disrupted with the change in thickness of the interlayer film, and color irregularities may occur. Also, in laminated glass prepared with a conventional wedge-like interlayer film, a haze value may increase. In particular, when the interlayer film contains a coloring agent at a relatively high concentration, the haze value tends to further increase.

It is an object of the present invention to provide an interlayer film for laminated glass capable of 1) suppressing generation of double images, 2) suppressing color irregularities, and 3) keeping the haze value small. It is also an object of the present invention to provide a laminated glass prepared with the interlayer film for laminated glass.

**MEANS FOR SOLVING THE PROBLEMS**

According to a broad aspect of the present invention, there is provided an interlayer film for laminated glass (hereinafter, sometimes referred to as interlayer film) that is an interlayer film for laminated glass having one end and the other end, the interlayer film having a part satisfying a formula (1-1) below when a distance between the one end and the other end of the interlayer film is referred to as X, a thickness of the interlayer film at an arbitrary position (1) of the interlayer film within a region of 0.1X to 0.9X from the one end toward the other end is referred to as T1 mm, a thickness of the interlayer film at a position (2) where the thickness of the interlayer film is smaller than the thickness of the interlayer film at the position (1) within a region of 0.1X to 0.9X from the one end toward the other end by 25 $\mu$m or more is referred to as T2 mm, and in a laminated glass A obtained by sandwiching the interlayer film between two sheets of clear glass, a visible light transmittance of the laminated glass A at the position (1) is referred to as Tv1%, and a visible light transmittance of the laminated glass A at the position (2) is referred to as Tv2%:
[Numerical formula 1]

$$\Delta Tv < Tv2 - \left(\frac{Tv2}{f(T2)}\right)^{\frac{T1}{T2}} \times f(T1) \qquad \cdots (1-1)$$

in the formula (1-1), ΔTv and f(T) being values indicated by the formula (1-1A) and a formula (1-1B) below, respectively:

[Numerical formula 2]

$$\Delta Tv = Tv2 - Tv1 \qquad \cdots (1-1A)$$

$$f(T) = -1.374T + 89.596 \qquad \cdots (1-1B)$$

.

In a specific aspect of the interlayer film according to the present invention, the position (1) is a maximum thickness position (X1) of the interlayer film within a region of 0.1X to 0.9X from the one end toward the other end, and the position (2) is a minimum thickness position (X2) of the interlayer film within a region of 0.1X to 0.9X from the one end toward the other end.

In a specific aspect of the interlayer film according to the present invention, the interlayer film has a part where the visible light transmittance of the laminated glass A within a region of 0.1X to 0.9X from the one end toward the other end is a numerical value calculated from the formula (1-1B) or less.

In a specific aspect of the interlayer film according to the present invention, the interlayer film contains a coloring agent.

In a specific aspect of the interlayer film according to the present invention, a colored region has a plane area of 70% or more in 100% of a total plane area of the interlayer film.

In a specific aspect of the interlayer film according to the present invention, the colored region exists at the position (1), and the colored region exists at the position (2).

In a specific aspect of the interlayer film according to the present invention, the interlayer film includes a colored layer containing a coloring agent, and the colored layer has a minimum thickness of 30 $\mu$m or more.

In a specific aspect of the interlayer film according to the present invention, the colored layer exists at the position (1).

In a specific aspect of the interlayer film according to the present invention, a content of the coloring agent in 100% by weight of the colored layer is 0.00001% by weight or more and 7% by weight or less.

In a specific aspect of the interlayer film according to the present invention, the interlayer film includes two or more colored layers.

In a specific aspect of the interlayer film according to the present invention, when a distance from a first outer surface to a second outer surface of the interlayer film is referred to as t, the coloring agent exists in a region of 0t to 0.2t from the first outer surface toward the second outer surface.

In a specific aspect of the interlayer film according to the present invention, when a distance from a first outer surface to a second outer surface of the interlayer film is referred to as t, the coloring agent exists in a region of more than 0.2t to 0.4t from the first outer surface toward the second outer surface.

In a specific aspect of the interlayer film according to the present invention, when a distance from a first outer surface to a second outer surface of the interlayer film is referred to as t, the coloring agent exists in a region of more than 0.4t to 0.5t from the first outer surface toward the second outer surface.

In a specific aspect of the interlayer film according to the present invention, the interlayer film satisfies a formula (2) below.

[Numerical formula 3]

$$\Delta Tv < K \times \left( Tv2 - \left( \frac{Tv2}{f(T2)} \right)^{\frac{T1}{T2}} \times f(T1) \right) \qquad \cdots (2)$$

In the formula (2), ΔTv and f(T) are values indicated by the formula (1-1A) and the formula (1-1B), respectively, and K is 0.95.

In a specific aspect of the interlayer film according to the present invention, the interlayer film satisfies a formula (3) below.

[Numerical formula 4]

$$|\Delta Tv| < \left| Tv2 - \left(\frac{Tv2}{f(T2)}\right)^{\frac{T1}{T2}} \times f(T1) \right| \qquad \cdots (3)$$

In the formula (3), $\Delta Tv$ and $f(T)$ are values indicated by the formula (1-1A) and the formula (1-1B), respectively.

In a specific aspect of the interlayer film according to the present invention, the interlayer film satisfies a formula (4) below.

[Numerical formula 5]

$$|\Delta Tv| < K \times \left| Tv2 - \left(\frac{Tv2}{f(T2)}\right)^{\frac{T1}{T2}} \times f(T1) \right| \qquad \cdots (4)$$

In the formula (4), $\Delta Tv$ and $f(T)$ are values indicated by the formula (1-1A) and the formula (1-1B), respectively, and K is 0.95.

In a specific aspect of the interlayer film according to the present invention, in the formula (1-1), $\Delta Tv < 0$ is satisfied.

In a specific aspect of the interlayer film according to the present invention, the interlayer film has a region where a partial wedge angle in a length of 400 mm in a direction connecting the one end and the other end is 0.05 mrad or more.

In a specific aspect of the interlayer film according to the present invention, the interlayer film as a whole has a wedge angle of 0.05 mrad or more.

In a specific aspect of the interlayer film according to the present invention, the interlayer film has a region where a partial wedge angle in a length of 400 mm in a direction connecting the one end and the other end is 0.05 mrad or more, and the interlayer film as a whole has a wedge angle of less than 0.05 mrad.

In a specific aspect of the interlayer film according to the present invention, a position where the visible light transmittance of the laminated glass A shows a maximum value within a region of 0.1X to 0.9X from the one end toward the other end is different from the position (1) and is different from the position (2).

In a specific aspect of the interlayer film according to the present invention, a position where the visible light transmittance of the laminated glass A shows a maximum value within a region of 0.1X to 0.9X from the one end toward the other end is the position (1) or the position (2).

In a specific aspect of the interlayer film according to the present invention, a position where the visible light transmittance of the laminated glass A shows a minimum value within a region of 0.1X to 0.9X from the one end toward the other end is different from the position (1) and is different from the position (2).

In a specific aspect of the interlayer film according to the present invention, a position where the visible light transmittance of the laminated glass A shows a minimum value within a region of 0.1X to 0.9X from the one end toward the other end is the position (1) or the position (2).

In a specific aspect of the interlayer film according to the present invention, the interlayer film has a region where the visible light transmittance of the laminated glass A is 85% or less.

In a specific aspect of the interlayer film according to the present invention, the interlayer film includes a layer having a storage modulus at 20°C of 4 MPa or more, the interlayer film has uneven surface given by an emboss roll method or a melt fracture method, the uneven surface has a ten-point average roughness of 1 $\mu$m or more and 100 $\mu$m or less, and the interlayer film has a refractive index of 1.46 or more.

According to a broad aspect of the present invention, there is provided an interlayer film for laminated glass (hereinafter, sometimes referred to as interlayer film) having one end and the other end, the interlayer film including a colored layer containing a coloring agent, in a laminated glass A obtained by sandwiching the interlayer film between two sheets of clear glass, the interlayer film having a shading region that corresponds to a region having a visible light transmittance of less than 60% in the laminated glass A, and a second region having a visible light transmittance of 60% or more in the laminated glass A, the second region having a region P that is a region of 200 mm toward the second region side from a boundary between the second region and the shading region, and a region Q that is a region other than the region P, in 100% of a total plane area of the region Q of the interlayer film, a plane area of a part where the colored layer exists being 80% or more, the interlayer film having a part satisfying a formula (1-2) below when a thickness of the interlayer film at an arbitrary position (Q1) of the interlayer film in the region Q existing within a region of 0.1X to 0.9X from the one end toward the other end is referred to as T1 mm, a thickness of the interlayer film at a position (Q2) where the thickness of the interlayer film is smaller by 25 $\mu$m or more than the thickness of the interlayer film at the position (Q1) in the region Q existing within a region of 0.1X to 0.9X from the one end toward the other end is referred to as T2 mm, a visible light transmittance of the laminated glass A in the position (Q1) is referred to as Tv1%, and a visible light transmittance of the laminated glass A in the position (Q2) is referred to as Tv2%:

[Numerical formula 6]

$$\Delta Tv < Tv2 - \left(\frac{Tv2}{f(T2)}\right)^{\frac{T1}{T2}} \times f(T1) \qquad \cdot\cdot\cdot (1-2)$$

in the formula (1-2), $\Delta$Tv and f(T) being values indicated by a formula (1-2A) and a formula (1-2B) below, respectively.

[Numerical formula 7]

$$\Delta Tv = Tv2 - Tv1 \qquad \cdot\cdot\cdot (1-2A)$$

$$f(T) = -1.374T + 89.596 \qquad \cdot\cdot\cdot (1-2B)$$

In a specific aspect of the interlayer film according to the present invention, the position (Q1) is a maximum thickness position (XQ1) of the interlayer film in the region Q existing within a region of 0.1X to 0.9X from the one end toward the other end, and the position (Q2) is a minimum thickness position (XQ2) of the interlayer film in the region Q existing within a region of 0.1X to 0.9X from the one end toward the other end.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

In a specific aspect of the laminated glass according to the present invention, the first lamination glass member has a uniform thickness, and the second lamination glass member has a uniform thickness.

According to a broad aspect of the present invention, there is provided a production method that fits either of 1) and b) below:

1) Method for producing the interlayer film for laminated glass described above, and
2) Method for producing the laminated glass described above.

## EFFECT OF THE INVENTION

According to the present invention, it is possible to provide an interlayer film for laminated glass capable of 1) suppressing generation of double images, 2) suppressing color irregularities, and 3) keeping the haze value small.

## BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view schematically showing an interlayer film for laminated glass in accordance with a third embodiment of the present invention.
[Fig. 4] Fig. 4 is a sectional view schematically showing an interlayer film for laminated glass in accordance with a fourth embodiment of the present invention.
[Fig. 5] Fig. 5 is a sectional view schematically showing an interlayer film for laminated glass in accordance with a fifth embodiment of the present invention.

[Fig. 6] Fig. 6 is a sectional view schematically showing an interlayer film for laminated glass in accordance with a sixth embodiment of the present invention.

[Fig. 7] Fig. 7 is a sectional view schematically showing an interlayer film for laminated glass in accordance with a seventh embodiment of the present invention.

[Fig. 8] Fig. 8 is a sectional view schematically showing an interlayer film for laminated glass in accordance with an eighth embodiment of the present invention.

[Fig. 9] Fig. 9 is a sectional view schematically showing an interlayer film for laminated glass in accordance with a ninth embodiment of the present invention.

[Fig. 10] Fig. 10 is a sectional view schematically showing an interlayer film for laminated glass in accordance with a tenth embodiment of the present invention.

[Fig. 11] Fig. 11 is a sectional view schematically showing an interlayer film for laminated glass in accordance with an eleventh embodiment of the present invention.

[Fig. 12] Fig. 12 is a sectional view schematically showing an interlayer film for laminated glass in accordance with a twelfth embodiment of the present invention.

[Fig. 13] Fig. 13 is a sectional view schematically showing an interlayer film for laminated glass in accordance with a thirteenth embodiment of the present invention.

[Fig. 14] Fig. 14 is a sectional view schematically showing an interlayer film for laminated glass in accordance with a fourteenth embodiment of the present invention.

[Fig. 15] Fig. 15 is a sectional view schematically showing an interlayer film for laminated glass in accordance with a fifteenth embodiment of the present invention.

[Fig. 16] Fig. 16 is a sectional view schematically showing an interlayer film for laminated glass prepared in Comparative Example 1.

[Fig. 17] Fig. 17 is a chart showing the relationship between the thickness of the resin film and the visible light transmittance of the laminated glass prepared with the resin film in the single-layer resin film having a uniform thickness and not containing a coloring agent.

[Fig. 18] Fig. 18 is a chart showing the relationship between the coordinate (distance from the one end toward the other end) and the visible light transmittance in the interlayer films obtained in Examples 18 to 21 and Comparative Example 1.

## MODES FOR CARRYING OUT THE INVENTION

Hereinafter, the details of the present invention will be described.

(Interlayer film for laminated glass)

The interlayer film for laminated glass (in the present specification, sometimes abbreviated as "interlayer film") according to the present invention is used for laminated glass.

The interlayer film has one end and the other end. The other end is an end part being opposite to the one end. The direction connecting the one end and the other end of the interlayer film is a direction orthogonal to the width direction of the interlayer film (perpendicular direction).

From the viewpoint of suppressing double images of laminated glass, an absolute value of difference between the maximum thickness and the minimum thickness of the interlayer film is 25 $\mu$m or more. The absolute value of difference between the maximum thickness and the minimum thickness of the interlayer film is preferably 50 $\mu$m or more, more preferably 100 $\mu$m or more, further preferably 150 $\mu$m or more, especially preferably 200 $\mu$m or more, and is preferably 3000 $\mu$m or less, more preferably 2000 $\mu$m or less, further preferably 1750 $\mu$m or less, especially preferably 1500 $\mu$m or less. When the absolute value of difference is the above lower limit or more and the above upper limit or less, it is possible to suppress double images of the laminated glass more effectively.

In the present invention, a distance between the one end and the other end of the interlayer film is referred to as X. Also, in the present invention, a thickness of the interlayer film at an arbitrary position (1) of the interlayer film within a region of 0.1X to 0.9X from the one end toward the other end of the interlayer film is referred to as T1 (mm). Also, in the present invention, a thickness of the interlayer film at a position (2) where the thickness of the interlayer film is smaller than the thickness of the interlayer film at the position (1) within a region of 0.1X to 0.9X from the one end toward the other end of the interlayer film by 25 $\mu$m or more is referred to as T2 (mm).

Also, in the present invention, in a laminated glass A obtained by sandwiching the interlayer film between two sheets of clear glass, a visible light transmittance of the laminated glass A at the position (1) is referred to as Tv1 (%), and a visible light transmittance of the laminated glass A at the position (2) is referred to as Tv2 (%). It is preferred that the laminated glass A be prepared in the following manner.

The interlayer film is sandwiched between two sheets of clear glass conforming to JIS R3202:1996 having a thickness of 2 mm to obtain a laminate. The obtained laminate is put into a rubber bag and the inside thereof is degassed for 20 minutes with a degree of vacuum of 2.6 kPa, after which the laminate in the degassed condition is transferred into an oven, and vacuum-pressed by retention at 90°C for 30 minutes, and thus the laminate is preliminarily press-bonded. The preliminarily press-bonded laminate is subjected to press-bonding for 20 minutes under conditions of 135°C and a pressure of 1.2 MPa in an autoclave to obtain the laminated glass A.

Also, the visible light transmittance of the laminated glass A is measured in accordance with JIS R3212:2015 using a spectrophotometer ("U-4100" available from Hitachi High-Tech Corporation). The visible light transmittance of the laminated glass A is a visible light transmittance at a wavelength of 380 nm to 780 nm.

The interlayer film has a part that satisfies a formula (1-1) below. In the interlayer film, a line for positioning with a lamination glass member sometimes exists in an end part. When a region having a visible light transmittance of less than 60% like such a line exists in a region of less than 100 mm inwardly from an end part of the interlayer film, the following formula (1-1) is determined while the region having a visible light transmittance of less than 60% is excluded.

[Numerical formula 8]

$$\Delta Tv < Tv2 - \left(\frac{Tv2}{f(T2)}\right)^{\frac{T1}{T2}} \times f(T1) \qquad \cdot \cdot \cdot (1-1)$$

In the formula (1-1), $\Delta Tv$ and $f(T)$ are values indicated by the following formula (1-1A) and the following formula (1-1B), respectively.

[Numerical formula 9]

$$\Delta Tv = Tv2 - Tv1 \qquad \cdot \cdot \cdot (1-1A)$$

$$f(T) = -1.374T + 89.596 \qquad \cdot \cdot \cdot (1-1B)$$

In the interlayer film according to the present invention, since the light that causes double images is absorbed in a colored region of the interlayer film, and the intensity of the light that causes double images entering eyes can be decreased, it is possible to suppress generation of double images. Also, the interlayer film according to the present invention is capable of suppressing color irregularities, and keeping the haze value small because the interlayer film has a part satisfying the formula (1-1).

<Deriving method and technical significance of formula (1-1)>

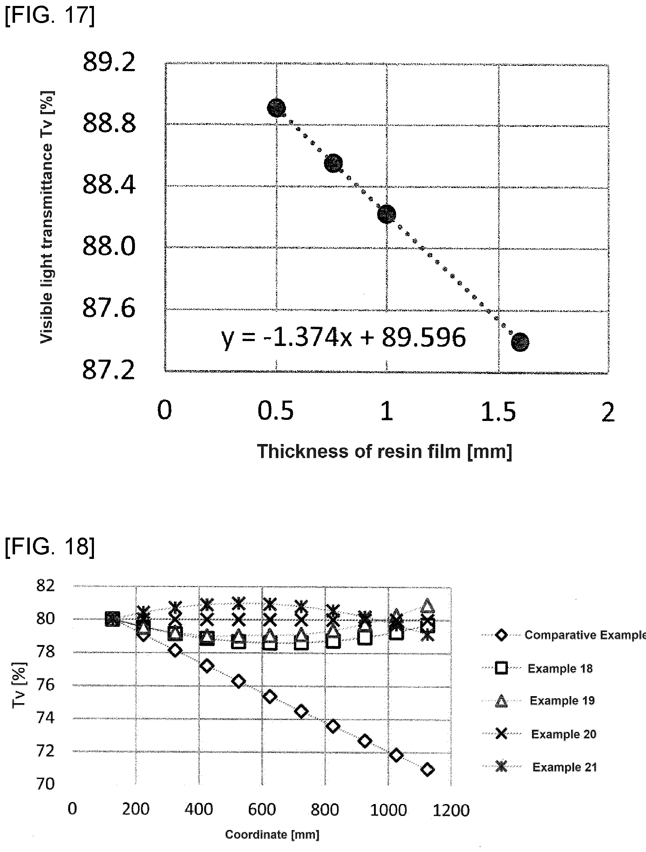

First, the present inventors prepared a single-layered resin film (wedge angle 0 mrad) having a uniform thickness and not containing a coloring agent. The resin film is a resin film containing 100 parts by weight of a polyvinyl acetal resin, and 36.8 parts by weight of triethylene glycol di-2-ethylhexanoate (3GO). Using the obtained resin film, a laminated glass was prepared according to the preparation method of laminated glass A as describe above, and visible light transmittance of the laminated glass was measured. As a result of this, the relationship shown in the following Table 1 and Fig. 17 was obtained as the relationship between the thickness of the resin film and the visible light transmittance of the laminated glass.

[Table 1]

| Thickness of resin film (mm) | Visible light transmittance Tv (%) |
|---|---|
| 0.5 | 88.9 |
| 0.76 | 88.6 |
| 1 | 88.2 |
| 1.6 | 87.4 |

In the present specification, based on the relational expression derived from Table 1 and Fig. 17, the region of the interlayer film that satisfies the formula: y < -1.374T + 89.596 (provided that y represents visible light transmittance (%) of laminated glass A, and T represents thickness of interlayer film (mm)) is defined as "colored region".

Next, the present inventors prepared single-layered resin films having a thickness of 0.5 mm (wedge angle 0 mrad) and laminated glasses in the same manner as described above except that the coloring agents shown in the following Table 2 were used in the contents (content in 100% by weight of resin film) described in conditions 1 to 5. The obtained resin films contain 100 parts by weight of polyvinyl acetal resin, 36.8 parts by weight of triethylene glycol di-2-ethylhexanoate (3GO), and a coloring agent of the content of conditions 1 to 5. Visible light transmittance of the obtained laminated glass was measured. As a result, the relationship shown in the following Table 2 was obtained.

[Table 2]

| Substance name | Classification | Content of each ingredient in 100% by weight of resin film (% by weight) | | | | |
|---|---|---|---|---|---|---|
| | | Condition 1 | Condition 2 | Condition 3 | Condition 4 | Condition 5 |
| PB15-1 | Coloring agent | 0.003 | 0 | 0 | 0.001 | 0.004368 |
| PR202 | Coloring agent | 0.001 | 0 | 0 | 0 | 0.001456 |
| Pblack-7 | Coloring agent | 0.0014 | 0.0005 | 0.0015 | 0.0006 | 0.0020384 |
| ITO | Coloring agent | 0 | 0 | 0 | 0.3 | 0 |
| CWO | Coloring agent | 0 | 0 | 0 | 0.01 | 0 |
| Thickness of resin film (mm) | | Visible light transmittance Tv(%) | | | | |
| | | Condition 1 | Condition 2 | Condition 3 | Condition 4 | Condition 5 |
| 0.5 | | 75.7 | 87.1 | 83.0 | 81.1 | 70.8 |

Coloring agents in Table 2 are as follows.

PB15-1: Pigment Blue 15-1 (copper phthalocyanine pigment)
PR202: Pigment Red 202 (quinacridone pigment)
Pblack-7: Pigment Black 7 (carbon black)
ITO: Tin-doped indium oxide particles (heat shielding substance, ITO particles)
CWO: Cesium-doped tungsten oxide particles (heat shielding substance, CWO particles)

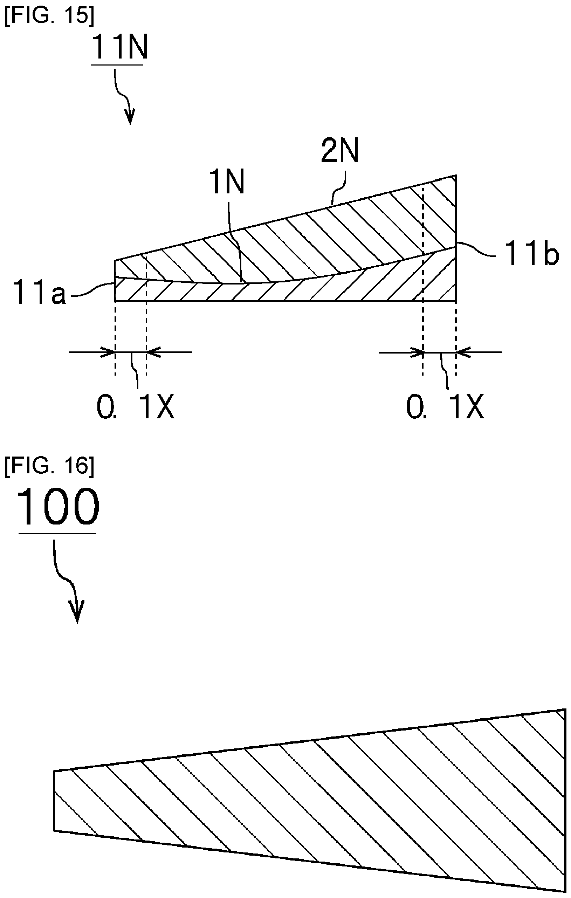

In addition to the single-layered resin films having the compositions of conditions 1 to 5 of Table 2 and a wedge angle of 0 mrad, the present inventors further prepared wedge-like single-layered resin films having the compositions of conditions 1 to 5 of Table 2 and a wedge angle of 0.24 mrad and 0.84 mrad (cross-sectional shape is shown in Fig. 16). The obtained resin films contain 100 parts by weight of polyvinyl acetal resin, 36.8 parts by weight of triethylene glycol di-2-ethylhexanoate (3GO), and a coloring agent of the content of conditions 1 to 5. Using an obtained wedge-like resin film, a laminated glass was prepared according to the preparation method of laminated glass A as describe above, and visible light transmittance of the laminated glass was measured. It is to be noted that visible light transmittance was measured at the minimum thickness position and the maximum thickness position of the wedge-like resin film. As a result of this, the relationship shown in the following Table 3 was obtained as the relationship between the thickness of the resin film and the visible light transmittance of the laminated glass.

[Table 3]

| Wedge angle (mrad) | Thickness (mm) | | Visible light transmittance Tv(%) | | | | |
|---|---|---|---|---|---|---|---|
| | | | Condition 1 | Condition 2 | Condition 3 | Condition 4 | Condition 5 |
| 0 (basis) | 0.5 | | 75.7 | 87.1 | 83.0 | 81.1 | 70.8 |
| 0.24 | (Minimum) | 0.76 | 69.4 | 85.5 | 79.8 | 77.0 | 62.6 |
| | (Maximum) | 1 | 64.3 | 84.6 | 77.2 | 73.7 | 56.2 |
| 0.84 | (Minimum) | 0.76 | 69.4 | 85.5 | 79.8 | 77.0 | 62.6 |
| | (Maximum) | 1.6 | 53.3 | 82.3 | 71.1 | 66.0 | 43.1 |

From the result of Table 3, the following formula (LB) is calculated on the basis of the Lambert-Beer's law.

[Numerical formula 10]

$$Tv(T) = \left(\frac{Tv_{base}}{f(T_{base})}\right)^{\frac{T}{T_{base}}} \times f(T) \qquad \cdot \cdot \cdot (LB)$$

The formula (LB) means that if thickness and visible light transmittance at a certain position are known, it is possible to calculate visible light transmittance at other position by measuring the thickness of the other position. Therefore, from the formula (LB), a difference ($\Delta Tv_{ideal}$) between the visible light transmittance (Tv1) of the laminated glass A at the position (1) of the interlayer film having thickness difference and the visible light transmittance (Tv2) of the laminated glass A at the position (2) is calculated by the following formula (0). In the following formula (0), the position (1) is the maximum thickness position (X1) of the interlayer film within a region of 0.1X to 0.9X from the one end toward the other end of the interlayer film, and Tmax is a thickness of the interlayer film at the maximum thickness position (X1). In the following formula (0), the position (2) is the minimum thickness position (X2) of the interlayer film within a region of 0.1X to 0.9X from the one end toward the other end of the interlayer film, and Tmin is a thickness of the interlayer film at the minimum thickness position (X2).

[Numerical formula 11]

$$\Delta Tv_{ideal} = Tv_2 - \left(\frac{Tv_2}{f(T_{min})}\right)^{T/T_{min}} \times f(T_{max}) \qquad \cdot \cdot \cdot (0)$$

This means that if $\Delta Tv$ is smaller than $\Delta Tv_{ideal}$, color irregularities of the laminated glass are suppressed, and the haze value can be kept small. In other words, it means that the color irregularities of the laminated glass are suppressed, and the haze value is controlled to small by the interlayer film having the part satisfying the formula (1-1).

Examples of the method for satisfying the formula (1-1) include a method of adjusting the concentration distribution of the coloring agent in the thickness direction by a feed block method, a method of adjusting the concentration distribution of the coloring agent in the thickness direction by a die method, and a method of adhering a layer containing a coloring agent with a small deviation of Tv and a layer not containing a coloring agent.

In the formula (1-1), $\Delta Tv > 0$ may be satisfied, $\Delta Tv < 0$ may be satisfied, and $\Delta Tv = 0$ may be satisfied.

It is preferred that the position (1) be the maximum thickness position (X1) of the interlayer film within a region of 0.1X to 0.9X from the one end toward the other end of the interlayer film. It is preferred that the position (2) be the minimum thickness position (X2) of the interlayer film within a region of 0.1X to 0.9X from the one end toward the other end of the interlayer film. In the case of the interlayer film having this preferred form, an absolute value of difference between the thickness of the interlayer film at the maximum thickness position (X1) and the thickness of the interlayer film at the minimum thickness position (X2) is 25 $\mu$m or more.

In the interlayer film, a shading region is sometimes provided. In the interlayer film having a shading region, owing to the shading region, it is sometimes the case that the configuration for exerting the effect of the present invention is appropriate to some extent but is not significantly appropriate with the formula (1-1). Therefore, in the present invention, the following interlayer film is also provided.

The interlayer film includes a colored layer containing a coloring agent, and in a laminated glass A obtained by sandwiching the interlayer film between two sheets of clear glass, the interlayer film has a shading region corresponding to a region where the visible light transmittance of the laminated glass A is less than 60%, and a second region corresponding to a region where the visible light transmittance of the laminated glass A is 60% or more. In the interlayer film, the second region has a region P that is a region of 200 mm toward the second region from a boundary between the second region and the shading region, and a region Q that is a region other than the region P. In 100% of a total plane area of the region Q of the interlayer film, a plane area of a part where the colored layer exists is 80% or more. A thickness of the interlayer film at an arbitrary position (Q1) of the interlayer film in the region Q existing within a region of 0.1X to 0.9X from the one end toward the other end of the interlayer film is referred to as T1 (mm). A thickness of the interlayer film at a position (Q2) where the thickness of the interlayer film is smaller than the thickness of the interlayer film at the position (Q1) in the region Q existing within a region of 0.1X to 0.9X from the one end toward the other end of the interlayer film by 25 $\mu$m or more is referred to as T2 (mm). When the visible light transmittance of the laminated glass A at the position (Q1) is referred to as Tv1 (%), and the visible light transmittance of the laminated glass A at the position (Q2) is referred to as Tv2 (%), the interlayer film has a part that satisfies the following formula (1-2).

[Numerical formula 12]

$$\Delta Tv < Tv2 - \left(\frac{Tv2}{f(T2)}\right)^{\frac{T1}{T2}} \times f(T1) \qquad \cdots (1-2)$$

In the formula (1-2), ΔTv and f(T) are values indicated by the following formula (1-2A) and the following formula (1-2B), respectively.

[Numerical formula 13]

$$\Delta Tv = Tv2 - Tv1 \qquad \cdots (1-2A)$$

$$f(T) = -1.374T + 89.596 \qquad \cdots (1-2B)$$

The deriving method and the technical significance of the formula (1-2) are the same as the deriving method and the technical significance of the formula (1-1).

It is preferred that the position (Q1) be the maximum thickness position (XQ1) of the interlayer film in the region Q existing within a region of 0.1X to 0.9X from the one end toward the other end of the interlayer film. It is preferred that the position (Q2) be the minimum thickness position (XQ2) of the interlayer film in the region Q existing within a region of 0.1X to 0.9X from the one end toward the other end of the interlayer film. In the case of the interlayer film having this preferred form, an absolute value of difference between the thickness of the interlayer film at the maximum thickness position (XQ1) of the interlayer film and the thickness of the interlayer film at the minimum thickness position (XQ2) of the interlayer film is 25 µm or more.

In the present specification, the position (1) can be read as the position (Q1), and the position (2) can be read as the position (Q2). Also, the maximum thickness position (X1) can be read as the maximum thickness position (XQ1), and the minimum thickness position (X2) can be read as the minimum thickness position (XQ2). Also, the formula (1-1A) can be read as the formula (1-2A), and the formula (1-1B) can be read as the formula (1-2B).

It is preferred that the interlayer film satisfy the following formula (2). In this case, it is possible to suppress the color irregularities of the laminated glass more effectively, and it is possible to make the haze value still smaller.
[Numerical formula 14]

$$\Delta Tv < K \times \left( Tv2 - \left(\frac{Tv2}{f(T2)}\right)^{\frac{T1}{T2}} \times f(T1) \right) \qquad \cdots (2)$$

In the formula (2), ΔTv and f(T) are values indicated by the formula (1-1A) and the formula (1-1B), respectively, and K is 0.95.

In the formula (2), K is 0.95, however, K is preferably 0.90, more preferably 0.80, more preferably 0.70, more preferably 0.60, more preferably 0.55, more preferably 0.50, more preferably 0.45, more preferably 0.40, more preferably 0.35, more preferably 0.30, more preferably 0.25, further preferably 0.20, especially preferably 0.15, most preferably 0.10. In this case, it is possible to suppress the color irregularities of the laminated glass more effectively, and it is possible to make the haze value still smaller. When K is changed to these preferred values in the formula (2), it is preferred that the interlayer film satisfy the formula (2) after change.

It is preferred that the interlayer film satisfy the following formula (3). In this case, it is possible to suppress the color irregularities of the laminated glass more effectively, and it is possible to make the haze value still smaller.
[Numerical formula 15]

$$|\Delta Tv| < \left| Tv2 - \left(\frac{Tv2}{f(T2)}\right)^{\frac{T1}{T2}} \times f(T1) \right| \qquad \cdots (3)$$

In the formula (3), $\Delta$Tv and f(T) are values indicated by the formula (1-1A) and the formula (1-1B), respectively.

It is preferred that the interlayer film satisfy the following formula (4). In this case, it is possible to suppress the color irregularities of the laminated glass more effectively, and it is possible to make the haze value still smaller.

[Numerical formula 16]

$$|\Delta Tv| < K \times \left| Tv2 - \left(\frac{Tv2}{f(T2)}\right)^{\frac{T1}{T2}} \times f(T1) \right| \qquad \cdots (4)$$

In the formula (4), $\Delta$Tv and f(T) are values indicated by the formula (1-1A) and the formula (1-1B), respectively, and K is 0.95.

In the formula (4), K is 0.95, however, K is preferably 0.90, more preferably 0.80, more preferably 0.70, more preferably 0.60, more preferably 0.55, more preferably 0.50, more preferably 0.45, more preferably 0.40, more preferably 0.35, more preferably 0.30, more preferably 0.25, further preferably 0.20, especially preferably 0.15, most preferably 0.10. In this case, it is possible to suppress the color irregularities of the laminated glass more effectively, and it is possible to make the haze value still smaller. When K is changed to these preferred values in the formula (4), it is preferred that the interlayer film satisfy the formula (4) after change.

In 100% of the total plane area of the interlayer film, the plane area of the colored region is preferably 70% or more, more preferably 75% or more, more preferably 80% or more, still more preferably 85% or more, further preferably 90% or more, especially preferably 95% or more, most preferably 100%. When the plane area of the colored region is the above lower limit or more, it is possible to suppress double images more effectively. In 100% of the total plane area of the interlayer film, the plane area of the colored region may be 100% or less, may be less than 100%, and may be 95% or less.

At the position (1), it is preferred that the colored region exist, and at the position (2), it is preferred that the colored region exist. In the maximum thickness position (X1), it is preferred that the colored region exist, and in the minimum thickness position (X2), it is preferred that the colored region exist.

A distance (X) between the one end and the other end of the interlayer film is preferably 400 mm or more, more preferably 500 mm or more, still more preferably 600 mm or more, further preferably 700 mm or more, still further preferably 800 mm or more, especially preferably 900 mm or more, most preferably 1000 mm or more, and is preferably 3000 mm or less, more preferably 2500 mm or less, still more preferably 2000 mm or less, further preferably 1900 mm or less, still further preferably 1800 mm or less, especially preferably 1700 mm or less.

A position where the visible light transmittance of the laminated glass A shows a maximum value within a region of 0.1X to 0.9X from the one end toward the other end of the interlayer film is different from the position (1) and may be different from the position (2). A position where the visible light transmittance of the laminated glass A shows a maximum value within a region of 0.1X to 0.9X from the one end toward the other end of the interlayer film may be the position (1) or the position (2).

A position where the visible light transmittance of the laminated glass A shows a maximum value within a region of 0.1X to 0.9X from the one end toward the other end of the interlayer film preferably exists within a region of 0.15X to 0.85X from the one end toward the other end, and more preferably exists within a region of 0.2X to 0.8X from the one end toward the other end. In this case, it is possible to further enhance the visibility.

A position where the visible light transmittance of the laminated glass A shows a minimum value within a region of 0.1X to 0.9X from the one end toward the other end of the interlayer film is different from the position (1) and may be different from the position (2). A position where the visible light transmittance of the laminated glass A shows a minimum value within a region of 0.1X to 0.9X from the one end toward the other end of the interlayer film may be the position (1) or the position (2).

A maximum value of the visible light transmittance of the laminated glass A within a region of 0X to 0.5X from the one end toward the other end of the interlayer film is preferably 65% or more, more preferably 68% or more, further preferably 70% or more, especially preferably 72% or more, most preferably 74% or more, and is preferably 85% or less, more preferably 83% or less, further preferably 81% or less, especially preferably 80% or less, most preferably 79% or less. When the maximum value is the above lower limit or more and the above upper limit or less, it is possible to exert the effect of the present invention more effectively.

A maximum value of the visible light transmittance of the laminated glass A within a region of 0.6X to 1.0X from the one end toward the other end of the interlayer film is preferably 0.1% or more, more preferably 0.5% or more, further preferably 1% or more, and is preferably 60% or less, more preferably 50% or less, further preferably 45% or less, especially preferably 40% or less. When the maximum value is the above lower limit or more and the above upper limit or less, it is possible to exert the effect of the present invention more effectively.

It is preferred that the interlayer film have a part where the visible light transmittance (numerical value of visible light transmittance) of the laminated glass A within a region of 0.1X to 0.9X from the one end toward the other end of the interlayer film is a numerical value calculated from the formula (1-1B) or less. In this case, the effect of the present invention can be exerted more effectively.

The visible light transmittance of the laminated glass A within a region of 0.1X to 0.9X from the one end toward the other end of the interlayer film can be measured, for example, at positions with intervals of 100 mm from the one end toward the other end, starting from the position of 0.1X from the one end toward the other end of the interlayer film.

The interlayer film preferably has a region where the visible light transmittance of the laminated glass A is 40% or more, more preferably has a region where the visible light transmittance of the laminated glass A is 50% or more, still more preferably has a region where the visible light transmittance of the laminated glass A is 55% or more, further preferably has a region where the visible light transmittance of the laminated glass A is 60% or more, especially preferably has a region where the visible light transmittance of the laminated glass A is 65% or more, most preferably has a region where the visible light transmittance of the laminated glass A is 70% or more, and is preferably has a region where the visible light transmittance of the laminated glass A is 85% or less, more preferably has a region where the visible light transmittance of the laminated glass A is 84% or less, still more preferably has a region where the visible light transmittance of the laminated glass A is 83% or less, further preferably has a region where the visible light transmittance of the laminated glass A is 82% or less, still further preferably has a region where the visible light transmittance of the laminated glass A is 81% or less, especially preferably has a region where the visible light transmittance of the laminated glass A is 80% or less, most preferably has a region where the visible light transmittance of the laminated glass A is 79% or less. When the interlayer film has a region where the visible light transmittance of the laminated glass A is the above lower limit or more and the above upper limit or less, it is possible to further exert the effect of the present invention more effectively.

The interlayer film preferably has a region where the partial wedge angle in a length of 400 mm in the direction connecting the one end and the other end is 0.05 mrad or more, more preferably has a region where the partial wedge angle in a length of 400 mm in the direction connecting the one end and the other end is 0.10 mrad or more, further preferably has a region where the partial wedge angle in a length of 400 mm in the direction connecting the one end and the other end is 0.15 mrad or more, and preferably has a region where the partial wedge angle in a length of 400 mm in the direction connecting the one end and the other end is 2.00 mrad or less, more preferably has a region where the partial wedge angle in a length of 400 mm in the direction connecting the one end and the other end is 1.75 mrad or less, further preferably has a region where the partial wedge angle in a length of 400 mm in the direction connecting the one end and the other end is 1.50 mrad or less. In this case, it is possible to suppress double images more effectively.

The partial wedge angle in a length of 400 mm in the direction connecting the one end and the other end is determined in the following manner.

Thickness is measured in the direction connecting the one end and the other end of the interlayer film. Points A are selected at 1-mm intervals starting at a position of 200 mm from the one end toward the other end of the interlayer film as a starting point and ending at a position of 200 mm from the other end toward the one end of the interlayer film as an ending point. In each partial region of 400 mm in the direction connecting the one end and the other end centered at each point A, a primary line is obtained by the least squares method by plotting the distance (unit: mm) in the direction connecting the one end toward the other end on the x-axis, and the thickness of the interlayer film (unit: $\mu$m) on the y axis. The interior angle formed by the obtained primary line and the line of y = 0 is regarded as a partial wedge angle at that point A.

In order to suppress double images, the wedge angle ($\theta$) of the interlayer film as a whole can be appropriately set according to the fitting angle of laminated glass.

The wedge angle ($\theta$) of the interlayer film as a whole may be 0.05 mrad or more, or may be less than 0.05 mrad. From the viewpoint of further suppressing double images, the wedge angle ($\theta$) of the interlayer film as a whole is preferably 0.1 mrad (0.00575 degrees) or more, more preferably 0.2 mrad (0.0115 degrees) or more, and is preferably 2 mrad (0.1146 degrees) or less, more preferably 0.7 mrad (0.0401 degrees) or less. When the wedge angle ($\theta$) is the above lower limit or more, it is possible to obtain laminated glass suited for cars such as a truck or a bus in which the attachment angle of the windshield is large. When the wedge angle ($\theta$) is the above upper limit or less, it is possible to obtain laminated glass suited for cars such as a sports car in which the attachment angle of the windshield is small.

The wedge angle ($\theta$) of the interlayer film as a whole is an angle formed by a primary line obtained by the least squares method and a line of y = 0 when the distance (unit: mm) in the direction connecting the one end toward the other end is plotted on the x-axis, and the thickness of the interlayer film (unit: $\mu$m) is plotted on the y axis in the region of 0.1X to 0.9X from the one end toward the other end of the interlayer film.

The minimum thickness of the interlayer film is preferably 0.05 mm or more, more preferably 0.1 mm or more, still more preferably 0.2 mm or more, further preferably 0.3 mm or more, still further preferably 0.4 mm or more, especially preferably 0.5 mm or more, most preferably 0.6 mm or more, and is preferably 3 mm or less, more preferably 2.5 mm or less, still more preferably 2.25 mm or less, further preferably 2 mm or less, still further preferably 1.8 mm or less.

As a measuring device for use for measurement of a wedge angle ($\theta$) of the interlayer film as a whole, and a thickness of the interlayer film, a contact type thickness meter "TOF-4R" (available from Yamabun Electronics Co., Ltd.) or the like can be recited.

Measurement of the thickness is conducted such that the distance is the shortest from the one end toward the other end by using the above-described measuring device at a film conveyance speed of 2.00 mm/minute to 2.25 mm/minute.

As a measuring device for use for measurement of a wedge angle (θ) of the interlayer film as a whole, and a thickness of the interlayer film after the interlayer film is made into laminated glass, a non-contact type multilayer film thickness measuring instrument "OPTIGAUGE" (available from Lumetrics, Inc.) or the like can be recited. Use of the measuring instrument makes it possible to measure the thickness of the interlayer film while the interlayer film is in the laminated glass.

The interlayer film has a one-layer structure or a two or more-layer structure. The interlayer film may have a one-layer structure, may have a two-layer structure, and may have a two or more-layer structure. The interlayer film may have a three-layer structure, may have a three or more-layer structure, may have a four-layer structure, may have a four or more-layer structure, may have a five-layer structure, may have a five or more-layer structure. The interlayer film may include only a first layer. The interlayer film may include, a first layer, and a second layer arranged on a first surface side of the first layer. The interlayer film may include a first layer, a second layer arranged on a first surface side of the first layer, and a third layer arranged on a second surface side opposite to the first surface of the first layer. The interlayer film may include a fourth layer arranged between the first layer and the second layer. The interlayer film may include a fifth layer arranged between the first layer and the third layer. The interlayer film may be a single-layered interlayer film and may be a multi-layered interlayer film. The structure of the interlayer film may partially vary. For example, the interlayer film may have a part having a one-layer structure, and a part having a multi-layer structure. The interlayer film may have a ten or less-layer structure and may have a five or less-layer structure.

From the viewpoint of further enhancing the penetration resistance of the interlayer film and the laminated glass, it is preferred that the interlayer film include a layer having a glass transition point of 15°C or more. The glass transition point of the layer having a glass transition point of 15°C or more is preferably 16°C or more, more preferably 17°C or more, and is preferably 30°C or less, more preferably 25°C or less. From the viewpoint of further enhancing the penetration resistance of the interlayer film and the laminated glass, it is preferred that the layer having a glass transition point of 15°C or more be a surface layer of the interlayer film. The layer having a glass transition point of 15°C or more may be a colored layer or may be an intermediate layer of the interlayer film.

From the viewpoint of further enhancing the sound shielding performance of the laminated glass, it is preferred that the interlayer film include a layer having a glass transition point of less than 15°C, and it is more preferred that the interlayer film include two or more layers having a glass transition point of less than 15°C. The first layer may be a layer having a glass transition point of less than 15°C. The fourth layer may be a layer having a glass transition point of less than 15°C. The fifth layer may be a layer having a glass transition point of less than 15°C. The colored layer may be a layer having a glass transition point of less than 15°C.

The glass transition point of each layer of the interlayer film is measured in the following manner.

The interlayer film is stored at a temperature of 23°C and a humidity of 30% for a month or more. When the interlayer film is a single-layered interlayer film, the interlayer film is cut into a diameter of 8 mm to give a specimen. When the interlayer film is a multi-layered interlayer film, the layers are delaminated, and press-molded by a press molding machine to give a specimen of a layer to be measured. For each specimen, a glass transition point is measured. As an apparatus for measuring a glass transition point, "ARES-G2" available from TA Instruments and the like can be recited. Measurement of glass transition point is conducted using a parallel plate with a diameter of 8 mm as a jig, under the conditions in which the temperature is decreased from 100°C to -10°C at a temperature decreasing rate of 3°C/minute, and a frequency of 1 Hz and a strain of 1%. In the measurement results obtained, the peak temperature of the loss tangent is defined as a glass transition point (°C).

It is preferred that the interlayer film include a layer having a storage modulus at 20°C of 4 MPa or more. The first layer may be the layer having a storage modulus at 20°C of 4 MPa or more. The second layer may be the layer having a storage modulus at 20°C of 4 MPa or more. The third layer may be the layer having a storage modulus at 20°C of 4 MPa or more. The fourth layer may be the layer having a storage modulus at 20°C of 4 MPa or more. The fifth layer may be the layer having a storage modulus at 20°C of 4 MPa or more. The colored layer may be the layer having a storage modulus at 20°C of 4 MPa or more. The interlayer film may have one layer having a storage modulus at 20°C of 4 MPa or more, or may have two or more layers having a storage modulus at 20°C of 4 MPa or more. The interlayer film may have ten or less layers having a storage modulus at 20°C of 4 MPa or more, or may have five or less layers having a storage modulus at 20°C of 4 MPa or more.

The storage modulus at 20°C of the layer having a storage modulus at 20°C of 4 MPa or more is preferably 5 MPa or more, more preferably 6 MPa or more, and is preferably 100 MPa or less, more preferably 80 MPa or less, further preferably 60 MPa or less.

The storage modulus at 20°C of each layer of the interlayer film is measured in the following manner.

When the interlayer film is a single-layered interlayer film, the interlayer film is cut into a size suited for the jig to give a specimen. When the interlayer film is a multi-layered interlayer film, the layers are delaminated, and press-molded by a press molding machine to give a specimen of a layer to be measured. In the case of a laminated glass, after cooling the laminated glass with liquid nitrogen or the like, the lamination glass member and the interlayer film are delaminated, and a specimen may be prepared from the delaminated interlayer film. The specimen is subjected to a shear viscoelasticity measurement of the range of 50 to 100 Hz at 20°C, and storage modulus is measured. As an apparatus for measuring viscoelasticity, "ARES-G2" available from TA Instruments, "DVA-200" available from IT Keisoku Seigyo Corporation and the like can be recited.

From the viewpoint of enhancing the visibility, the refractive index of the interlayer film is preferably 1.46 or more, more preferably 1.47 or more, further preferably 1.48 or more, and is preferably 1.60 or less, more preferably 1.55 or less, further preferably 1.53 or less.

Hereinafter, specific embodiments of the present invention will be described with reference to the drawings. One end in each layer of the interlayer film corresponds to one end of the interlayer film. The other end in each layer of the interlayer film corresponds to the other end of the interlayer film. A distance between one end and the other end of the interlayer film is X.

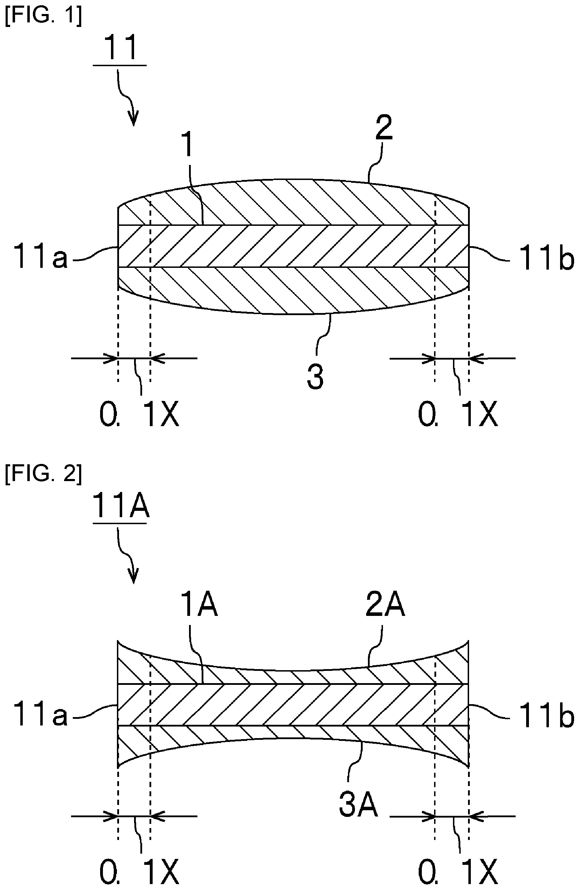

Fig. 1 is a sectional view schematically showing an interlayer film for laminated glass in accordance with a first embodiment of the present invention. In Fig. 1, a section in the thickness direction of an interlayer film 11 is shown.

The interlayer film 11 has one end 11a, and the other end 11b. In the interlayer film 11, the thickness of the one end 11a is the same as the thickness of the other end 11b thereof. The interlayer film 11 has a region where the thickness increases and a region where the thickness decreases from the one end 11a toward the other end 11b.

The interlayer film 11 includes a first layer 1, a second layer 2, and a third layer 3. The interlayer film 11 has a three-layer structure. The first layer 1 has a first surface and a second surface. The first surface and the second surface in the first layer 1 are surfaces facing to each other. The second layer 2 is arranged on a first surface side of the first layer 1 and to be layered thereon. The third layer 3 is arranged on a second surface side of the first layer 1 and to be layered thereon. The first layer 1 is an intermediate layer. Each of the second layer 2 and the third layer 3 is a protective layer and is a surface layer.

In the first layer 1, the thickness at one end of the first layer 1 is the same as the thickness at the other end of the first layer 1. The sectional shape in the thickness direction of the first layer 1 is a rectangular shape.

In the second layer 2, the thickness at the one end of the second layer 2 is the same as the thickness at the other end of the second layer 2. The second layer 2 has a region where the thickness increases and a region where the thickness decreases from the one end toward the other end of the second layer 2. The sectional shape in the thickness direction of the second layer 2 is a wedge-like shape.

In the third layer 3, the thickness at the one end of the third layer 3 is the same as the thickness at the other end of the third layer 3. The third layer 3 has a region where the thickness increases and a region where the thickness decreases from the one end toward the other end of the third layer 3. The sectional shape in the thickness direction of the third layer 3 is a wedge-like shape.

The maximum thickness position (X1) of the interlayer film 11 within a region of 0.1X to 0.9X from the one end 11a toward the other end 11b of the interlayer film 11 is a position of 0.5X from the one end 11a toward the other end 11b. The minimum thickness position (X2) of the interlayer film 11 within a region of 0.1X to 0.9X from the one end 11a toward the other end 11b of the interlayer film 11 is a position of 0.1X and a position of 0.9X from the one end 11a toward the other end 11b.

Fig. 2 is a sectional view schematically showing an interlayer film for laminated glass in accordance with a second embodiment of the present invention. In Fig. 2, a section in the thickness direction of an interlayer film 11A is shown.

The interlayer film 11A has one end 11a, and the other end 11b. In the interlayer film 11A, the thickness of the one end 11a is the same as the thickness of the other end 11b thereof. The interlayer film 11A has a region where the thickness decreases and a region where the thickness increases from the one end 11a toward the other end 11b.

The interlayer film 11A includes a first layer 1A, a second layer 2A, and a third layer 3A. The interlayer film 11A has a three-layer structure. The first layer 1A has a first surface and a second surface. The first surface and the second surface in the first layer 1A are surfaces facing to each other. The second layer 2A is arranged on a first surface side of the first layer 1A and to be layered thereon. The third layer 3A is arranged on a second surface side of the first layer 1A and to be layered thereon. The first layer 1A is an intermediate layer. Each of the second layer 2A and the third layer 3A is a protective layer and is a surface layer.

In the first layer 1A, the thickness at one end of the first layer 1A is the same as the thickness at the other end of the first layer 1A. The sectional shape in the thickness direction of the first layer 1A is a rectangular shape.

In the second layer 2A, the thickness at the one end of the second layer 2A is the same as the thickness at the other end of the second layer 2A. The second layer 2A has a region where the thickness decreases and a region where the thickness increases from the one end toward the other end of the second layer 2A. The sectional shape in the thickness direction of the second layer 2A is a wedge-like shape.

In the third layer 3A, the thickness at the one end of the third layer 3A is the same as the thickness at the other end of the third layer 3A. The third layer 3A has a region where the thickness decreases and a region where the thickness increases from the one end toward the other end of the third layer 3A. The sectional shape in the thickness direction of the third layer 3A is a wedge-like shape.

The maximum thickness position (X1) of the interlayer film 11A within a region of 0.1X to 0.9X from the one end 11a toward the other end 11b of the interlayer film 11A is a position of 0.1X and a position of 0.9X from the one end 11a toward the other end 11b. The minimum thickness position (X2) of the interlayer film 11A within a region of 0.1X to 0.9X from the one end 11a toward the other end 11b of the interlayer film 11A is a position of 0.5X from the one end 11a toward the other end 11b.

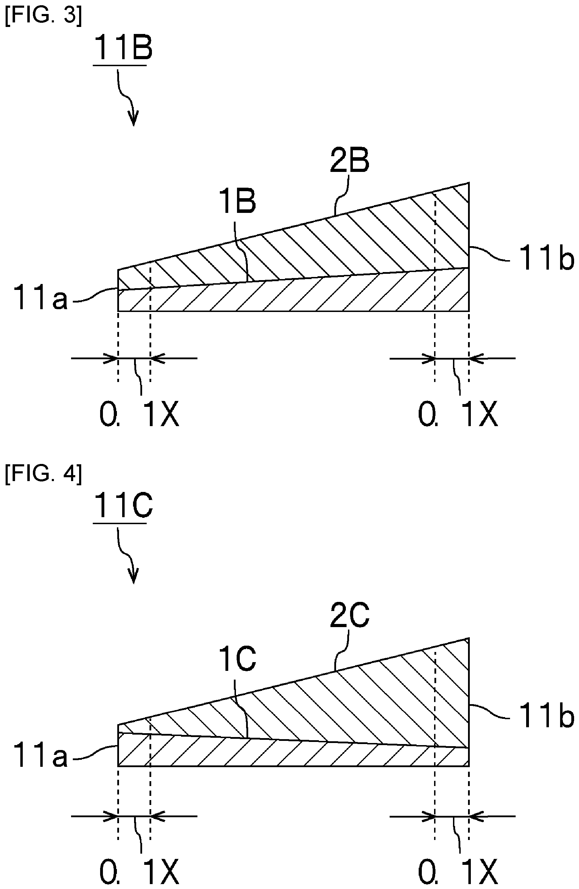

Fig. 3 is a sectional view schematically showing an interlayer film for laminated glass in accordance with a third embodiment of the present invention. In Fig. 3, a section in the thickness direction of an interlayer film 11B is shown.

The interlayer film 11B has one end 11a, and the other end 11b. In the interlayer film 11B, the thickness of the one end 11a is smaller than the thickness of the other end 11b. The interlayer film 11B has a region where the thickness increases from the one end 11a toward the other end 11b.

The interlayer film 11B includes a first layer 1B and a second layer 2B. The interlayer film 11B has a two-layer structure. The first layer 1B has a first surface and a second surface. The first surface and the second surface in the first layer 1B are surfaces facing to each other. The second layer 2B is arranged on a first surface side of the first layer 1B and to be layered thereon. Each of the first layer 1B and the second layer 2B is a surface layer.

In the first layer 1B, the thickness at the one end of the first layer 1B is smaller than the thickness at the other end of the first layer 1B. The first layer 1B has a region where the thickness increases from the one end toward the other end of the first layer 1B. The sectional shape in the thickness direction of the first layer 1B is a wedge-like shape.

In the second layer 2B, the thickness at the one end of the second layer 2B is smaller than the thickness at the other end of the second layer 2B. The second layer 2B has a region where the thickness increases from the one end toward the other end of the second layer 2B. The sectional shape in the thickness direction of the second layer 2B is a wedge-like shape.

The maximum thickness position (X1) of the interlayer film 11B within a region of 0.1X to 0.9X from the one end 11a toward the other end 11b of the interlayer film 11B is a position of 0.9X from the one end 11a toward the other end 11b. The minimum thickness position (X2) of the interlayer film 11B within a region of 0.1X to 0.9X from the one end 11a toward the other end 11b of the interlayer film 11B is a position of 0.1X from the one end 11a toward the other end 11b.

Fig. 4 is a sectional view schematically showing an interlayer film for laminated glass in accordance with a fourth embodiment of the present invention. In Fig. 4, a cross section in the thickness direction of an interlayer film 11C is shown.

The interlayer film 11C has one end 11a, and the other end 11b. In the interlayer film 11C, the thickness of the one end 11a is smaller than the thickness of the other end 11b. The interlayer film 11C has a region where the thickness increases from the one end 11a toward the other end 11b.

The interlayer film 11C includes a first layer 1C and a second layer 2C. The interlayer film 11C has a two-layer structure. The first layer 1C has a first surface and a second surface. The first surface and the second surface in the first layer 1C are surfaces facing to each other. The second layer 2C is arranged on a first surface side of the first layer 1C and to be layered thereon. Each of the first layer 1C and the second layer 2C is a surface layer.

In the first layer 1C, the thickness at the one end of the first layer 1C is larger than the thickness at the other end of the first layer 1C. The first layer 1C has a region where the thickness decreases from the one end toward the other end of the first layer 1C. The sectional shape in the thickness direction of the first layer 1C is a wedge-like shape.

In the second layer 2C, the thickness at the one end of the second layer 2C is smaller than the thickness at the other end of the second layer 2C. The second layer 2C has a region where the thickness increases from the one end toward the other end of the second layer 2C. The sectional shape in the thickness direction of the second layer 2C is a wedge-like shape.

The maximum thickness position (X1) of the interlayer film 11C within a region of 0.1X to 0.9X from the one end 11a toward the other end 11b of the interlayer film 11C is a position of 0.9X from the one end 11a toward the other end 11b. The minimum thickness position (X2) of the interlayer film 11C within a region of 0.1X to 0.9X from the one end 11a toward the other end 11b of the interlayer film 11C is a position of 0.1X from the one end 11a toward the other end 11b.

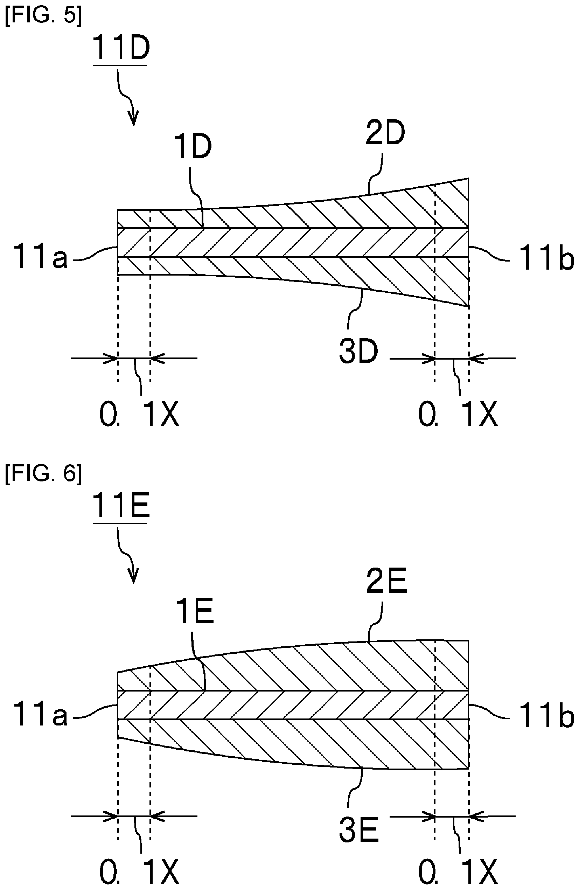

Fig. 5 is a sectional view schematically showing an interlayer film for laminated glass in accordance with a fifth embodiment of the present invention. In Fig. 5, a cross section in the thickness direction of the interlayer film 11D is shown.

The interlayer film 11D has one end 11a, and the other end 11b. In the interlayer film 11D, the thickness of the one end 11a is smaller than the thickness of the other end 11b. The interlayer film 11D has a region where the thickness increases from the one end 11a toward the other end 11b.

The interlayer film 11D includes a first layer 1D, a second layer 2D, and a third layer 3D. The interlayer film 11D has a three-layer structure. The first layer 1D has a first surface and a second surface. The first surface and the second surface in the first layer 1D are surfaces facing to each other. The second layer 2D is arranged on a first surface side of the first layer 1D and to be layered thereon. The third layer 3D is arranged on a second surface side of the first layer 1D and to be layered thereon. The first layer 1D is an intermediate layer. Each of the second layer 2D and the third layer 3D is a surface layer.

In the first layer 1D, the thickness at one end of the first layer 1D is the same as the thickness at the other end of the first layer 1D. The sectional shape in the thickness direction of the first layer 1D is a rectangular shape.

In the second layer 2D, the thickness at the one end of the second layer 2D is smaller than the thickness at the other end of the second layer 2D. The second layer 2D has a region where the thickness increases from the one end toward the other end of the second layer 2D. The second layer 2D has a portion where the increment in thickness increases in the region where the thickness increases from the one end toward the other end of the second layer 2D. The sectional shape in the thickness direction of the second layer 2D is a wedge-like shape.

In the third layer 3D, the thickness at the one end of the third layer 3D is smaller than the thickness at the other end of the third layer 3D. The third layer 3D has a region where the thickness increases from the one end toward the other end of the third layer 3D. The third layer 3D has a portion where the increment in thickness increases in the region where the thickness increases from the one end toward the other end of the third layer 3D. The sectional shape in the thickness direction of the third layer 3D is a wedge-like shape.

The maximum thickness position (X1) of the interlayer film 11D within a region of 0.1X to 0.9X from the one end 11a toward the other end 11b of the interlayer film 11D is a position of 0.9X from the one end 11a toward the other end 11b. The minimum thickness position (X2) of the interlayer film 11D within a region of 0.1X to 0.9X from the one end 11a toward the other end 11b of the interlayer film 11D is a position of 0.1X from the one end 11a toward the other end 11b.

Fig. 6 is a sectional view schematically showing an interlayer film for laminated glass in accordance with a sixth embodiment of the present invention. In Fig. 6, a cross section in the thickness direction of the interlayer film 11E is shown.

The interlayer film 11E has one end 11a, and the other end 11b. In the interlayer film 11E, the thickness of the one end 11a is smaller than the thickness of the other end 11b. The interlayer film 11E has a region where the thickness increases from the one end 11a toward the other end 11b.

The interlayer film 11E includes a first layer 1E, a second layer 2E, and a third layer 3E. The interlayer film 11E has a three-layer structure. The first layer 1E has a first surface and a second surface. The first surface and the second surface in the first layer 1E are surfaces facing to each other. The second layer 2E is arranged on a first surface side of the first layer 1E and to be layered thereon. The third layer 3E is arranged on a second surface side of the first layer 1E and to be layered thereon. The first layer 1E is an intermediate layer. Each of the second layer 2E and the third layer 3E is a surface layer.

In the first layer 1E, the thickness at one end of the first layer 1E is the same as the thickness at the other end of the first layer 1E. The sectional shape in the thickness direction of the first layer 1E is a rectangular shape.

In the second layer 2E, the thickness at the one end of the second layer 2E is smaller than the thickness at the other end of the second layer 2E. The second layer 2E has a region where the thickness increases from the one end toward the other end of the second layer 2E. The second layer 2E has a portion where the increment in thickness decreases in the region where the thickness increases from the one end toward the other end of the second layer 2E. The sectional shape in the thickness direction of the second layer 2E is a wedge-like shape.

In the third layer 3E, the thickness at the one end of the third layer 3E is smaller than the thickness at the other end of the third layer 3E. The third layer 3E has a region where the thickness increases from the one end toward the other end of the third layer 3E. The third layer 3E has a portion where the increment in thickness decreases in the region where the thickness increases from the one end toward the other end of the third layer 3E. The sectional shape in the thickness direction of the third layer 3E is a wedge-like shape.

The maximum thickness position (X1) of the interlayer film 11E within a region of 0.1X to 0.9X from the one end 11a toward the other end 11b of the interlayer film 11E is a position of 0.9X from the one end 11a toward the other end 11b. The minimum thickness position (X2) of the interlayer film 11E within a region of 0.1X to 0.9X from the one end 11a toward the other end 11b of the interlayer film 11E is a position of 0.1X from the one end 11a toward the other end 11b.

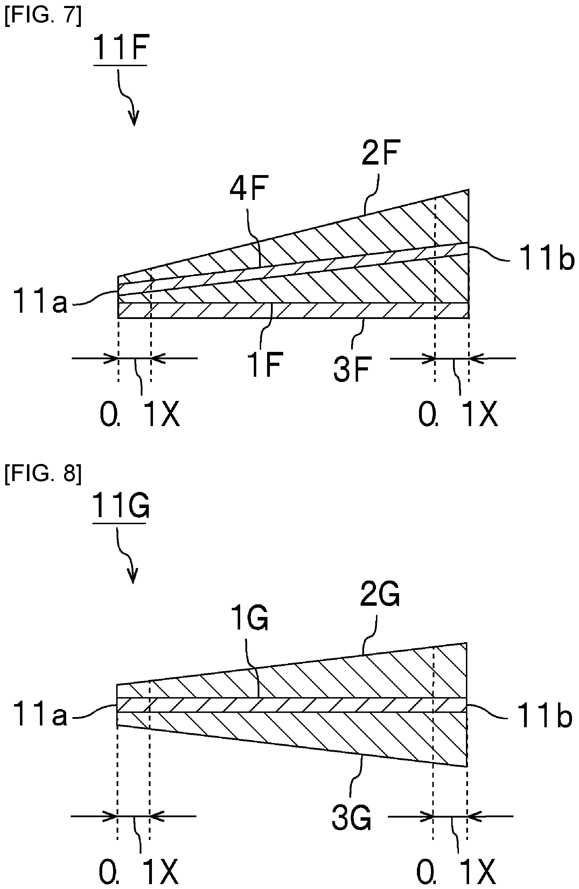

Fig. 7 is a sectional view schematically showing an interlayer film for laminated glass in accordance with a seventh embodiment of the present invention. In Fig. 7, a cross section in the thickness direction of the interlayer film 11F is shown.

The interlayer film 11F has one end 11a, and the other end 11b. In the interlayer film 11F, the thickness of the one end 11a is smaller than the thickness of the other end 11b. The interlayer film 11F has a region where the thickness increases from the one end 11a toward the other end 11b.

The interlayer film 11F includes a first layer 1F, a second layer 2F, a third layer 3F, and a fourth layer 4F. The interlayer film 11F has a four-layer structure. The first layer 1F has a first surface and a second surface. The first surface and the second surface in the first layer 1F are surfaces facing to each other. The fourth layer 4F is arranged on a first surface side of the first layer 1F and to be layered thereon. The third layer 3F is arranged on a second surface side of the first layer 1F and to be layered thereon. The second layer 2F is arranged on a surface side opposite to the first layer 1F side of the fourth layer 4F and to be layered thereon. The first layer 1F and the fourth layer 4F are intermediate layers. Each of the second layer 2F and the third layer 3F is a surface layer.

In the first layer 1F, the thickness at the one end of the first layer 1F is smaller than the thickness at the other end of the first layer 1F. The first layer 1F has a region where the thickness increases from the one end toward the other end of the first layer 1F. The sectional shape in the thickness direction of the first layer 1F is a wedge-like shape.

In the second layer 2F, the thickness at the one end of the second layer 2F is smaller than the thickness at the other end of the second layer 2F. The second layer 2F has a region where the thickness increases from the one end toward the other end of the second layer 2F. The sectional shape in the thickness direction of the second layer 2F is a wedge-like shape.

In the third layer 3F, the thickness at the one end of the third layer 3F is the same as the thickness at the other end of the third layer 3F. The sectional shape in the thickness direction of the third layer 3F is a rectangular shape.

In the fourth layer 4F, the thickness at one end of the fourth layer 4F is the same as the thickness at the other end of the fourth layer 4F. The sectional shape in the thickness direction of the fourth layer 4F is a rectangular shape.

The maximum thickness position (X1) of the interlayer film 11F within a region of 0.1X to 0.9X from the one end 11a toward the other end 11b of the interlayer film 11F is a position of 0.9X from the one end 11a toward the other end 11b. The minimum thickness position (X2) of the interlayer film 11F within a region of 0.1X to 0.9X from the one end 11a toward the other end 11b of the interlayer film 11F is a position of 0.1X from the one end 11a toward the other end 11b.

Fig. 8 is a sectional view schematically showing an interlayer film for laminated glass in accordance with an eighth embodiment of the present invention. In Fig. 8, a cross section in the thickness direction of an interlayer film 11G is shown.

The interlayer film 11G has one end 11a, and the other end 11b. In the interlayer film 11G, the thickness of the one end 11a is smaller than the thickness of the other end 11b. The interlayer film 11G has a region where the thickness increases from the one end 11a toward the other end 11b.

The interlayer film 11G includes a first layer 1G, a second layer 2G, and a third layer 3G. The interlayer film 11G has a three-layer structure. The first layer 1G has a first surface and a second surface. The first surface and the second surface in the first layer 1G are surfaces facing to each other. The second layer 2G is arranged on a first surface side of the first layer 1G and to be layered thereon. The third layer 3G is arranged on a second surface side of the first layer 1G and to be layered thereon. The first layer 1G is an intermediate layer. Each of the second layer 2G and the third layer 3G is a surface layer.

In the first layer 1G, the thickness at one end of the first layer 1G is the same as the thickness at the other end of the first layer 1G. The sectional shape in the thickness direction of the first layer 1G is a rectangular shape.

In the second layer 2G, the thickness at the one end of the second layer 2G is smaller than the thickness at the other end of the second layer 2G. The second layer 2G has a region where the thickness increases from the one end toward the other end of the second layer 2G. In the second layer 2G, the increment in thickness from the one end toward the other end of the second layer 2G is constant. The sectional shape in the thickness direction of the second layer 2G is a wedge-like shape.

In the third layer 3G, the thickness at the one end of the third layer 3G is smaller than the thickness at the other end of the third layer 3G. The third layer 3G has a region where the thickness increases from the one end toward the other end of the third layer 3G. In the third layer 3G, the increment in thickness from the one end toward the other end of the third layer 3G is constant. The sectional shape in the thickness direction of the third layer 3G is a wedge-like shape.

The maximum thickness position (X1) of the interlayer film 11G within a region of 0.1X to 0.9X from the one end 11a toward the other end 11b of the interlayer film 11G is a position of 0.9X from the one end 11a toward the other end 11b. The minimum thickness position (X2) of the interlayer film 11G within a region of 0.1X to 0.9X from the one end 11a toward the other end 11b of the interlayer film 11G is a position of 0.1X from the one end 11a toward the other end 11b.

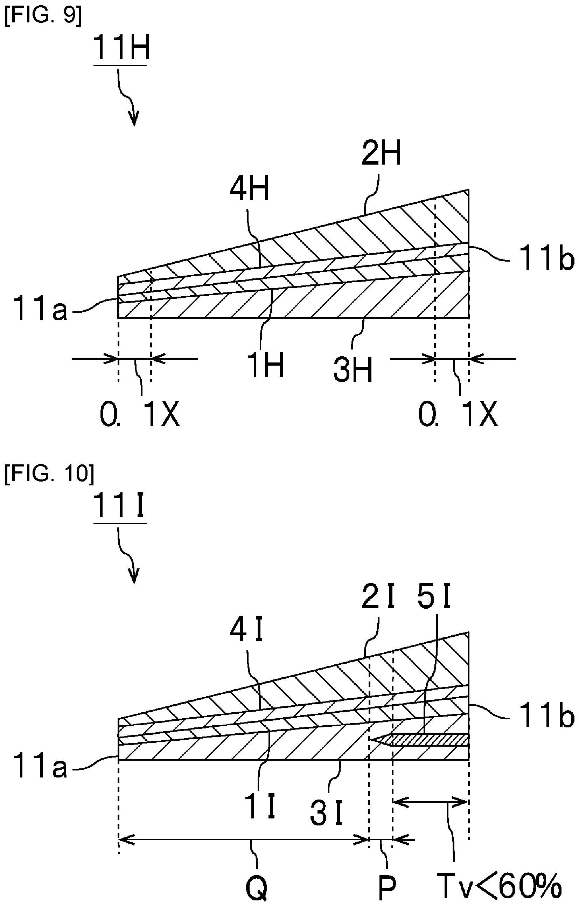

Fig. 9 is a sectional view schematically showing an interlayer film for laminated glass in accordance with a ninth embodiment of the present invention. In Fig. 9, a cross section in the thickness direction of an interlayer film 11H is shown.

The interlayer film 11H has one end 11a, and the other end 11b. In the interlayer film 11H, the thickness of the one end 11a is smaller than the thickness of the other end 11b. The interlayer film 11H has a region where the thickness increases from the one end 11a toward the other end 11b.

The interlayer film 11H includes a first layer 1H, a second layer 2H, a third layer 3H, and a fourth layer 4H. The interlayer film 11H has a four-layer structure. The first layer 1H has a first surface and a second surface. The first surface and the second surface in the first layer 1H are surfaces facing to each other. The fourth layer 4H is arranged on a first surface side of the first layer 1H and to be layered thereon. The third layer 3H is arranged on a second surface side of the first layer 1H and to be layered thereon. The second layer 2H is arranged on a surface side opposite to the first layer 1H side of the fourth layer 4H and to be layered thereon. The first layer 1H and the fourth layer 4H are intermediate layers. Each of the second layer 2H and the third layer 3H is a surface layer.

In the first layer 1H, the thickness at the one end of the first layer 1H is smaller than the thickness at the other end of the first layer 1H. The first layer 1H has a region where the thickness increases from the one end toward the other end of the first layer 1H. The sectional shape in the thickness direction of the first layer 1H is a wedge-like shape.

In the second layer 2H, the thickness at the one end of the second layer 2H is smaller than the thickness at the other end of the second layer 2H. The second layer 2H has a region where the thickness increases from the one end toward the other end of the second layer 2H. The sectional shape in the thickness direction of the second layer 2H is a wedge-like shape.

In the third layer 3H, the thickness at the one end of the third layer 3H is smaller than the thickness at the other end of the third layer 3H. The third layer 3H has a region where the thickness increases from the one end toward the other end of the third layer 3H. The sectional shape in the thickness direction of the third layer 3H is a wedge-like shape.

In the fourth layer 4H, the thickness at one end of the fourth layer 4H is the same as the thickness at the other end of the fourth layer 4H. The sectional shape in the thickness direction of the fourth layer 4H is a rectangular shape.

The maximum thickness position (X1) of the interlayer film 11H within a region of 0.1X to 0.9X from the one end 11a toward the other end 11b of the interlayer film 11H is a position of 0.9X from the one end 11a toward the other end 11b. The minimum thickness position (X2) of the interlayer film 11H within a region of 0.1X to 0.9X from the one end 11a toward the other end 11b of the interlayer film 11H is a position of 0.1X from the one end 11a toward the other end 11b.

Fig. 10 is a sectional view schematically showing an interlayer film for laminated glass in accordance with a tenth embodiment of the present invention. In Fig. 10, a section in the thickness direction of an interlayer film 11I is shown.

The interlayer film 11I has one end 11a, and the other end 11b. In the interlayer film 11I, the thickness of the one end 11a is smaller than the thickness of the other end 11b. The interlayer film 11I has a region where the thickness increases from the one end 11a toward the other end 11b.

The interlayer film 11I includes a first layer 1I, a second layer 2I, a third layer 3I, a fourth layer 4I, and a fifth layer 5I. The interlayer film 11I has a five-layer structure. The first layer 1I has a first surface and a second surface. The first surface and the second surface in the first layer 1I are surfaces facing to each other. The fourth layer 4I is arranged on a first surface side of the first layer 1I and to be layered thereon. On a second surface side of the first layer 1I, the third layer 3I and the fifth layer 5I are arranged. The second layer 2I is arranged on a surface side opposite to the first layer 1I side of the fourth layer 4I and to be layered thereon. The fifth layer 5I is embedded in the third layer 3I. The first layer 1I, the fourth layer 4I and the fifth layer 5I are intermediate layers. Each of the second layer 2I and the third layer 3I is a surface layer.

The fifth layer 5I is a shading layer having a gradation part.

The interlayer film 11I has a shading region having a visible light transmittance of less than 60%, and a second region having a visible light transmittance of 60% or more. The second region has a region P that is a region of 200 mm toward the second region from a boundary between the second region and the shading region, and a region Q that is a region other than the region P.

In the first layer 1I, the thickness at the one end of the first layer 1I is smaller than the thickness at the other end of the first layer 1I. The first layer 1I has a region where the thickness increases from the one end toward the other end of the first layer 1I. The sectional shape in the thickness direction of the first layer 1I is a wedge-like shape.

In the second layer 2I, the thickness at the one end of the second layer 2I is smaller than the thickness at the other end of the second layer 2I. The second layer 2I has a region where the thickness increases from the one end toward the other end of the second layer 2I. The sectional shape in the thickness direction of the second layer 2I is a wedge-like shape.

In the third layer 3I, the thickness at the one end of the third layer 3I is smaller than the thickness at the other end of the third layer 3I. The third layer 3I has a region where the thickness increases from the one end toward the other end of the third layer 3I. The sectional shape in the thickness direction of the third layer 3I is a wedge-like shape.

In the fourth layer 4I, the thickness at one end of the fourth layer 4I is the same as the thickness at the other end of the fourth layer 4I. The sectional shape in the thickness direction of the fourth layer 4I is a rectangular shape.

In the fifth layer 5I, the thickness at the one end of the fifth layer 5I is smaller than the thickness at the other end of the fifth layer 5I. The fifth layer 5I has a region where the thickness increases from the one end toward the other end of the fifth layer 5I and a region where the thickness is constant. The sectional shape in the thickness direction of the fifth layer 5I is a wedge-like shape.

A maximum thickness position (XQ1) of the interlayer film 11I in the region Q is a position of a boundary between the region P and the region Q from the one end 11a toward the other end 11b. A minimum thickness position (XQ2) of the interlayer film 11I in the region Q is a position of the one end 11a.

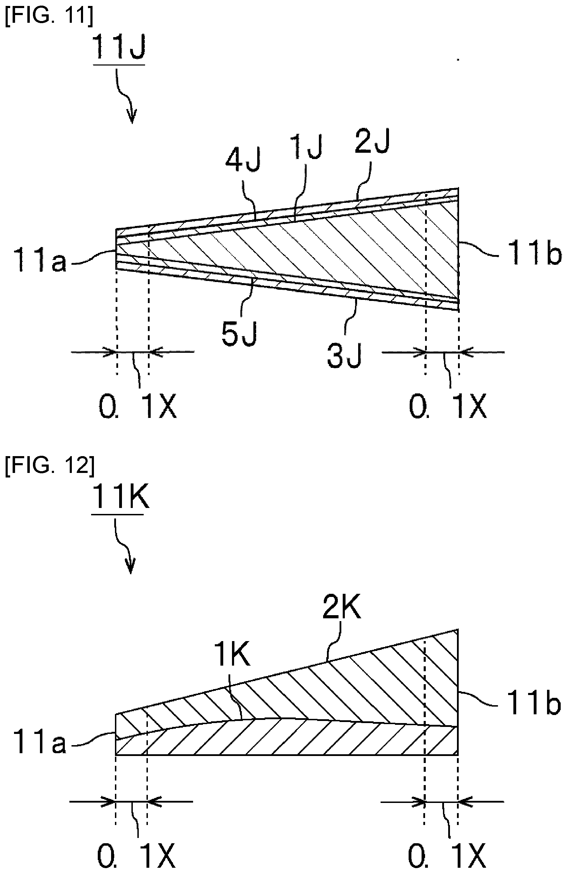

Fig. 11 is a sectional view schematically showing an interlayer film for laminated glass in accordance with an eleventh embodiment of the present invention. In Fig. 11, a section in the thickness direction of an interlayer film 11J is shown.

The interlayer film 11J has one end 11a, and the other end 11b. In the interlayer film 11J, the thickness of the one end 11a is smaller than the thickness of the other end 11b. The interlayer film 11J has a region where the thickness increases from the one end 11a toward the other end 11b.

The interlayer film 11J includes a first layer 1J, a second layer 2J, a third layer 3J, a fourth layer 4J, and a fifth layer 5J. The interlayer film 11J has a five-layer structure. The first layer 1J has a first surface and a second surface. The first surface and the second surface in the first layer 1J are surfaces facing to each other. The fourth layer 4J is arranged on a first surface side of the first layer 1J and to be layered thereon. The fifth layer 5J is arranged on a second surface side of the first layer 1J and to be layered thereon. The second layer 2J is arranged on a surface side opposite to the first layer 1J side of the fourth layer 4J and to be layered thereon. The third layer 3J is arranged on a surface side opposite to the first layer 1J side of the fifth layer 5J and to be layered thereon. The first layer 1J, the fourth layer 4J and the fifth layer 5J are intermediate layers. Each of the second layer 2J and the third layer 3J is a surface layer.

In the first layer 1J, the thickness at the one end of the first layer 1J is smaller than the thickness at the other end of the first layer 1J. The first layer 1J has a region where the thickness increases from the one end toward the other end of the first layer 1J. The sectional shape in the thickness direction of the first layer 1J is a wedge-like shape.

In the second layer 2J, the thickness at one end of the second layer 2J is the same as the thickness at the other end of the second layer 2J. The sectional shape in the thickness direction of the second layer 2J is a rectangular shape.

In the third layer 3J, the thickness at the one end of the third layer 3J is the same as the thickness at the other end of the third layer 3J. The sectional shape in the thickness direction of the third layer 3J is a rectangular shape.

In the fourth layer 4J, the thickness at the one end of the fourth layer 4J is larger than the thickness at the other end of the fourth layer 4J. The fourth layer 4J has a region where the thickness decreases from the one end toward the other end of the fourth layer 4J. The sectional shape in the thickness direction of the fourth layer 4J is a wedge-like shape.

In the fifth layer 5J, the thickness at the one end of the fifth layer 5J is larger than the thickness at the other end of the fifth layer 5J. The fifth layer 5J has a region where the thickness decreases from the one end toward the other end of the fifth layer 5J. The sectional shape in the thickness direction of the fifth layer 5J is a wedge-like shape.

The maximum thickness position (X1) of the interlayer film 11J within a region of 0.1X to 0.9X from the one end 11a toward the other end 11b of the interlayer film 11J is a position of 0.9X from the one end 11a toward the other end 11b. The minimum thickness position (X2) of the interlayer film 11J within a region of 0.1X to 0.9X from the one end 11a toward the other end 11b of the interlayer film 11J is a position of 0.1X from the one end 11a toward the other end 11b.

Fig. 12 is a sectional view schematically showing an interlayer film for laminated glass in accordance with a twelfth embodiment of the present invention. In Fig. 12, a section in the thickness direction of an interlayer film 11K is shown.

The interlayer film 11K has one end 11a, and the other end 11b. In the interlayer film 11K, the thickness of the one end 11a is smaller than the thickness of the other end 11b. The interlayer film 11K has a region where the thickness increases from the one end 11a toward the other end 11b.

The interlayer film 11K includes a first layer 1K and a second layer 2K. The interlayer film 11K has a two-layer structure. The first layer 1K has a first surface and a second surface. The first surface and the second surface in the first layer 1K are surfaces facing to each other. The second layer 2K is arranged on a first surface side of the first layer 1K and to be layered thereon. Each of the first layer 1K and the second layer 2K is a surface layer.

In the first layer 1K, the thickness at the one end of the first layer 1K is smaller than the thickness at the other end of the first layer 1K. The first layer 1K has a region where the thickness increases and a region where the thickness decreases from the one end toward the other end of the first layer 1K. The sectional shape in the thickness direction of the first layer 1K is a wedge-like shape.

In the second layer 2K, the thickness at the one end of the second layer 2K is smaller than the thickness at the other end of the second layer 2K. The second layer 2K has a region where the thickness increases from the one end toward the other end of the second layer 2K. The sectional shape in the thickness direction of the second layer 2K is a wedge-like shape.

The maximum thickness position (X1) of the interlayer film 11K within a region of 0.1X to 0.9X from the one end 11a toward the other end 11b of the interlayer film 11K is a position of 0.9X from the one end 11a toward the other end 11b. The minimum thickness position (X2) of the interlayer film 11K within a region of 0.1X to 0.9X from the one end 11a toward the other end 11b of the interlayer film 11K is a position of 0.1X from the one end 11a toward the other end 11b.

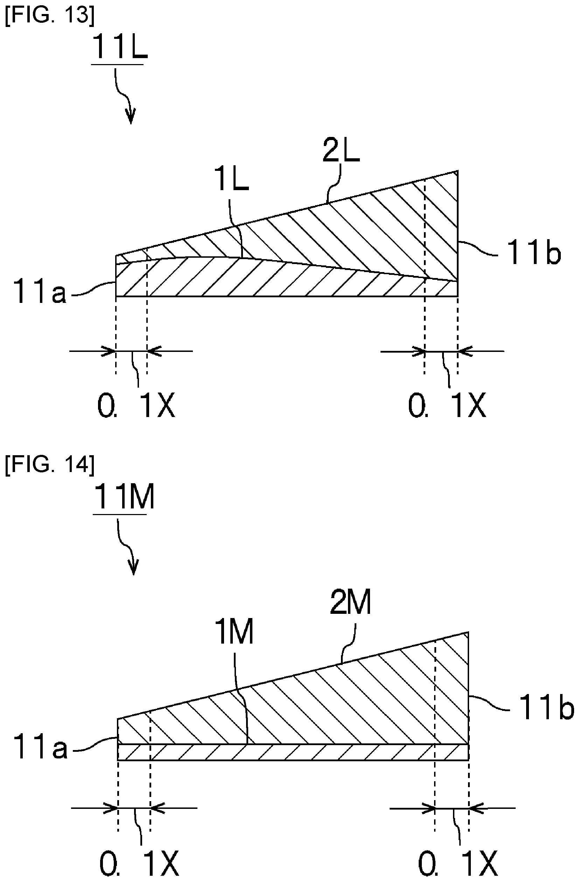

Fig. 13 is a sectional view schematically showing an interlayer film for laminated glass in accordance with a thirteenth embodiment of the present invention. In Fig. 13, a section in the thickness direction of an interlayer film 11L is shown.

The interlayer film 11L has one end 11a, and the other end 11b. In the interlayer film 11L, the thickness of the one end 11a is smaller than the thickness of the other end 11b. The interlayer film 11L has a region where the thickness increases from the one end 11a toward the other end 11b.

The interlayer film 11L includes a first layer 1L and a second layer 2L. The interlayer film 11L has a two-layer structure. The first layer 1L has a first surface and a second surface. The first surface and the second surface in the first layer 1L are surfaces facing to each other. The second layer 2L is arranged on a first surface side of the first layer 1L and to be layered thereon. Each of the first layer 1L and the second layer 2L is a surface layer.

In the first layer 1L, the thickness at the one end of the first layer 1L is larger than the thickness at the other end of the first layer 1L. The first layer 1L has a region where the thickness increases and a region where the thickness decreases from the one end toward the other end of the first layer 1L. The sectional shape in the thickness direction of the first layer 1L is a wedge-like shape.

In the second layer 2L, the thickness at the one end of the second layer 2L is smaller than the thickness at the other end of the second layer 2L. The second layer 2L has a region where the thickness increases from the one end toward the other end of the second layer 2L. The sectional shape in the thickness direction of the second layer 2L is a wedge-like shape.

The maximum thickness position (X1) of the interlayer film 11L within a region of 0.1X to 0.9X from the one end 11a toward the other end 11b of the interlayer film 11L is a position of 0.9X from the one end 11a toward the other end 11b. The minimum thickness position (X2) of the interlayer film 11L within a region of 0.1X to 0.9X from the one end 11a toward the other end 11b of the interlayer film 11L is a position of 0.1X from the one end 11a toward the other end 11b.

Fig. 14 is a sectional view schematically showing an interlayer film for laminated glass in accordance with a fourteenth embodiment of the present invention. In Fig. 14, a section in the thickness direction of an interlayer film 11M is shown.

The interlayer film 11M has one end 11a, and the other end 11b. In the interlayer film 11M, the thickness of the one end 11a is smaller than the thickness of the other end 11b. The interlayer film 11M has a region where the thickness increases from the one end 11a toward the other end 11b.

The interlayer film 11M includes a first layer 1M and a second layer 2M. The interlayer film 11M has a two-layer structure. The first layer 1M has a first surface and a second surface. The first surface and the second surface in the first layer 1M are surfaces facing to each other. The second layer 2M is arranged on a first surface side of the first layer 1M and to be layered thereon. Each of the first layer 1M and the second layer 2M is a surface layer.

In the first layer 1M, the thickness at one end of the first layer 1M is the same as the thickness at the other end of the first layer 1M. The sectional shape in the thickness direction of the first layer 1M is a rectangular shape.

In the second layer 2M, the thickness at the one end of the second layer 2M is smaller than the thickness at the other end of the second layer 2M. The second layer 2M has a region where the thickness increases from the one end toward the other end of the second layer 2M. The sectional shape in the thickness direction of the second layer 2M is a wedge-like shape.

The maximum thickness position (X1) of the interlayer film 11M within a region of 0.1X to 0.9X from the one end 11a toward the other end 11b of the interlayer film 11M is a position of 0.9X from the one end 11a toward the other end 11b. The minimum thickness position (X2) of the interlayer film 11M within a region of 0.1X to 0.9X from the one end 11a toward the other end 11b of the interlayer film 11M is a position of 0.1X from the one end 11a toward the other end 11b.

Fig. 15 is a sectional view schematically showing an interlayer film for laminated glass in accordance with a fifteenth embodiment of the present invention. In Fig. 15, a section in the thickness direction of an interlayer film 11N is shown.

The interlayer film 11N has one end 11a, and the other end 11b. In the interlayer film 11N, the thickness of the one end 11a is smaller than the thickness of the other end 11b. The interlayer film 11N has a region where the thickness increases from the one end 11a toward the other end 11b.

The interlayer film 11N includes a first layer 1N and a second layer 2N. The interlayer film 11N has a two-layer structure. The first layer 1N has a first surface and a second surface. The first surface and the second surface in the first layer 1N are surfaces facing to each other. The second layer 2N is arranged on a first surface side of the first layer 1N and to be layered thereon. Each of the first layer 1N and the second layer 2N is a surface layer.

In the first layer 1N, the thickness at the one end of the first layer 1N is smaller than the thickness at the other end of the first layer 1N. The first layer 1N has a region where the thickness decreases and a region where the thickness increases from the one end toward the other end of the first layer 1N. The sectional shape in the thickness direction of the first layer 1N is a wedge-like shape.

In the second layer 2N, the thickness at the one end of the second layer 2N is smaller than the thickness at the other end of the second layer 2N. The second layer 2N has a region where the thickness increases from the one end toward the other end of the second layer 2N. The sectional shape in the thickness direction of the second layer 2N is a wedge-like shape.

The maximum thickness position (X1) of the interlayer film 11N within a region of 0.1X to 0.9X from the one end 11a toward the other end 11b of the interlayer film 11N is a position of 0.9X from the one end 11a toward the other end 11b. The minimum thickness position (X2) of the interlayer film 11N within a region of 0.1X to 0.9X from the one end 11a toward the other end 11b of the interlayer film 11N is a position of 0.1X from the one end 11a toward the other end 11b.

Hereinafter, details of each layer constituting the interlayer film according to the present invention, and details of each ingredient contained in each layer are described.

(Coloring agent)

It is preferred that the interlayer film contain a coloring agent. It is preferred that the interlayer film include a colored layer containing a coloring agent. The first layer may contain or need not contain a coloring agent. The second layer may contain or need not contain a coloring agent. The third layer may contain or need not contain a coloring agent. The fourth layer may contain or need not contain a coloring agent. The fifth layer may contain or need not contain a coloring agent. Typically, the region where the colored layer exists corresponds to the colored region. In the interlayer film, only one colored layer may exist, two colored layers may exist, and two or more colored layers may exist. In the interlayer film, ten or less colored layers may exist, and five or less colored layers may exist.

The sectional shape in the thickness direction of the colored layer may be a rectangular shape, or may be a wedge-like shape.

The minimum thickness of the colored layer is preferably 30 $\mu$m or more, more preferably 50 $\mu$m or more, still

more preferably 75 μm or more, further preferably 100 μm or more, still further preferably 125 μm or more, yet still further preferably 150 μm or more, especially preferably 175 μm or more, most preferably 200 μm or more, and is preferably 1600 μm or less, more preferably 1500 μm or less, further preferably 1400 μm or less. When the minimum thickness of the colored layer is the above lower limit or more and the above upper limit or less, it is possible to control the haze of the laminated glass lower.

In the position (1), it is preferred that the colored layer exist, and in the position (2), it is preferred that the colored layer exist. In the maximum thickness position (X1), it is preferred that the colored layer exist, and in the minimum thickness position (X2), it is preferred that the colored layer exist.

In 100% by weight of the colored layer, the content of the coloring agent is preferably 0.00001% by weight or more, more preferably 0.00005% by weight or more, further preferably 0.0001% by weight or more, especially preferably 0.0002% by weight or more, most preferably 0.0003% by weight or more, and is preferably 7% by weight or less, more preferably 6% by weight or less, further preferably 4% by weight or less, especially preferably 2% by weight or less, most preferably 1% by weight or less. When the content of the coloring agent is the above lower limit or more and the above upper limit or less, it is possible to control the haze of the laminated glass lower.

In the interlayer film having the shading region, a plane area of a part where the colored layer exists in 100% of the total plane area of the region Q of the interlayer film is 80% or more, preferably 85% or more, more preferably 90% or more, further preferably 95% or more, most preferably 100%. When the plane area of the part where the colored layer exists is the above lower limit or more, it is possible to suppress double images more effectively. In 100% of the total plane area of the region Q of the interlayer film, the plane area of the part where the colored layer exists may be 100% or less, may be less than 100%, and may be 95% or less.

Examples of the coloring agent include a dye, a pigment, a heat shielding substance and the like. It is preferred that the coloring agent be an ingredient capable of adjusting color coordinate $L^*$, $a^*$ or $b^*$ in $L^*a^*b^*$ color system by being contained in the interlayer film. The heat shielding substance is also an ingredient that absorbs a relatively large quantity of light with wavelengths outside the visible light region. Also, the heat shielding performance means the performance of absorbing also a relatively large quantity of light with wavelengths outside the visible light region.

From the viewpoint of enhancing the design property, it is preferred that the coloring agent be a dye or a pigment. It is preferred that the interlayer film contain a dye or a pigment.

Examples of the dye include a pyrene-based dye, an aminoketone-based dye, an anthraquinone-based dye, and an azo-based dye, and the like. One kind of the dye may be used alone, and two or more kinds thereof may be used in combination.

In 100% by weight of the interlayer film, or in 100% by weight of the layer containing the dye (the first layer, the second layer, the third layer, the fourth layer, the fifth layer or the colored layer), the content of the dye is 0.00003% by weight or more, more preferably 0.00005% by weight or more, further preferably 0.0001% by weight or more, especially preferably 0.0002% by weight or more, most preferably 0.0003% by weight or more, and is preferably 7% by weight or less, more preferably 6% by weight or less, further preferably 4% by weight or less, especially preferably 2% by weight or less, most preferably 1% by weight or less. When the content of the dye is the above lower limit or more and the above upper limit or less, the heat shielding property is sufficiently enhanced and the visible light transmittance is sufficiently enhanced.

The pigment may be an organic pigment and may be an inorganic pigment. The organic pigment may be an organic pigment having a metal atom, and may be an organic pigment not having a metal atom. One kind of the pigment may be used alone, and two or more kinds thereof may be used in combination.

Examples of the organic pigment include a phthalocyanine compound, a quinacridone compound, an azo compound, a pentaphene compound, a perylene compound, an indole compound, a threne compound, a diketopyrrolopyrrole compound, an anthraquinone compound, a perinone compound, an indanthrene compound, an indigo compound, a nickel complex compound, an azo compound, carbon black, and a dioxazine compound.

In 100% by weight of the interlayer film, or in 100% by weight of the layer containing the pigment (the first layer, the second layer, the third layer, the fourth layer, the fifth layer or the colored layer), the content of the pigment is 0.00001% by weight or more, more preferably 0.00005% by weight or more, further preferably 0.0001% by weight or more, especially preferably 0.0002% by weight or more, most preferably 0.0003% by weight or more, and is preferably 7% by weight or less, more preferably 6% by weight or less, further preferably 4% by weight or less, especially preferably 2% by weight or less, most preferably 1% by weight or less. When the content of the pigment is the above lower limit or more and the above upper limit or less, the heat shielding property is sufficiently enhanced and the visible light transmittance is sufficiently enhanced.

From the viewpoint of enhancing the heat shielding property of the laminated glass, it is preferred that the coloring agent contain a heat shielding substance, and it is more preferred that the coloring agent be a heat shielding substance. From the viewpoint of enhancing the heat shielding property of the laminated glass, it is preferred that the interlayer film include a layer containing a heat shielding substance.

It is preferred that the heat shielding substance contain at least one kind of Ingredient X among a phthalocyanine compound, a naphthalocyanine compound, and an anthracyanine compound or contain heat shielding particles. In this case, the heat shielding substance may contain both of the Ingredient X and the heat shielding particles.

In 100% by weight of the interlayer film, or in 100% by weight of the layer containing the heat shielding substance (the first layer, the second layer, the third layer, the fourth layer, the fifth layer or the colored layer), the content of the heat shielding substance is preferably 0.001% by weight or more, more preferably 0.005% by weight or more, more preferably 0.01% by weight or more, still more preferably 0.02% by weight or more, further preferably 0.05% by weight or more, especially preferably 0.1% by weight or more, and is preferably 6% by weight or less, more preferably 5.5% by weight or less, further preferably 4% by weight or less, especially preferably 3.5% by weight or less, most preferably 3% by weight or less. When the content of the heat shielding substance is the above lower limit or more and the above upper limit or less, the heat shielding property is sufficiently enhanced and the visible light transmittance is sufficiently enhanced.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding property and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atom(s) or copper atom(s) and a derivative of phthalocyanine containing vanadium atom(s) or copper atom(s). From the viewpoint of still further enhancing the heat shielding property of the interlayer film and the laminated glass, it is preferred that the Ingredient X have a structural unit in which an oxygen atom is bonded to a vanadium atom.

In 100% by weight of the interlayer film or in 100% by weight of the layer containing the Ingredient X (the first layer, the second layer, the third layer, the fourth layer, the fifth layer or the colored layer), the content of the Ingredient X is preferably 0.001% by weight or more, more preferably 0.005% by weight or more, further preferably 0.01% by weight or more, and especially preferably 0.02% by weight or more and is preferably 6% by weight or less, more preferably 5.5% by weight or less, further preferably 4% by weight or less, especially preferably 3.5% by weight or less. When the content of the Ingredient X is the above lower limit or more and the above upper limit or less, the heat shielding property is sufficiently enhanced and the visible light transmittance is sufficiently enhanced. For example, it is possible to make the visible light transmittance 70% or more.

From the viewpoint of further enhancing the heat shielding properties of laminated glass, it is more preferred that the heat shielding particles be metal oxide particles. It is preferred that the heat shielding particles be particles of a metal oxide (metal oxide particles).

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles (CWO particles), thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB$_6$) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding properties of the interlayer film and the laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding property of the interlayer film and the laminated glass, cesium-doped tungsten oxide particles are especially preferred. From the viewpoint of still further enhancing the heat shielding property of the interlayer film and the laminated glass, it is preferred that the cesium-doped tungsten oxide particles be tungsten oxide particles represented by the formula: $Cs_{0.33}WO_3$.

The average particle diameter of the heat shielding particles is preferably 0.01 μm or more, more preferably 0.02 μm or more, and is preferably 0.1 μm or less, more preferably 0.05 μm or less. When the average particle diameter is the aforementioned lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of the layer containing the heat shielding particles (the first layer, the second layer, the third layer, the fourth layer, the fifth layer or the colored layer), the content of the heat shielding particles is 0.001% by weight or more, more preferably 0.005% by weight or more, further preferably 0.01% by weight or more, and especially preferably 0.02% by weight or more and is preferably 6% by weight or less, more preferably 5.5% by weight or less, further preferably 4% by weight or less, especially preferably 3.5% by weight or less. When the content of the heat shielding particles is the above lower limit or more and the above upper limit or less, the heat shielding property is sufficiently enhanced and the visible light transmittance is sufficiently enhanced.

Other details of coloring agent:

A distance from the first outer surface to the second outer surface of the interlayer film is referred to as t. From the viewpoint of enhancing the heat shielding performance, it is preferred that the coloring agent exist in a region of 0t to 0.2t from the first outer surface toward the second outer surface. From the viewpoint of enhancing the adhesion stability between the interlayer film and lamination glass members, it is preferred that the coloring agent exist in a region of more than 0.2t to 0.4t from the first outer surface toward the second outer surface. From the viewpoint of enhancing the adhesion stability between the interlayer film and lamination glass members, it is preferred that the coloring agent exist in a region of more than 0.4t to 0.5t from the first outer surface toward the second outer surface.

(Thermoplastic resin)

It is preferred that the interlayer film contain a thermoplastic resin. It is preferred that the first layer contain a thermoplastic resin. It is preferred that the second layer contain a thermoplastic resin. It is preferred that the third layer contain a thermoplastic resin. It is preferred that the fourth layer contain a thermoplastic resin. It is preferred that the fifth layer contain a thermoplastic resin. It is preferred that the colored layer contain a thermoplastic resin. One kind of the thermoplastic resin may be used alone and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a (meth)acrylic resin, a polyolefin resin, an ionomer resin, a polyvinyl alcohol resin, and the like. Thermoplastic resins other than these may be used.

It is preferred that the interlayer film contain a polyvinyl acetal resin. It is preferred that the first layer contain a polyvinyl acetal resin. It is preferred that the second layer contain a polyvinyl acetal resin. It is preferred that the third layer contain a polyvinyl acetal resin. It is preferred that the fourth layer contain a polyvinyl acetal resin. It is preferred that the fifth layer contain a polyvinyl acetal resin. It is preferred that the colored layer contain a polyvinyl acetal resin. It is preferred that the thermoplastic resin contained in the interlayer film be a polyvinyl acetal resin. One kind of the polyvinyl acetal resin may be used alone and two or more kinds thereof may be used in combination.

In 100% by weight of the thermoplastic resin contained in each layer (the first layer, the second layer, the third layer, the fourth layer, the fifth layer or the colored layer) constituting the interlayer film, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more, and is preferably 100% by weight or less. It is preferred that the main ingredient (50% by weight or more) of the thermoplastic resin in each layer constituting the interlayer film be a polyvinyl acetal resin.

(Plasticizer)

From the viewpoint of further enhancing the adhesive force of an interlayer film, it is preferred that the interlayer film contain a plasticizer. It is preferred that the first layer contain a plasticizer. It is preferred that the second layer contain a plasticizer. It is preferred that the third layer contain a plasticizer. It is preferred that the fourth layer contain a plasticizer. It is preferred that the fifth layer contain a plasticizer. It is preferred that the colored layer contain a plasticizer. When the thermoplastic resin contained in the interlayer film is a polyvinyl acetal resin, it is especially preferred that the interlayer film (each layer) contain a plasticizer. It is preferred that a layer containing a polyvinyl acetal resin contain a plasticizer. One kind of the plasticizer may be used alone, and two or more kinds thereof may be used in combination.

The plasticizer is not particularly limited. As the plasticizer, a conventionally known plasticizer can be used. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

The content of the plasticizer in the interlayer film relative to 100 parts by weight of the thermoplastic resin in the interlayer film is preferably 5 parts by weight or more, more preferably 25 parts by weight or more, further preferably 30 parts by weight or more, and is preferably 100 parts by weight or less, more preferably 60 parts by weight or less, further preferably 50 parts by weight or less. When the content of the plasticizer is the above lower limit or more, the penetration resistance of laminated glass is further enhanced. When the content of the plasticizer is the above upper limit or less, the transparency of the interlayer film is further enhanced.

(Other ingredients)

Each of the interlayer film, the first layer, the second layer, the third layer, the fourth layer, the fifth layer and the colored layer may contain other ingredients than the above-described ingredients as necessary. Examples of other ingredients include an ultraviolet absorber, an oxidation inhibitor, a coupling agent, a dispersant, a surfactant, a fire retardant, an antistatic agent, an adhesion adjusting agent (alkali metal salt and alkali earth metal salt and so on), a moisture-proofing agent, a fluorescent brightener, and an infrared absorber, and the like. One kind of these other ingredients may be used alone, and two or more kinds thereof may be used in combination.

(Other details of interlayer film for laminated glass)

As described above, one end in each layer of the interlayer film corresponds to one end of the interlayer film, and the other end in each layer of the interlayer film corresponds to the other end of the interlayer film.

In the first layer, the thickness of the one end and the thickness of the other end may be the same, the thickness of the one end may be smaller than the thickness of the other end, and the thickness of the one end may be larger than the thickness of the other end.

The first layer may have a region where the thickness increases or may have a region where the thickness decreases from the one end toward the other end of the first layer. The first layer may have a region where the thickness increases and a region where the thickness decreases from the one end toward the other end of the first layer.

The first layer may have a portion where the increment in thickness increases or may have a portion where the increment in thickness decreases in the region where the thickness increases from the one end toward the other end of the first layer. In the first layer, the increment in thickness may be constant from the one end toward the other end of the first layer.

The first layer may have a portion where the decrement in thickness increases or may have a portion where the decrement in thickness decreases in the region where the thickness decreases from the one end toward the other end of the first layer. In the first layer, the decrement in thickness may be constant from the one end toward the other end of the first layer.

The sectional shape in the thickness direction of the first layer may be a rectangular shape, or may be a wedge-like shape.

In the second layer, the thickness of the one end and the thickness of the other end may be the same, the thickness of the one end may be smaller than the thickness of the other end, and the thickness of the one end may be larger than the thickness of the other end.

The second layer may have a region where the thickness increases or may have a region where the thickness decreases from the one end toward the other end of the second layer. The second layer may have a region where the thickness increases and a region where the thickness decreases from the one end toward the other end of the second layer.

The second layer may have a portion where the increment in thickness increases or may have a portion where the increment in thickness decreases in the region where the thickness increases from the one end toward the other end of the second layer. In the second layer, the increment in thickness may be constant from the one end toward the other end of the second layer.

The second layer may have a portion where the decrement in thickness increases or may have a portion where the decrement in thickness decreases in the region where the thickness decreases from the one end toward the other end of the second layer. In the second layer, the decrement in thickness may be constant from the one end toward the other end of the second layer.

The sectional shape in the thickness direction of the second layer may be a rectangular shape, or may be a wedge-like shape.

In the third layer, the thickness of the one end and the thickness of the other end may be the same, the thickness of the one end may be smaller than the thickness of the other end, and the thickness of the one end may be larger than the thickness of the other end.

The third layer may have a region where the thickness increases or may have a region where the thickness decreases from the one end toward the other end of the third layer. The third layer may have a region where the thickness increases and a region where the thickness decreases from the one end toward the other end of the third layer.

The third layer may have a portion where the increment in thickness increases or may have a portion where the increment in thickness decreases in the region where the thickness increases from the one end toward the other end of the third layer. In the third layer, the increment in thickness may be constant from the one end toward the other end of the third layer.

The third layer may have a portion where the decrement in thickness increases or may have a portion where the decrement in thickness decreases in the region where the thickness decreases from the one end toward the other end of the third layer. In the third layer, the decrement in thickness may be constant from the one end toward the other end of the third layer.

The sectional shape in the thickness direction of the third layer may be a rectangular shape, or may be a wedge-like shape.

In the fourth layer, the thickness of the one end and the thickness of the other end may be the same, the thickness of the one end may be smaller than the thickness of the other end, and the thickness of the one end may be larger than the thickness of the other end.

The fourth layer may have a region where the thickness increases or may have a region where the thickness decreases from the one end toward the other end of the fourth layer. The fourth layer may have a region where the thickness increases and a region where the thickness decreases from the one end toward the other end of the fourth layer.

The fourth layer may have a portion where the increment in thickness increases or may have a portion where the increment in thickness decreases in the region where the thickness increases from the one end toward the other end of the fourth layer. In the fourth layer, the increment in thickness may be constant from the one end toward the other end of the fourth layer.

The fourth layer may have a portion where the decrement in thickness increases or may have a portion where the decrement in thickness decreases in the region where the thickness decreases from the one end toward the other end of the fourth layer. In the fourth layer, the decrement in thickness may be constant from the one end toward the other end of the fourth layer.

The sectional shape in the thickness direction of the fourth layer may be a rectangular shape, or may be a wedge-like shape.

In the fifth layer, the thickness of the one end and the thickness of the other end may be the same, the thickness of the one end may be smaller than the thickness of the other end, and the thickness of the one end may be larger than the thickness of the other end.

The fifth layer may have a region where the thickness increases or may have a region where the thickness decreases from the one end toward the other end of the fifth layer. The fifth layer may have a region where the thickness increases and a region where the thickness decreases from the one end toward the other end of the fifth layer.

The fifth layer may have a portion where the increment in thickness increases or may have a portion where the increment in thickness decreases in the region where the thickness increases from the one end toward the other end of the fifth layer. In the fifth layer, the increment in thickness may be constant from the one end toward the other end of the fifth layer.

The fifth layer may have a portion where the decrement in thickness increases or may have a portion where the decrement in thickness decreases in the region where the thickness decreases from the one end toward the other end of the fifth layer. In the fifth layer, the decrement in thickness may be constant from the one end toward the other end of the fifth layer.

The sectional shape in the thickness direction of the fifth layer may be a rectangular shape, or may be a wedge-like shape.

In the colored layer, the thickness of the one end and the thickness of the other end may be the same, the thickness of the one end may be smaller than the thickness of the other end, and the thickness of the one end may be larger than the thickness of the other end.

The colored layer may have a region where the thickness increases or may have a region where the thickness decreases from the one end toward the other end of the colored layer. The colored layer may have a region where the thickness increases and a region where the thickness decreases from the one end toward the other end of the colored layer.

The colored layer may have a portion where the increment in thickness increases or may have a portion where the increment in thickness decreases in the region where the thickness increases from the one end toward the other end of the colored layer. In the colored layer, the increment in thickness may be constant from the one end toward the other end of the colored layer.

The colored layer may have a portion where the decrement in thickness increases or may have a portion where the decrement in thickness decreases in the region where the thickness decreases from the one end toward the other end of the colored layer. In the colored layer, the decrement in thickness may be constant from the one end toward the other end of the colored layer.

The sectional shape in the thickness direction of the colored layer may be a rectangular shape, or may be a wedge-like shape.

The interlayer film may be wound to be formed into a roll body of the interlayer film. The roll body may include a winding core and an interlayer film wound on the outer periphery of the winding core.

The method for producing the interlayer film is not particularly limited. In the case of a single-layered interlayer film, examples of the production method of the interlayer film include a method of extruding a resin composition with an extruder. One exemplary method for forming the interlayer film in the case of a multi-layered interlayer film includes separately forming layers by using resin compositions for forming respective layers, and then layering the obtained layers. Further, as a method for producing the interlayer film, a method of layering layers by co-extruding resin compositions for forming respective layers using an extruder can be recited. A production method of extrusion-molding is preferred because the method is suitable for continuous production.

Examples of the method of layering layers by co-extrusion include a method of joining materials for forming layers of the interlayer film that are molten in one or a plurality of extruders, with a die, and a method of joining layers of the interlayer film by a feed block. From the viewpoint of producing the interlayer film satisfying the formula (1-1) or the formula (1-2) excellently, it is preferred that the method for producing interlayer film include a step of joining materials for forming layers of the interlayer film that are molten in one or a plurality of extruders, with a die, or a step of joining layers of the interlayer film by a feed block. By changing the resin flow rate distribution or changing the resin flow rate of each layer by adjusting the resin pressure of each layer before joining the layers by co-extrusion, it is possible to form a layer shape having a predetermined thickness, and it is possible to produce an interlayer film satisfying the formula (1-1) or the formula (1-2) excellently. As a specific method for adjusting the flow rate, a method of changing the gap of the flow channel, a method of changing the flow channel length and so on can be recited. From the viewpoint of producing an interlayer film satisfying the formula (1-1) or the formula (1-2) excellently, it is preferred that the flow rate of the molten resin containing a coloring agent in the site where the thickness of the obtained interlayer film is large be relatively small, compared with that of other site. In the case of forming the interlayer film having a three or more-layer structure by co-extrusion, it is sometimes the case that after branching the molten resin supplied from one extruder, the layers are joined again to form two or more resin layers. As a method of branching a molten resin by co-extrusion, branching with the molten resin transporting tube, branching with a feed block internal flow channel, and branching with a die internal flow channel, and the like can be recited.

In the co-extrusion, the flow channel diameter and shape of the molten resin transporting tube need not be all equivalent, or may be all equivalent. In co-extrusion, only one extruder may be used, and a plurality of extruders may be used.

For the reason of excellent production efficiency of the interlayer film, it is preferred that the second layer and the third layer contain the same polyvinyl acetal resin. For the reason of excellent production efficiency of the interlayer film, it is more preferred that the second layer and the third layer contain the same polyvinyl acetal resin and the same plasticizer. For the reason of excellent production efficiency of the interlayer film, it is further preferred that the second layer and the third layer be formed of the same resin composition.

It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method (melt fracture method), an emboss roll method, a calender roll method, and a profile extrusion method, and the like.

From the viewpoint of improving the degassability at the time of laminating the interlayer film and a lamination glass member, and uniformity of the roughness distribution, it is preferred that the interlayer film have uneven surface imparted by an emboss roll method or a melt fracture method.

A ten-point average roughness (Rz) of the uneven surface is preferably 1 $\mu$m or more, more preferably 5 $\mu$m or more, further preferably 10 $\mu$m or more, still further preferably 15 $\mu$m or more, especially preferably 20 $\mu$m or more, and is preferably 100 $\mu$m or less, more preferably 90 $\mu$m or less, further preferably 80 $\mu$m or less, especially preferably 70 $\mu$m or less, most preferably 60 $\mu$m or less. When the ten-point average roughness (Rz) is the above lower limit or more and the above upper limit or less, it is possible to improve the degassability at the time of press-bonding between the interlayer film and a lamination glass member.

The ten-point average roughness (Rz) of the uneven surface is measured in accordance with JIS B0601:1994. As a measuring device for measuring the ten-point average roughness (Rz), for example, "Surfcorder SE300" available from Kosaka Laboratory Ltd. or the like may be used. More specifically, the ten-point average roughness (Rz) can be measured using a stylus having a tip radius of 2 $\mu$m and a tip angle of 60° in measurement conditions of a cutoff value at the time of measurement of 2.5 mm, a standard length 2.5 mm, a measurement length of 12.5 mm, a spare length 2.5 mm, and a feed speed of stylus of 0.5 mm/second in an environment of 23°C and 30 RH%. When embossing in the form of engraved lines is given on the surface of the interlayer film, the ten-point average roughness (Rz) is measured by feeding a stylus perpendicularly to the line direction of the engraved lines.

(Laminated glass)

A laminated glass according to the present invention includes a first lamination glass member, a second lamination glass member and the interlayer film described above. In the laminated glass according to the present invention, the interlayer film is arranged between the first lamination glass member and the second lamination glass member.

The laminated glass may be a head-up display. When the laminated glass is a head-up display, the laminated glass has a display region of the head-up display. The display region is a region on which information can be favorably displayed.

A head-up display system can be obtained by using the aforementioned head-up display. The head-up display system includes the laminated glass, and a light source device for irradiating the laminated glass with light for image display. The light source device can be attached, for example, to a dashboard in a vehicle. By irradiating the display region of the laminated glass with light from the light source device, it is possible to achieve image display.

It is preferred that the first lamination glass member be the first glass plate. It is preferred that the second lamination glass member be the second glass plate.

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate including a glass plate, and it is preferred that at least one glass plate be used. It is preferred that each of the first lamination glass member and the second lamination glass member be a glass plate or a PET film, and the laminated glass include a glass plate as at least one of the first lamination glass member and the second lamination glass member. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly (meth) acrylic resin plate, and the like. Examples of the poly(meth)acrylic resin plate include a polymethyl (meth)acrylate plate, and the like.

The thickness of each of the first lamination glass member and the second lamination glass member is preferably 1 mm or more, and is preferably 5 mm or less, more preferably 3 mm or less. Moreover, when the lamination glass member is a glass plate, the thickness of the glass plate is preferably 0.5 mm or more, more preferably 0.7 mm or more, and is preferably 5 mm or less, more preferably 3 mm or less. When the lamination glass member is a PET film, the thickness of the PET film is preferably 0.03 mm or more and is preferably 0.5 mm or less.

The sectional shape of the first lamination glass member may be a rectangular shape, or may be a wedge-like shape. The sectional shape of the second lamination glass member may be a rectangular shape, or may be a wedge-like shape. The first lamination glass member may have a curved surface, and the second lamination glass member may have a curved surface. It is preferred that the thickness of the first lamination glass member be uniform, and it is preferred that the thickness of the second lamination glass member be uniform.

In the laminated glass, by selecting the combination of the interlayer film, and the first and second lamination glass members so that they are in the relationship of complementary colors, it is possible to make the color of the laminated glass being an achromatic color or a color close to achromatic color. For example, when green glass (colored glass) is used as a lamination glass member, it is possible to make the color of the laminated glass being an achromatic color or a color close to achromatic color by using an interlayer film that is colored into reddish color.

The first lamination glass member may be colored glass, or need not be colored glass. The second lamination glass member may be colored glass, or need not be colored glass.

Examples of the colored glass include green glass, heat ray-absorbing plate glass, heat ray-reflecting plate glass, polished plate glass, figured glass, wired glass, and the like. In the wired glass, the wire may be netted. By using the colored glass, it is possible to enhance the heat shielding property of the laminated glass.

A color coordinate $a*$ in $L*a*b*$ color system of the first lamination glass member which is colored glass is preferably -10 or more, more preferably -8 or more, further preferably -6 or more, especially preferably -5 or more, and is preferably 0 or less, more preferably -2 or less, further preferably -3 or less. When the color coordinate $a*$ is the above lower limit or more and the above upper limit or less, it is possible to further enhance the heat shielding property of the laminated glass.

A color coordinate $b*$ in $L*a*b*$ color system of the first lamination glass member which is colored glass is preferably 0 or more, more preferably 0.3 or more, further preferably 0.5 or more, and is preferably 3 or less, more preferably 2.8 or less, further preferably 2 or less. When the color coordinate $b*$ is the above lower limit or more and the above upper limit or less, it is possible to further enhance the heat shielding property of the laminated glass.

A color coordinate $L*$ in $L*a*b*$ color system of the first lamination glass member which is colored glass is preferably 88 or more, more preferably 90 or more, further preferably 92 or more, and is preferably 97 or less, more preferably 96 or less, further preferably 95 or less. When the color coordinate $L*$ is the above lower limit or more and the above upper limit or less, it is possible to further enhance the heat shielding property of the laminated glass.

A color coordinate $a*$ in $L*a*b*$ color system of the second lamination glass member which is colored glass is preferably -10 or more, more preferably -8 or more, further preferably -6 or more, especially preferably -5 or more, and is preferably 0 or less, more preferably -2 or less, further preferably -3 or less. When the color coordinate $a*$ is the above lower limit or more and the above upper limit or less, it is possible to further enhance the heat shielding property of the laminated glass.

A color coordinate $b*$ in $L*a*b*$ color system of the second lamination glass member which is colored glass is preferably 0 or more, more preferably 0.3 or more, further preferably 0.5 or more, and is preferably 3 or less, more preferably 2.8 or less, further preferably 2 or less. When the color coordinate $b*$ is the above lower limit or more and the above upper limit or less, it is possible to further enhance the heat shielding property of the laminated glass.

A color coordinate $L*$ in $L*a*b*$ color system of the second lamination glass member which is colored glass is preferably 88 or more, more preferably 90 or more, further preferably 92 or more, and is preferably 97 or less, more preferably 96 or less, further preferably 95 or less. When the color coordinate $L*$ is the above lower limit or more and the above upper limit or less, it is possible to further enhance the heat shielding property of the laminated glass.

Each of a color coordinate $a*$ in $L*a*b*$ color system of the first lamination glass member which is not colored glass, and a color coordinate $a*$ in $L*a*b*$ color system of the second lamination glass member which is not colored glass is preferably -2 or more and is preferably 2 or less.

Each of a color coordinate $b*$ in $L*a*b*$ color system of the first lamination glass member which is not colored glass, and a color coordinate $b*$ in $L*a*b*$ color system of the second lamination glass member which is not colored glass is preferably -2 or more and is preferably 2 or less.

Each of a color coordinate $L*$ in $L*a*b*$ color system of the first lamination glass member which is not colored glass, and a color coordinate $L*$ in $L*a*b*$ color system of the second lamination glass member which is not colored glass is preferably 90 or more and preferably 98 or less.

In the present specification, a laminate of the first lamination glass member and the second lamination glass member is sometimes referred to as "lamination glass member laminate". The lamination glass member laminate has a layered structure of the first lamination glass member/the second lamination glass member.

A color coordinate $a*$ in $L*a*b*$ color system of the lamination glass member laminate is preferably -10 or more, more preferably -8 or more, further preferably -7 or more, especially preferably -6 or more, and is preferably -2 or less, more preferably -3 or less, further preferably -4 or less. When the color coordinate a* is the above lower limit or more and the above upper limit or less, it is possible to further enhance the heat shielding property of the laminated glass.

A color coordinate b* in L*a*b* color system of the lamination glass member laminate is preferably 0 or more, more preferably 0.5 or more, further preferably 0.7 or more, and is preferably 6 or less, more preferably 4 or less, further preferably 3 or less, especially preferably 2 or less. When the color coordinate b* is the above lower limit or more and the above upper limit or less, it is possible to further enhance the heat shielding property of the laminated glass.

A color coordinate L* in L*a*b* color system of the lamination glass member laminate is preferably 84 or more, more preferably 86 or more, further preferably 87 or more, and is preferably 92 or less, more preferably 90 or less, further preferably 89 or less. When the color coordinate L* is the above lower limit or more and the above upper limit or less, it is possible to further enhance the heat shielding property of the laminated glass.

A color coordinate a* in L*a*b* color system of the interlayer film is preferably 1 or more, more preferably 2 or more, further preferably 3 or more, especially preferably 3.5 or more, and is preferably 10 or less, more preferably 8 or less, further preferably 7.5 or less. When the color coordinate a* is the above lower limit or more and the above upper limit or less, it is possible to make the color of the laminated glass being an achromatic color or a color close to achromatic color when colored glass is used.

A color coordinate b* in L*a*b* color system of the interlayer film is preferably -10 or more, more preferably -8 or more, still more preferably -5 or more, further preferably -3 or more, still further preferably -1 or more, especially preferably 0 or more, most preferably 1 or more, and is preferably 5 or less, more preferably 3.5 or less, further preferably 3 or less. When the color coordinate b* is the above lower limit or more and the above upper limit or less, it is possible to make the color of the laminated glass being an achromatic color or a color close to achromatic color when colored glass is used.

A color coordinate L* in L*a*b* color system of the interlayer film is preferably 8 or more, more preferably 10 or more, still more preferably 20 or more, further preferably 40 or more, still further preferably 60 or more, especially preferably 70 or more, still especially preferably 80 or more. It is preferred that a color coordinate L* in L*a*b* color system of the interlayer films exceed 80, and a color coordinate L* in L*a*b* color system of the interlayer film is preferably 88 or more, more preferably 90 or more, further preferably 91 or more, and is preferably 98 or less, more preferably 95 or less, further preferably 94 or less. When the color coordinate L* is the above lower limit or more and the above upper limit or less, it is possible to make the color of the laminated glass being an achromatic color or a color close to achromatic color when colored glass is used.

From the viewpoint of employing the combination of the lamination glass members and the interlayer film having complementary colors, and making the color of the laminated glass be an achromatic color or a color close to achromatic color, it is preferred that a product of a color coordinate a* in L*a*b* color system of the lamination glass member laminate, and a color coordinate a* in L*a*b* color system of the interlayer film be a negative value.

A sum of a color coordinate a* in L*a*b* color system of the lamination glass member laminate, and a color coordinate a* in L*a*b* color system of the interlayer film is preferably 4 or less, more preferably 3 or less, further preferably 2 or less. It is preferred that the sum be as close to 0 as possible. When the sum is the above upper limit or less, it is possible to make the color of the laminated glass being an achromatic color or a color close to achromatic color by combining the lamination glass members and the interlayer film having complementary colors. A sum of a color coordinate a* in L*a*b* color system of the lamination glass member laminate, and a color coordinate a* in L*a*b* color system of the interlayer film may be 0 or more, may be -2 or more, may be -3 or more, and may be -4 or more.

An absolute value of difference between a color coordinate a* in L*a*b* color system of the lamination glass member laminate, and a color coordinate a* in L*a*b* color system of the interlayer film is preferably 0 or more, more preferably 3 or more, and is preferably 15 or less, more preferably 13 or less. When the absolute value of difference is the above lower limit or more and the above upper limit or less, it is possible to make the color of the laminated glass be an achromatic color or a color close to achromatic color.

From the viewpoint of making the color of the laminated glass be an achromatic color or a color close to achromatic color, it is preferred that a color coordinate a* in L*a*b* color system of the lamination glass member laminate be a negative value, and a color coordinate a* in L*a*b* color system of the interlayer film be a positive value. From the viewpoint of making the color of the laminated glass be an achromatic color or a color close to achromatic color, it is preferred that a color coordinate a* in L*a*b* color system of the first lamination glass member be a negative value, and a color coordinate a* in L*a*b* color system of the interlayer film be a positive value. From the viewpoint of making the color of the laminated glass be an achromatic color or a color close to achromatic color, it is preferred that a color coordinate a* in L*a*b* color system of the first lamination glass member be a negative value, a color coordinate a* in L*a*b* color system of the second lamination glass member be a negative value, and a color coordinate a* in L*a*b* color system of the interlayer film be a positive value.

From the viewpoint of making the color of the laminated glass be an achromatic color or a color close to achromatic color, it is preferred that a color coordinate b* in L*a*b* color system of the lamination glass member laminate be a positive value, and a color coordinate b* in L*a*b* color system of the interlayer film be 5 or less. From the viewpoint of making the color of the laminated glass be an achromatic color or a color close to achromatic color, it is preferred that a color coordinate b* in L*a*b* color system of the first lamination glass member be a positive value, and a color coordinate b* in L*a*b* color system of the interlayer film be 5 or less. From the viewpoint of making the color of the laminated glass be an achromatic color or a color close to achromatic color, it is preferred that a color coordinate b* in L*a*b* color system of the first lamination glass member be a positive value, a color coordinate b* in L*a*b* color system of the second lamination glass member be a positive value, and a color coordinate b* in L*a*b* color system of the interlayer film be 5 or less.

From the viewpoint of making the color of the laminated glass be an achromatic color or a color close to achromatic color, it is preferred that a color coordinate b* in L*a*b* color system of the lamination glass member laminate be a positive value, and a color coordinate b* in L*a*b* color system of the interlayer film be a negative value. From the viewpoint of making the color of the laminated glass be an achromatic color or a color close to achromatic color, it is preferred that a color coordinate b* in L*a*b* color system of the first lamination glass member be a positive value, and a color coordinate b* in L*a*b* color system of the interlayer film be a negative value. From the viewpoint of making the color of the laminated glass be an achromatic color or a color close to achromatic color, it is preferred that a color coordinate b* in L*a*b* color system of the first lamination glass member be a positive value, a color coordinate b* in L*a*b* color system of the second lamination glass member be a positive value, and a color coordinate b* in L*a*b* color system of the interlayer film be a negative value.

A color coordinate a* in L*a*b* color system of the laminated glass is preferably -5 or more, more preferably - 4.5 or more, more preferably -4 or more, still more preferably -3.5 or more, further preferably -3 or more, still further preferably -2.5 or more, especially preferably -2 or more, still especially preferably -1.5 or more, most preferably -1 or more, and is preferably 5 or less, more preferably 4.5 or less, more preferably 4 or less, still more preferably 3.5 or less, further preferably 3 or less, still further preferably 2.5 or less, especially preferably 2 or less, still especially preferably 1.5 or less, most preferably 1 or less. When the color coordinate a* is the above lower limit or more and the above upper limit or less, it is possible to make the color of the laminated glass being an achromatic color or a color close to achromatic color.

A color coordinate b* in L*a*b* color system of the laminated glass is preferably -5 or more, more preferably - 4.5 or more, more preferably -4 or more, still more preferably -2 or more, further preferably 0 or more, still further preferably 1 or more, especially preferably 1.5 or more, and is preferably 5 or less, more preferably 4.5 or less, more preferably 4 or less, further preferably 3.5 or less, especially preferably 3 or less. When the color coordinate b* is the above lower limit or more and the above upper limit or less, it is possible to make the color of the laminated glass being an achromatic color or a color close to achromatic color.

A color coordinate L* in L*a*b* color system of the laminated glass is preferably 8 or more, more preferably 10 or more, still more preferably 20 or more, further preferably 40 or more, still further preferably 60 or more, especially preferably 70 or more, still especially preferably 80 or more. It is preferred that a color coordinate L* in L*a*b* color system of the laminated glass exceed 80, and a color coordinate L* in L*a*b* color system of the laminated glass is preferably 84 or more, more preferably 86 or more, further preferably 87 or more, and is preferably 98 or less, more preferably 95 or less, further preferably 92 or less, especially preferably 90 or less. When the color coordinate L* is the above lower limit or more and the above upper limit or less, it is possible to make the color of the laminated glass being an achromatic color or a color close to achromatic color.

A color coordinate a*, a color coordinate b* and a color coordinate L* in L*a*b* color system of the laminated glass, the first lamination glass member, the second lamination glass member, the lamination glass member laminate and the interlayer film are measured in accordance with JIS Z8781. A color coordinate a*, a color coordinate b* and a color coordinate L* of the laminated glass, the first lamination glass member, the second lamination glass member, the lamination glass member laminate and the interlayer film mean values measured at a center position between the one end and the other end of each measuring object. The one end and the other end are end parts of both sides facing each other in the measuring object.

A color coordinate a*, a color coordinate b* and a color coordinate L* in L*a*b* color system of the laminated glass are measured in the above-described method using the laminated glass itself.

A color coordinate a*, a color coordinate b* and a color coordinate L* in L*a*b* color system of the first lamination glass member and the second lamination glass member are measured in the above-described method by using the first lamination glass member itself or the second lamination glass member itself.

A color coordinate a*, a color coordinate b* and a color coordinate L* in L*a*b* color system of the lamination glass member laminate are measured in the above-described method by using a lamination glass member laminate in a state that two lamination glass members, namely, the first lamination glass member and the second lamination glass member are layered.

A color coordinate a*, a color coordinate b* and a color coordinate L* in L*a*b* color system of the interlayer film are measured in the following manner when an interlayer film before being prepared into laminated glass is used. The interlayer film is sandwiched between two polyethylene terephthalate sheets (PET sheets) to obtain a first laminate. The obtained first laminate is sandwiched between two sheets of glass and fixed with a heat-resistant tape to obtain a second laminate. The obtained second laminate is subjected to preliminary pressing and an autoclave treatment. Then, the two sheets of glass and the two sheets of PET sheets were peeled off to obtain the interlayer film. In this way, the uneven surfaces (embossed surfaces) of the interlayer film can be made into flat surfaces. Using the obtained interlayer film itself, measurement is conducted in the above-described method. As the PET sheet, "Polyester film Lumirror #100-T60" available from TORAY INDUSTRIES, INC. is favorably used as the PET sheet.

A color coordinate a*, a color coordinate b* and a color coordinate L* in L*a*b* color system of the interlayer film are measured in the following manner when an interlayer film after being prepared into laminated glass is used. The lamination glass members are peeled off from the laminated glass to obtain the interlayer film. Using the obtained interlayer film itself, measurement is conducted in the above-described method.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Each of the interlayer film and the laminated glass can be used for automobiles, railway vehicles, aircraft, ships, and buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass, roof glass or glass for backlight of an automobile, and the like. The interlayer film and the laminated glass are suitably used for automobiles. The interlayer film is suitably used for obtaining laminated glass for an automobile.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

The following materials were prepared.

(Thermoplastic resin)

Polyvinyl acetal resin (1): Polyvinyl butyral resin: average polymerization degree: 1700, content of hydroxyl group: 30% by mole, acetylation degree: 1% by mole, acetalization degree (butyralization degree): 69% by mole.

Polyvinyl acetal resin (2): Polyvinyl butyral resin: average polymerization degree: 3000, content of hydroxyl group: 22% by mole, acetylation degree: 13% by mole, acetalization degree (butyralization degree): 65% by mole

(Plasticizer)

3GO: Triethylene glycol di-2-ethylhexanoate

(Coloring agent)

PB15-1: Pigment Blue 15-1 (copper phthalocyanine pigment)
PR202: Pigment Red 202 (quinacridone pigment)
Pblack-7: Pigment Black 7 (carbon black)
PR149: Pigment Red 149 (perylene pigment)
ITO: Tin-doped indium oxide particles (heat shielding substance)
CWO: Cesium-doped tungsten oxide particles (heat shielding substance)

(Ultraviolet absorber)

Tinuvin326: 2-(2'-hydroxy-3'-t-butyl-5-methylphenyl)-5-chlorobenzotriazole ("Tinuvin 326" available from BASF Japan Ltd.)

(Oxidation inhibitor)

BHT: 2,6-di-t-butyl-p-cresol

In the following Examples and Comparative Examples, materials of each layer containing ingredients in blending amounts shown in the following Table 4 were put into a co-extruder, and kneaded in the co-extruder to prepare an interlayer film. Among the materials shown in Tables 4 and 5, the kinds of the materials used in each Example and each Comparative Example are shown in Tables 6 to 35 (specifically, Tables 7, 10, 13, 16, 19, 22, 25, 28, 31, 34). In Tables 4 and 5, the content of the plasticizer (3GO) is a content relative to 100 parts by weight of polyvinyl acetal resin, and the content of other ingredient than the plasticizer is a content in 100% by weight of the material.

[Table 4]

| Material | Polyvinyl acetal resin | | 3GO | Tinuvin 326 | BHT | PB15-1 | PR202 | Pblack-7 | PR149 | ITO | CWO |
|---|---|---|---|---|---|---|---|---|---|---|---|
| | Kind | parts by weight | parts by weight | % by weight | % by weight | % by weight | % by weight | % by weight | % by weight | % by weight | % by weight |
| A | (1) | 100 | 36.8 | 0.2 | 0.2 | 0 | 0 | 0 | 0 | 0 | 0 |
| B | (2) | 100 | 76 | 0 | 0 | 0 | 0 | 0 | 0 | 0 | 0 |
| C | (1) | 100 | 36.8 | 0.2 | 0.2 | 0.002100 | 0.000700 | 0.000980 | 0 | 0 | 0 |
| D | (1) | 100 | 36.8 | 0.2 | 0.2 | 0.003000 | 0.001000 | 0.001400 | 0 | 0 | 0 |
| E | (1) | 100 | 36.8 | 0.2 | 0.2 | 0.002400 | 0.000800 | 0.001120 | 0 | 0 | 0 |
| F | (1) | 100 | 36.8 | 0.2 | 0.2 | 0.003000 | 0.001000 | 0.001400 | 0 | 0 | 0 |
| G | (1) | 100 | 36.8 | 0.2 | 0.2 | 0.001800 | 0.000600 | 0.000840 | 0 | 0 | 0 |
| H | (1) | 100 | 36.8 | 0.2 | 0.2 | 0.002400 | 0.000800 | 0.001120 | 0 | 0 | 0 |
| I | (1) | 100 | 36.8 | 0.2 | 0.2 | 0.055000 | 0 | 0.013200 | 0 | 0 | 0 |
| J | (2) | 100 | 76 | 0.2 | 0.2 | 0.021875 | 0 | 0.005250 | 0 | 0 | 0 |
| K | (1) | 100 | 36.8 | 0.2 | 0.2 | 0.013625 | 0 | 0.003270 | 0 | 0 | 0 |
| L | (1) | 100 | 36.8 | 0.2 | 0.2 | 0.006750 | 0 | 0.001620 | 0 | 0 | 0 |
| M | (1) | 100 | 36.8 | 0.2 | 0.2 | 0.022500 | 0 | 0.005400 | 0 | 0 | 0 |

[Table 5]

| Material | Polyvinyl acetal resin | | 3GO | Tinuvin 326 | BHT | PB15-1 | PR202 | Pblack-7 | PR149 | ITO | CWO |
| | Kind | parts by weight | parts by weight | % by weight | % by weight | % by weight | % by weight | % by weight | % by weight | % by weight | % by weight |
|---|---|---|---|---|---|---|---|---|---|---|---|
| N | (2) | 100 | 76 | 0 | 0 | 0.008875 | 0 | 0.002130 | 0 | 0 | 0 |
| O | (1) | 100 | 36.8 | 0.2 | 0.2 | 0.005500 | 0 | 0.001320 | 0 | 0 | 0 |
| P | (1) | 100 | 36.8 | 0.2 | 0.2 | 0.002600 | 0 | 0.000624 | 0 | 0 | 0 |
| Q | (1) | 100 | 36.8 | 0.2 | 0.2 | 0.001130 | 0 | 0.000678 | 0 | 0.339000 | 0.011300 |
| R | (1) | 100 | 36.8 | 0.2 | 0.2 | 0.002600 | 0 | 0.000624 | 0 | 0 | 0 |
| s | (1) | 100 | 36.8 | 0.2 | 0.2 | 0.002000 | 0 | 0.000480 | 0 | 0 | 0 |
| T | (1) | 100 | 36.8 | 0.2 | 0.2 | 0 | 0 | 0.002310 | 0 | 0 | 0 |
| U | (1) | 100 | 36.8 | 0.2 | 0.2 | 0 | 0 | 0.002220 | 0 | 0 | 0 |
| V | (1) | 100 | 36.8 | 0.2 | 0.2 | 0 | 0 | 0.000600 | 0 | 0 | 0 |
| W | (1) | 100 | 36.8 | 0.2 | 0.2 | 0 | 0 | 0.001452 | 0 | 0 | 0 |
| X | (1) | 100 | 36.8 | 0 | 0 | 0.001000 | 0 | 0.400000 | 0 | 0 | 0 |
| Y | (1) | 100 | 36.8 | 0.2 | 0.2 | 0 | 0 | 0 | 0.001450 | 0 | 0 |
| Z | (1) | 100 | 36.8 | 0.2 | 0.2 | 0 | 0 | 0 | 0.003000 | 0 | 0 |

(Example 1)

Preparation of interlayer film:

The material for forming the first layer shown in the following Table, and the materials for forming the second and third layers shown in the following Table were co-extruded by using a co-extruder. The pressure distribution at the time of joining the materials was adjusted. In this manner, an interlayer film having a three-layer structure (second layer/first layer/third layer) (interlayer film having the shape shown in Fig. 1) was obtained.

Preparation of laminated glass:

The obtained interlayer film was sandwiched between two sheets of 2-mm thick clear glass (300 mm long × 300 mm wide) conforming to JIS R3202:1996 to obtain a laminate. The obtained laminate was put into a rubber bag and the inside thereof is degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a laminated glass. The obtained laminated glass corresponds to the aforementioned laminated glass A.

(Example 2)

An interlayer film having a three-layer structure (second layer/first layer/third layer) (interlayer film having the shape shown in Fig. 2) was obtained in the same manner as in Example 1 except that the material for forming each layer of the interlayer film was changed as shown in the following Table, the extrusion amount ratio of resin of each layer was changed, and the resin flow rate distribution of each layer was adjusted. Also, using the obtained interlayer film, laminated glass was prepared in the same manner as in Example 1.

(Example 3)

Preparation of interlayer film:

The material for forming the first layer shown in the following Table, and the materials for forming the second layer shown in the following Table were co-extruded by using a co-extruder. The pressure distribution at the time of joining the materials was adjusted. In this manner, an interlayer film having a two-layer structure (second layer/first layer) (interlayer film having the shape shown in Fig. 3) was obtained.

Preparation of laminated glass:

Laminated glass was prepared with the obtained interlayer film in the same manner as in Example 1.

(Example 4)

An interlayer film having a two-layer structure (second layer/first layer) (interlayer film having the shape shown in Fig. 4) was obtained in the same manner as in Example 3 except that the material for forming each layer of the interlayer film was changed as shown in the following Table, the extrusion amount ratio of resin of each layer was changed, and the resin flow rate distribution of each layer was adjusted. Also, using the obtained interlayer film, laminated glass was prepared in the same manner as in Example 1.

(Example 5)

An interlayer film having a three-layer structure (second layer/first layer/third layer) (interlayer film having the shape shown in Fig. 5) was obtained in the same manner as in Example 1 except that the material for forming each layer of the interlayer film was changed as shown in the following Table, the extrusion amount ratio of resin of each layer was changed, and the resin flow rate distribution of each layer was adjusted. Also, using the obtained interlayer film, laminated glass was prepared in the same manner as in Example 1.

(Example 6)

An interlayer film having a three-layer structure (second layer/first layer/third layer) (interlayer film having the shape shown in Fig. 6) was obtained in the same manner as in Example 1 except that the material for forming each layer of the interlayer film was changed as shown in the following Table, the extrusion amount ratio of resin of each layer was changed, and the resin flow rate distribution of each layer was adjusted. Also, using the obtained interlayer film, laminated glass was prepared in the same manner as in Example 1.

(Example 7)

Preparation of interlayer film:

As materials for forming the first to fourth layers, the materials described in the following Table were used. These materials were coextruded by using a co-extruder. The pressure distribution at the time of joining the materials was adjusted. In this manner, an interlayer film having a four-layer structure (second layer/four layer/first layer/third layer) (interlayer film having the shape shown in Fig. 7) was obtained.

Preparation of laminated glass:

Laminated glass was prepared with the obtained interlayer film in the same manner as in Example 1.

(Examples 8 to 10)

An interlayer film having a four-layer structure (second layer/fourth layer/first layer/third layer) (interlayer film having the shape shown in Fig. 7) was obtained in the same manner as in Example 7 except that the material for forming each layer of the interlayer film was changed as shown in the following Table, the extrusion amount ratio of resin of each layer was changed, and the pressure distribution at the time of joining the materials was adjusted. Also, using the obtained interlayer film, laminated glass was prepared in the same manner as in Example 1.

(Example 11)

An interlayer film having a three-layer structure (second layer/first layer/third layer) (interlayer film having the shape shown in Fig. 8) was obtained in the same manner as in Example 1 except that the material for forming each layer of the interlayer film was changed as shown in the following Table, the extrusion amount ratio of resin of each layer was changed, and the resin flow rate distribution of each layer was adjusted. Also, using the obtained interlayer film, laminated glass was prepared in the same manner as in Example 1.

(Example 12)

An interlayer film having a three-layer structure (second layer/first layer/third layer) (interlayer film having the shape shown in Fig. 8) was obtained in the same manner as in Example 11 except that the material for forming each layer of the interlayer film was changed as shown in the following Table. Also, using the obtained interlayer film, laminated glass was prepared in the same manner as in Example 1.

(Examples 13 to 15)

An interlayer film having a four-layer structure (second layer/fourth layer/first layer/third layer) (interlayer film having the shape shown in Fig. 9) was obtained in the same manner as in Example 7 except that the material for forming each layer of the interlayer film was changed as shown in the following Table, the extrusion amount ratio of resin of each layer was changed, and the resin flow rate distribution of each layer was adjusted. Also, using the obtained interlayer film, laminated glass was prepared in the same manner as in Example 1.

(Example 16)

Preparation of interlayer film:

Materials for forming the first to fifth layers shown in the following Table were used. The fifth layer is a shading layer. These materials were coextruded by using a co-extruder. The pressure distribution at the time of joining the materials was adjusted. In this manner, an interlayer film having a shading region (interlayer film having the shape shown in Fig. 10) was obtained.

Preparation of laminated glass:

Laminated glass was prepared with the obtained interlayer film in the same manner as in Example 1.

(Examples 17, 27, 28)

Preparation of interlayer film:

Materials for forming the first to fifth layers shown in the following Table were used. These materials were coextruded by using a co-extruder. The pressure distribution at the time of joining the materials was adjusted. In this manner, an interlayer film having a five-layer structure (second layer/four layer/first layer/fifth layer/third layer) (interlayer film having the shape shown in Fig. 11) was obtained.

(Examples 18 to 26)

An interlayer film having a two-layer structure (second layer/first layer) was obtained in the same manner as in Example 3 except that the material for forming each layer of the interlayer film was changed as shown in the following Table, the extrusion amount ratio of resin of each layer was changed, and the resin flow rate distribution of each layer was adjusted. Also, using the obtained interlayer film, laminated glass was prepared in the same manner as in Example 1.

(Comparative Example 1)

A material for forming the first layer shown in the following Table was used. This material was coextruded by using an extruder. In this manner, a single-layered interlayer film (interlayer film having the shape shown in Fig. 16) was obtained. Also, using the obtained interlayer film, laminated glass was prepared in the same manner as in Example 1.

(Evaluation)

(1) Measurement of thickness of interlayer film

Thickness of the interlayer film was measured with a contact-type thickness meter ("TOF-4R" available from Yamabun Electronics Co., Ltd.) by the method described above.

(2) Measurement of wedge angle (θ) and partial wedge angle of interlayer film

From the obtained thickness profile of the interlayer film, a wedge angle (θ) of the interlayer film as a whole, and a partial wedge angle in a length of 400 mm in the direction connecting the one end and the other end of the interlayer film were calculated.

(3) Glass transition point of each layer of interlayer film

The glass transition point of each layer of the interlayer film was measured in the method described above.

(4) Measurement of visible light transmittance

Using a spectrophotometer ("U-4150" available from Hitachi High-Tech Corporation), visible light transmittance at a wavelength of 380 nm to 780 nm of the obtained laminated glass (laminated glass A) was measured according to the above-described method. From the obtained visible light transmittance, whether the relational formula of the formula (1-1) or the formula (1-2) was satisfied or not was confirmed. The visible light transmittance was measured at the maximum thickness position (X1) and the minimum thickness position (X2) within a region of 0.1X to 0.9X from the one end toward the other end of the interlayer film.

(5) Haze of laminated glass

In a dark room, the obtained laminated glass (laminated glass A) was irradiated with a strong light source. The degree of fogging of the laminated glass at the maximum thickness position (X1) of the interlayer film within a region of 0.1X to 0.9X from the one end toward the other end of the interlayer film and the degree of fogging of the laminated glass at the minimum thickness position (X2) of the interlayer film within the same region were evaluated by twenty examiners. To be more specific, haze of the laminated glass was evaluated by the number of examiners who determined that the laminated glass did not look fogging at the maximum thickness position (X1) of the interlayer film compared with the minimum thickness position (X2) of the interlayer film, of the twenty examiners.

[Criteria for judgement in haze of laminated glass]

A: Fifteen or more of the twenty examiners determined that the laminated glass did not look fogging.
B: Ten or more and fourteen or less of the twenty examiners determined that the laminated glass did not look fogging.
C: One or more and nine or less of the twenty examiners determined that the laminated glass did not look fogging.
D: Twenty of the twenty examiners determined that the laminated glass looked fogging.

(6) Color irregularities of laminated glass

Z was calculated by the following formula from the visible light transmittance (Tv1) of the laminated glass (laminated glass A) at the maximum thickness position (X1) of the interlayer film, and the visible light transmittance (Tv2) of the laminated glass (laminated glass A) at the minimum thickness position (X2) of the interlayer film. In Example 16, the visible light transmittance of the laminated glass (laminated glass A) at the maximum thickness position (XQ1) of the interlayer film was referred to as Tv1, and the visible light transmittance of the laminated glass (laminated glass A) at the minimum thickness position (XQ2) of the interlayer film was referred to as Tv2.

$$Z = (1 - Tv1/Tv2) \times 100$$

Color irregularities of laminated glass were evaluated according to the following criteria.

[Criteria for judgement in color irregularities of laminated glass]

A: Absolute value of Z is less than 4.
B: Absolute value of Z is 4 or more and less than 8.
C: Absolute value of Z is 8 or more and less than 10.
D: Absolute value of Z is 10 or more.

(7) Double images

Using a HUD evaluation device with which a virtual image is displayed 3 m away from the eyes of an observer through the laminated glass, double images of the laminated glass (laminated glass A) were evaluated. Specifically, by comparing the appearance of double images between the laminated glass, and the laminated glass for comparison, double images were evaluated according to the following criteria. The wedge angle of the interlayer film in the laminated glass for comparison, was adjusted to the same angle as the wedge angle of the interlayer film in the laminated glass. Also, the interlayer film in the laminated glass for comparison does not contain a coloring agent, and Tv of the laminated glass for comparison was adjusted to the same value as the value calculated by the formula (1-1B) of the laminated glass to be evaluated. Double images were evaluated by the number of examiners who determined that double images were ameliorated in the obtained laminated glass (laminated glass A) compared with the laminated glass for comparison, in twenty examiners.

[Criteria for judgment in double images]

A: In the twenty examiners, fifteen or more examiners determined that double images were suppressed compared with the laminated glass for comparison.
B: In the twenty examiners, ten or more and fourteen or less examiners determined that double images were suppressed compared with the laminated glass for comparison.

C: In the twenty examiners, one or more and nine or less examiners determined that double images were suppressed compared with the laminated glass for comparison.

Configurations of interlayer films and results are shown in the following Tables 6 to 35. Thickness profiles and visible light transmittance profiles of Examples 18 to 21 and Comparative Example 1 are shown in Tables 36 and 37, and the relationships between the coordinate and the visible light transmittance are shown in Fig. 18.

[Table 6]

|  |  | Example 1 | Example 2 |
|---|---|---|---|
| Sectional shape of interlayer film |  | Fig. 1 | Fig. 2 |
| Distance (X) between one end and other end of interlayer film | mm | 1250 | 1250 |
| Plane area of colored region in 100% of plane area of interlayer film | % | 100 | 100 |
| Maximum value of partial wedge angle of interlayer film (length 400 mm) | mrad | 0.144 | 0.144 |
| Wedge angle of interlayer film as a whole ($\theta$) | mrad | 0 | 0 |
| Thickness of interlayer film at minimum thickness position (X2) (Tmin) | mm | 0.76 | 0.71 |
| Coordinate of minimum thickness position (X2) | - | 0.1%, 0.9X | 0.5X |
| Thickness of interlayer film at maximum thickness position (X1) (Tmax) | mm | 0.832 | 0.76 |
| Coordinate of maximum thickness position (X1) | - | 0.5X | 0.1%, 0.9X |

[Table 7]

|  |  |  | Example 1 | Example 2 |
|---|---|---|---|---|
| Second layer (Surface layer) | Kind of material (kind of layer) | - | A | A |
|  | Glass transition point (Tg) | °C | 27 | 27 |
|  | Presence or absence of coloring agent other than heat shielding substance | - | - | - |
|  | Presence or absence of heat shielding substance | - | - | - |
|  | Minimum thickness | μm | 30 | 105 |
|  | Coordinate of minimum thickness position | - | 0.1%, 0.9X | 0.5X |
|  | Maximum thickness | μm | 66 | 130 |
|  | Coordinate of maximum thickness position | - | 0.5X | 0.1%, 0.9X |
| First layer (Intermediate layer) | Kind of material (kind of layer) | - | C | D |
|  | Glass transition point (Tg) | °C | 27 | 27 |
|  | Presence or absence of coloring agent other than heat shielding substance | - | ○ | ○ |
|  | Presence or absence of heat shielding substance | - | - | - |
|  | Minimum thickness | μm | 700 | 500 |
|  | Coordinate of minimum thickness position | - | 0.1X to 0.9X | 0.1X to 0.9X |
|  | Maximum thickness | μm | 700 | 500 |
|  | Coordinate of maximum thickness position | - | 0.1X to 0.9X | 0.1X to 0.9X |

(continued)

|  | | | Example 1 | Example 2 |
|---|---|---|---|---|
| Third layer (Surface layer) | Kind of material (kind of layer) | - | A | A |
| | Glass transition point (Tg) | °C | 27 | 27 |
| | Presence or absence of coloring agent other than heat shielding substance | - | - | - |
| | Presence or absence of heat shielding substance | - | - | - |
| | Minimum thickness | μm | 30 | 105 |
| | Coordinate of minimum thickness position | - | 0.1%, 0.9X | 0.5X |
| | Maximum thickness | μm | 66 | 130 |
| | Coordinate of maximum thickness position | - | 0.5X | 0.1%, 0.9X |

[Table 8]

|  | | Example 1 | Example 2 |
|---|---|---|---|
| Total thickness (1) of colored layer at minimum thickness position of interlayer film | μm | 700 | 500 |
| Total thickness (2) of colored layer at maximum thickness position of interlayer film | μm | 700 | 500 |
| Absolute value of difference between total thickness (1) and total thickness (2) | μm | 0 | 0 |
| Tv2 of laminated glass A at minimum thickness position (X2) | % | 75.2 | 75.4 |
| Tv1 of laminated glass A at maximum thickness position (X1) | % | 75.2 | 75.4 |
| ⊿Tv(=Tv2-Tv1) | Left-hand side of formula (1-1) | % | 0.0 | 0.0 |
| ⊿Tvideal | Right-hand side of formula (1-1) | % | 1.24 | 0.91 |
| Haze of laminated glass | | - | A | A |
| Color irregularities of laminated glass | | - | A | A |
| Double images | | - | A | A |

[Table 9]

|  | | Example 3 | Example 4 |
|---|---|---|---|
| Sectional shape of interlayer film | | Fig. 3 | Fig. 4 |
| Distance (X) between one end and other end of interlayer film | mm | 1250 | 1250 |
| Plane area of colored region in 100% of plane area of interlayer film | % | 100 | 100 |
| Maximum value of partial wedge angle of interlayer film (length 400 mm) | mrad | 0.1 | 0.3 |
| Wedge angle of interlayer film as a whole (θ) | mrad | 0.1 | 0.3 |
| Thickness of interlayer film at minimum thickness position (X2) (Tmin) | mm | 0.76 | 0.76 |
| Coordinate of minimum thickness position (X2) | - | 0.1X | 0.1X |
| Thickness of interlayer film at maximum thickness position (X1) (Tmax) | mm | 0.86 | 0.86 |
| Coordinate of maximum thickness position (X1) | - | 0.9X | 0.9X |

[Table 10]

|  |  |  |  | Example 3 | Example 4 |
|---|---|---|---|---|---|
| First layer (Surface layer) | | Kind of material (kind of layer) | - | E | F |
| | | Glass transition point (Tg) | °C | 27 | 27 |
| | | Presence or absence of coloring agent other than heat shielding substance | - | ○ | ○ |
| | | Presence or absence of heat shielding substance | - | - | - |
| | | Minimum thickness | μm | 456 | 419 |
| | | Coordinate of minimum thickness position | - | 0.1X | 0.9X |
| | | Maximum thickness | μm | 479 | 456 |
| | | Coordinate of maximum thickness position | - | 0.9X | 0.1X |
| Second layer (Surface layer) | | Kind of material (kind of layer) | - | A | A |
| | | Glass transition point (Tg) | °C | 27 | 27 |
| | | Presence or absence of coloring agent other than heat shielding substance | - | - | - |
| | | Presence or absence of heat shielding substance | - | - | - |
| | | Minimum thickness | μm | 304 | 304 |
| | | Coordinate of minimum thickness position | - | 0.1X | 0.1X |
| | | Maximum thickness | μm | 359 | 494 |
| | | Coordinate of maximum thickness position | - | 0.9X | 0.9X |

[Table 11]

|  |  | Example 3 | Example 4 |
|---|---|---|---|
| Total thickness (1) of colored layer at minimum thickness position of interlayer film | μm | 456 | 456 |
| Total thickness (2) of colored layer at maximum thickness position of interlayer film | μm | 479 | 419 |
| Absolute value of difference between total thickness (1) and total thickness (2) | μm | 23 | 37 |
| Tv2 of laminated glass A at minimum thickness position (X2) | % | 78.6 | 76.5 |
| Tv1 of laminated glass A at maximum thickness position (X1) | % | 78.1 | 77.4 |
| ⊿Tv(=Tv2-Tv1) | Left-hand side of formula (1-1) | % | 0.5 | -0.9 |
| ⊿Tvideal | Right-hand side of formula (1-1) | % | 1.34 | 1.57 |
| Haze of laminated glass | | - | A | A |
| Color irregularities of laminated glass | | - | A | A |
| Double images | | - | A | A |

[Table 12]

|  |  | Example 5 | Example 6 |
|---|---|---|---|
| Sectional shape of interlayer film | | Fig. 5 | Fig. 6 |
| Distance (X) between one end and other end of interlayer film | mm | 1250 | 1250 |
| Plane area of colored region in 100% of plane area of interlayer film | % | 100 | 100 |
| Maximum value of partial wedge angle of interlayer film (length 400 mm) | mrad | 0.36 | 0.36 |
| Wedge angle of interlayer film as a whole (θ) | mrad | 0.3 | 0.3 |

(continued)

|  |  | Example 5 | Example 6 |
|---|---|---|---|
| Sectional shape of interlayer film |  | Fig. 5 | Fig. 6 |
| Thickness of interlayer film at minimum thickness position (X2) (Tmin) | mm | 0.76 | 0.76 |
| Coordinate of minimum thickness position (X2) | - | 0.1X | 0.1X |
| Thickness of interlayer film at maximum thickness position (X1) (Tmax) | mm | 1.06 | 1.06 |
| Coordinate of maximum thickness position (X1) | - | 0.9X | 0.9X |

[Table 13]

|  |  |  | Example 5 | Example 6 |
|---|---|---|---|---|
| Second layer (Surface layer) | Kind of material (kind of layer) | - | A | A |
|  | Glass transition point (Tg) | °C | 27 | 27 |
|  | Presence or absence of coloring agent other than heat shielding substance | - | - | - |
|  | Presence or absence of heat shielding substance | - | - | - |
|  | Minimum thickness | μm | 80 | 130 |
|  | Coordinate of minimum thickness position | - | 0.1X | 0.1X |
|  | Maximum thickness | μm | 230 | 280 |
|  | Coordinate of maximum thickness position | - | 0.9X | 0.9X |
| First layer (Intermediate layer) | Kind of material (kind of layer) | - | G | H |
|  | Glass transition point (Tg) | °C | 27 | 27 |
|  | Presence or absence of coloring agent other than heat shielding substance | - | ○ | ○ |
|  | Presence or absence of heat shielding substance | - | - | - |
|  | Minimum thickness | μm | 600 | 500 |
|  | Coordinate of minimum thickness position | - | 0.1X to 0.9X | 0.1X to 0.9X |
|  | Maximum thickness | μm | 600 | 500 |
|  | Coordinate of maximum thickness position | - | 0.1X to 0.9X | 0.1X to 0.9X |
| Third layer (Surface layer) | Kind of material (kind of layer) | - | A | A |
|  | Glass transition point (Tg) | °C | 27 | 27 |
|  | Presence or absence of coloring agent other than heat shielding substance | - | - | - |
|  | Presence or absence of heat shielding substance | - | - | - |
|  | Minimum thickness | μm | 80 | 130 |
|  | Coordinate of minimum thickness position | - | 0.1X | 0.1X |
|  | Maximum thickness | μm | 230 | 280 |
|  | Coordinate of maximum thickness position | - | 0.9X | 0.9X |

[Table 14]

|  |  | Example 5 | Example 6 |
|---|---|---|---|
| Total thickness (1) of colored layer at minimum thickness position of interlayer film | μm | 160 | 130 |

(continued)

|  | | Example | 5 Example 6 |
|---|---|---|---|
| Total thickness (2) of colored layer at maximum thickness position of interlayer film | μm | 460 | 280 |
| Absolute value of difference between total thickness (1) and total thickness (2) | μm | 300 | 150 |
| Tv2 of laminated glass A at minimum thickness position (X2) | % | 78.3 | 77.7 |
| Tv1 of laminated glass A at maximum thickness position (X1) | % | 78.3 | 77.7 |
| ⊿Tv(=Tv2-Tv1) | Left-hand side of formula (1-1) | % | 0.0 | 0.0 |
| ⊿Tvideal | Right-hand side of formula (1-1) | % | 4.06 | 4.25 |
| Haze of laminated glass | - | A | A |
| Color irregularities of laminated glass | - | A | A |
| Double images | - | A | A |

[Table 15]

|  | | Example 7 | Example 8 | Example 9 | Example 10 |
|---|---|---|---|---|---|
| Sectional shape of interlayer film | | Fig. 7 | Fig. 7 | Fig. 7 | Fig. 7 |
| Distance (X) between one end and other end of interlayer film | mm | 1250 | 1250 | 1250 | 1250 |
| Plane area of colored region in 100% of plane area of interlayer film | | 100 | 100 | 100 | 100 |
| Maximum value of partial wedge angle of interlayer film (length 400 mm) | mrad | 0.5 | 0.5 | 0.5 | 0.5 |
| Wedge angle of interlayer film as a whole (θ) | mrad | 0.5 | 0.5 | 0.5 | 0.5 |
| Thickness of interlayer film at minimum thickness position (X2) (Tmin) | mm | 0.76 | 0.76 | 0.76 | 0.76 |
| Coordinate of minimum thickness position (X2) | - | 0.1X | 0.1X | 0.1X | 0.1X |
| Thickness of interlayer film at maximum thickness position (X1) (Tmax) | mm | 1.26 | 1.26 | 1.26 | 1.26 |
| Coordinate of maximum thickness position (X1) | - | 0.9X | 0.9X | 0.9X | 0.9X |

[Table 16]

| | | | Example 7 | Example 8 | Example 9 | Example 10 |
|---|---|---|---|---|---|---|
| Third layer (Surface layer) | Kind of material (kind of layer) | - | I | K | M | O |
| | Glass transition point (Tg) | °C | 27 | 27 | 27 | 27 |
| | Presence or absence of coloring agent other than heat shielding substance | - | ○ | ○ | ○ | ○ |
| | Presence or absence of heat shielding substance | - | - | - | - | - |
| | Minimum thickness | μm | 38 | 152 | 38 | 152 |
| | Coordinate of minimum thickness position | - | 0.1X to 0.9X | 0.1X to 0.9X | 0.1X to 0.9X | 0.1X to 0.9X |
| | Maximum thickness | μm | 38 | 152 | 38 | 152 |
| | Coordinate of maximum thickness position | - | 0.1X to 0.9X | 0.1X to 0.9X | 0.1X to 0.9X | 0.1X to 0.9X |
| First layer (Intermediate layer) | Kind of material (kind of layer) | - | A | A | A | A |
| | Glass transition point (Tg) | °C | 27 | 27 | 27 | 27 |
| | Presence or absence of coloring agent other than heat shielding substance | - | - | - | - | - |
| | Presence or absence of heat shielding substance | - | - | - | - | - |
| | Minimum thickness | μm | 190 | 181 | 190 | 181 |
| | Coordinate of minimum thickness position | - | 0.1X | 0.1X | 0.1X | 0.1X |
| | Maximum thickness | μm | 479 | 430 | 479 | 430 |
| | Coordinate of maximum thickness position | - | 0.9X | 0.9X | 0.9X | 0.9X |
| Fourth layer (Intermediate layer) | Kind of material (kind of layer) | - | B | B | B | B |
| | Glass transition point (Tg) | °C | -4 | -4 | -4 | -4 |
| | Presence or absence of coloring agent other than heat shielding substance | - | - | - | - | - |
| | Presence or absence of heat shielding substance | - | - | - | - | - |
| | Minimum thickness | μm | 95 | 95 | 95 | 95 |
| | Coordinate of minimum thickness position | - | 0.1X to 0.9X | 0.1X to 0.9X | 0.1X to 0.9X | 0.1X to 0.9X |
| | Maximum thickness | μm | 95 | 95 | 95 | 95 |
| | Coordinate of maximum thickness position | - | 0.1X to 0.9X | 0.1X to 0.9X | 0.1X to 0.9X | 0.1X to 0.9X |

(continued)

|  |  |  | Example 7 | Example 8 | Example 9 | Example 10 |
|---|---|---|---|---|---|---|
| Second layer (Surface layer) | Kind of material (kind of layer) | - | A | A | A | A |
| | Glass transition point (Tg) | °C | 27 | 27 | 27 | 27 |
| | Presence or absence of coloring agent other than heat shielding substance | - | - | - | - | - |
| | Presence or absence of heat shielding substance | - | - | - | - | - |
| | Minimum thickness | μm | 437 | 332 | 437 | 332 |
| | Coordinate of minimum thickness position | - | 0.1X | 0.1X | 0.1X | 0.1X |
| | Maximum thickness | μm | 1086 | 583 | 1086 | 583 |
| | Coordinate of maximum thickness position | - | 0.9X | 0.9X | 0.9X | 0.9X |

[Table 17]

|  |  |  | Example 7 | Example 8 | Example 9 | Example 10 |
|---|---|---|---|---|---|---|
| Total thickness (1) of colored layer at minimum thickness position of interlayer film | | μm | 38 | 152 | 38 | 152 |
| Total thickness (2) of colored layer at maximum thickness position of interlayer film | | μm | 38 | 152 | 38 | 152 |
| Absolute value of difference between total thickness (1) and total thickness (2) | | μm | 0 | 0 | 0 | 0 |
| Tv2 of laminated glass A at minimum thickness position (X2) | | % | 75.8 | 75.8 | 83.1 | 83.1 |
| Tv1 of laminated glass A at maximum thickness position (X1) | | % | 75.8 | 75.8 | 83.1 | 83.1 |
| Tv(=Tv2-Tv1) | Left-hand side of formula (1-1) | % | 0.0 | 0.0 | 0.0 | 0.0 |
| Tvideal | Right-hand side of formula (1-1) | % | 7.90 | 7.90 | 4.02 | 4.02 |
| Haze of laminated glass | | - | C | A | B | A |
| Color irregularities of laminated glass | | - | A | A | A | A |
| Double images | | - | A | A | B | B |

[Table 18]

|  |  | Example 11 | Example 12 |
|---|---|---|---|
| Sectional shape of interlayer film | | Fig. 8 | Fig. 8 |
| Distance (X) between one end and other end of interlayer film | mm | 1250 | 1250 |
| Plane area of colored region in 100% of plane area of interlayer film | | 100 | 100 |
| Maximum value of partial wedge angle of interlayer film (length 400 mm) | mrad | 0.5 | 0.5 |
| Wedge angle of interlayer film as a whole (θ) | mrad | 0.5 | 0.5 |
| Thickness of interlayer film at minimum thickness position (X2) (Tmin) | mm | 0.76 | 0.76 |

(continued)

|  |  | Example 11 | Example 12 |
|---|---|---|---|
| Sectional shape of interlayer film | | Fig. 8 | Fig. 8 |
| Coordinate of minimum thickness position (X2) | - | 0.1X | 0.1X |
| Thickness of interlayer film at maximum thickness position (X1) (Tmax) | mm | 1.26 | 1.26 |
| Coordinate of maximum thickness position (X1) | - | 0.9X | 0.9X |

[Table 19]

|  |  |  | Example 11 | Example 12 |
|---|---|---|---|---|
| Second layer (Surface layer) | Kind of material (kind of layer) | - | A | A |
| | Glass transition point (Tg) | °C | 27 | 27 |
| | Presence or absence of coloring agent other than heat shielding substance | - | - | - |
| | Presence or absence of heat shielding substance | - | - | - |
| | Minimum thickness | μm | 333 | 333 |
| | Coordinate of minimum thickness position | - | 0.1X | 0.1X |
| | Maximum thickness | μm | 583 | 583 |
| | Coordinate of maximum thickness position | - | 0.9X | 0.9X |
| First layer (Intermediate layer) | Kind of material (kind of layer) | - | J | N |
| | Glass transition point (Tg) | °C | -4 | -4 |
| | Presence or absence of coloring agent other than heat shielding substance | - | ○ | ○ |
| | Presence or absence of heat shielding substance | - | - | - |
| | Minimum thickness | μm | 95 | 95 |
| | Coordinate of minimum thickness position | - | 0.1X to 0.9X | 0.1X to 0.9X |
| | Maximum thickness | μm | 95 | 95 |
| | Coordinate of maximum thickness position | - | 0.1X to 0.9X | 0.1X to 0.9X |
| Third layer (Surface layer) | Kind of material (kind of layer) | - | A | A |
| | Glass transition point (Tg) | °C | 27 | 27 |
| | Presence or absence of coloring agent other than heat shielding substance | - | - | - |
| | Presence or absence of heat shielding substance | - | - | - |
| | Minimum thickness | μm | 333 | 333 |
| | Coordinate of minimum thickness position | - | 0.1X | 0.1X |
| | Maximum thickness | μm | 583 | 582.5 |
| | Coordinate of maximum thickness position | - | 0.9X | 0.9X |

[Table 20]

|  |  | Example 11 | Example 12 |
|---|---|---|---|
| Total thickness (1) of colored layer at minimum thickness position of interlayer film | μm | 95 | 95 |

(continued)

|  |  | Example 11 | Example 12 |
|---|---|---|---|
| Total thickness (2) of colored layer at maximum thickness position of interlayer film | μm | 95 | 95 |
| Absolute value of difference between total thickness (1) and total thickness (2) | μm | 0 | 0 |
| Tv2 of laminated glass A at minimum thickness position (X2) | % | 75.8 | 83.1 |
| Tv1 of laminated glass A at maximum thickness position (X1) | % | 75.8 | 83.1 |
| ⊿Tv(=Tv2-Tv1) | Left-hand side of formula (1-1) | % | 0.0 | 0.0 |
| ⊿Tvideal | Right-hand side of formula (1-1) | % | 7.90 | 4.02 |
| Haze of laminated glass | - | B | A |
| Color irregularities of laminated glass | - | A | A |
| Double images | - | A | B |

[Table 21]

|  |  | Example 13 | Example 14 | Example 15 |
|---|---|---|---|---|
| Sectional shape of interlayer film |  | Fig. 9 | Fig. 9 | Fig. 9 |
| Distance (X) between one end and other end of interlayer film | mm | 1250 | 1250 | 1250 |
| Plane area of colored region in 100% of plane area of interlayer film | % | 100 | 100 | 100 |
| Maximum value of partial wedge angle of interlayer film (length 400 mm) | mrad | 0.5 | 0.5 | 0.5 |
| Wedge angle of interlayer film as a whole (θ) | mrad | 0.5 | 0.5 | 0.5 |
| Thickness of interlayer film at minimum thickness position (X2) (Tmin) | mm | 0.76 | 0.76 | 0.76 |
| Coordinate of minimum thickness position (X2) | - | 0.1X | 0.1X | 0.1X |
| Thickness of interlayer film at maximum thickness position (X1) (Tmax) | mm | 1.26 | 1.26 | 1.26 |
| Coordinate of maximum thickness position (X1) | - | 0.9X | 0.9X | 0.9X |

[Table 22]

|  |  |  | Example 13 | Example 14 | Example 15 |
|---|---|---|---|---|---|
| Second layer (Surface layer) | Kind of material (kind of layer) | - | A | A | A |
|  | Glass transition point (Tg) | °C | 27 | 27 | 27 |
|  | Presence or absence of coloring agent other than heat shielding substance | - | - | - | - |
|  | Presence or absence of heat shielding substance | - | - | - | - |
|  | Minimum thickness | μm | 333 | 333 | 333 |
|  | Coordinate of minimum thickness position | - | 0.1X | 0.1X | 0.1X |
|  | Maximum thickness | μm | 582 | 582 | 582 |
|  | Coordinate of maximum thickness position | - | 0.9X | 0.9X | 0.9X |

(continued)

| | | | | Example 13 | Example 14 | Example 15 |
|---|---|---|---|---|---|---|
| Fourth layer (Intermediate layer) | Kind of material (kind of layer) | - | B | B | B |
| | Glass transition point (Tg) | °C | -4 | -4 | -4 |
| | Presence or absence of coloring agent other than heat shielding substance | - | - | - | - |
| | Presence or absence of heat shielding substance | - | - | - | - |
| | Minimum thickness | μm | 95 | 95 | 95 |
| | Coordinate of minimum thickness position | - | 0.1X to 0.9X | 0.1X to 0.9X | 0.1X to 0.9X |
| | Maximum thickness | μm | 95 | 95 | 95 |
| | Coordinate of maximum thickness position | - | 0.1X to 0.9X | 0.1X to 0.9X | 0.1X to 0.9X |
| First layer (Intermediate layer) | Kind of material (kind of layer) | - | A | A | A |
| | Glass transition point (Tg) | °C | 27 | 27 | 27 |
| | Presence or absence of coloring agent other than heat shielding substance | - | - | - | - |
| | Presence or absence of heat shielding substance | - | - | - | - |
| | Minimum thickness | μm | 29 | 29 | 29 |
| | Coordinate of minimum thickness position | - | 0.1X | 0.1X | 0.1X |
| | Maximum thickness | μm | 278 | 278 | 278 |
| | Coordinate of maximum thickness position | - | 0.9X | 0.9X | 0.9X |
| Third layer (Surface layer) | Kind of material (kind of layer) | - | L | P | Q |
| | Glass transition point (Tg) | °C | 27 | 27 | 27 |
| | Presence or absence of coloring agent other than heat shielding substance | - | ○ | ○ | ○ |
| | Presence or absence of heat shielding substance | - | - | - | ○ |
| | Minimum thickness | μm | 304 | 304 | 304 |
| | Coordinate of minimum thickness position | - | 0.1X | 0.1X | 0.1X |
| | Maximum thickness | μm | 305 | 305 | 305 |
| | Coordinate of maximum thickness position | - | 0.9X | 0.9X | 0.9X |

[Table 23]

| | | Example | 13 Example 14 | Example 15 |
|---|---|---|---|---|
| Total thickness (1) of colored layer at minimum thickness position of interlayer film | μm | 333 | 333 | 333 |
| Total thickness (2) of colored layer at maximum thickness position of interlayer film | μm | 582 | 582 | 582 |
| Absolute value of difference between total thickness (1) and total thickness (2) | μm | 249 | 249 | 249 |
| Tv2 of laminated glass A at minimum thickness position (X2) | % | 75.8 | 83.1 | 83.1 |
| Tv1 of laminated glass A at maximum thickness position (X1) | % | 75.8 | 83.1 | 83.1 |

(continued)

|  |  |  | Example | 13 Example 14 | Example 15 |
|---|---|---|---|---|---|
| ⊿Tv(=Tv2-Tv1) | Left-hand side of formula (1-1) | % | 0.0 | 0.0 | 0.0 |
| ⊿Tvideal | Right-hand side of formula (1-1) | % | 7.90 | 4.02 | 4.02 |
| Haze of laminated glass | | - | A | A | A |
| Color irregularities of laminated glass | | - | A | A | A |
| Double images | | - | A | B | B |

[Table 24]

|  |  | Example 16 |
|---|---|---|
| Sectional shape of interlayer film | | Fig. 10 |
| Distance (X) between one end and other end of interlayer film | mm | 1250 |
| Maximum value of partial wedge angle of interlayer film (length 400 mm) | mrad | 0.5 |
| Wedge angle of interlayer film as a whole (θ) | mrad | 0.5 |
| Thickness of interlayer film at minimum thickness position (XQ2) (Tmin) | mm | 0.76 |
| Coordinate of minimum thickness position (XQ2) | - | 0.1X |
| Thickness of interlayer film at maximum thickness position (XQ1) (Tmax) | mm | 1.01 |
| Coordinate of maximum thickness position (XQ1) | - | 0.5X |

[Table 25]

|  |  |  | Example 16 |
|---|---|---|---|
| Third layer (Surface layer) | Kind of material (kind of layer) | - | R |
| | Glass transition point (Tg) | °C | 27 |
| | Presence or absence of coloring agent other than heat shielding substance | - | ○ |
| | Presence or absence of heat shielding substance | - | - |
| | Minimum thickness | μm | 304 |
| | Coordinate of minimum thickness position | - | 0.1X |
| | Maximum thickness | μm | 360 |
| | Coordinate of maximum thickness position | - | 0.5X |
| First layer (Intermediate layer) | Kind of material (kind of layer) | - | A |
| | Glass transition point (Tg) | °C | 27 |
| | Presence or absence of coloring agent other than heat shielding substance | - | - |
| | Presence or absence of heat shielding substance | - | - |
| | Minimum thickness | μm | 29 |
| | Coordinate of minimum thickness position | - | 0.1X |
| | Maximum thickness | μm | 150 |
| | Coordinate of maximum thickness position | - | 0.5X |

(continued)

| | | | | Example 16 |
|---|---|---|---|---|
| Fourth layer (Intermediate layer) | Kind of material (kind of layer) | | - | B |
| | Glass transition point (Tg) | | °C | -4 |
| | Presence or absence of coloring agent other than heat shielding substance | | - | - |
| | Presence or absence of heat shielding substance | | - | - |
| | Minimum thickness | | μm | 95 |
| | Coordinate of minimum thickness position | | - | 0.1X |
| | Maximum thickness | | μm | 95 |
| | Coordinate of maximum thickness position | | - | 0.5X |
| Second layer (Surface layer) | Kind of material (kind of layer) | | - | A |
| | Glass transition point (Tg) | | °C | 27 |
| | Presence or absence of coloring agent other than heat shielding substance | | - | - |
| | Presence or absence of heat shielding substance | | - | - |
| | Minimum thickness | | μm | 333 |
| | Coordinate of minimum thickness position | | - | 0.1X |
| | Maximum thickness | | μm | 399 |
| | Coordinate of maximum thickness position | | - | 0.5X |
| Fifth layer (Shading layer) | Kind of composition | | - | X |
| | Coordinate | | - | 0.6X to 1.0X |

[Table 26]

| | | Example 16 |
|---|---|---|
| Total thickness (1) of colored layer at minimum thickness position of interlayer film | μm | 304 |
| Total thickness (2) of colored layer at maximum thickness position of interlayer film | μm | 360 |
| Absolute value of difference between total thickness (1) and total thickness (2) | μm | 1 |
| Tv2 of laminated glass A at minimum thickness position (XQ2) | % | 83.1 |
| Tv1 of laminated glass A at maximum thickness position (XQ1) | % | 82.1 |
| ⊿Tv(=Tv2-Tv1) | Left-hand side of formula (1-2) | % | 1.0 |
| ⊿Tvideal | Right-hand side of formula (1-2) | % | 2.03 |
| Haze of laminated glass | | - | A |
| Color irregularities of laminated glass | | - | A |
| Double images | | - | A |

[Table 27]

| | | Example 17 | Example 27 | Example 28 |
|---|---|---|---|---|
| Sectional shape of interlayer film | | Fig. 11 | Fig. 11 | Fig. 11 |
| Distance (X) between one end and other end of interlayer film | mm | 1250 | 1250 | 1250 |
| Plane area of colored region in 100% of plane area of interlayer film | % | 100 | 100 | 100 |

(continued)

| | | Example 17 | Example 27 | Example 28 |
|---|---|---|---|---|
| Sectional shape of interlayer film | | Fig. 11 | Fig. 11 | Fig. 11 |
| Maximum value of partial wedge angle of interlayer film (length 400 mm) | mrad | 0.5 | 0.5 | 0.5 |
| Wedge angle of interlayer film as a whole ($\theta$) | mrad | 0.5 | 0.5 | 0.5 |
| Thickness of interlayer film at minimum thickness position (X2) (Tmin) | mm | 0.76 | 0.76 | 0.76 |
| Coordinate of minimum thickness position (X2) | - | 0.1X | 0.1X | 0.1X |
| Thickness of interlayer film at maximum thickness position (X1) (Tmax) | mm | 1.26 | 1.26 | 1.26 |
| Coordinate of maximum thickness position (X1) | - | 0.9X | 0.9X | 0.9X |

[Table 28]

| | | | Example 17 | Example 27 | Example 28 |
|---|---|---|---|---|---|
| Second layer (Surface layer) | Kind of material (kind of layer) | - | S | Y | Z |
| | Glass transition point (Tg) | °C | 27 | 27 | 27 |
| | Presence or absence of coloring agent other than heat shielding substance | - | ○ | ○ | ○ |
| | Presence or absence of heat shielding substance | - | - | - | - |
| | Minimum thickness | μm | 289 | 289 | 289 |
| | Coordinate of minimum thickness position | - | 0.1X to 0.9x | 0.1X to 0.9x | 0.1X to 0.9X |
| | Maximum thickness | μm | 289 | 289 | 289 |
| | Coordinate of maximum thickness position | - | 0.1X to 0.9x | 0.1X to 0.9x | 0.1X to 0.9x |
| Fourth layer (Intermediate layer) | Kind of material (kind of layer) | - | B | B | B |
| | Glass transition point (Tg) | °C | -4 | -4 | -4 |
| | Presence or absence of coloring agent other than heat shielding substance | - | - | - | - |
| | Presence or absence of heat shielding substance | - | - | - | - |
| | Minimum thickness | μm | 48 | 48 | 48 |
| | Coordinate of minimum thickness position | - | 0.1X | 0.1X | 0.1X |
| | Maximum thickness | μm | 79 | 79 | 79 |
| | Coordinate of maximum thickness position | - | 0.9x | 0.9X | 0.9x |

(continued)

| | | | | Example 17 | Example 27 | Example 28 |
|---|---|---|---|---|---|---|
| First layer (Intermediate layer) | Kind of material (kind of layer) | - | A | A | A |
| | Glass transition point (Tg) | °C | 27 | 27 | 27 |
| | Presence or absence of coloring agent other than heat shielding substance | - | - | - | - |
| | Presence or absence of heat shielding substance | - | - | - | - |
| | Minimum thickness | μm | 87 | 87 | 87 |
| | Coordinate of minimum thickness position | - | 0.1X | 0.1X | 0.1X |
| | Maximum thickness | μm | 524 | 524 | 524 |
| | Coordinate of maximum thickness position | - | 0.9x | 0.9X | 0.9x |
| Fifth layer (Intermediate layer) | Kind of material (kind of layer) | - | B | B | B |
| | Glass transition point (Tg) | °C | -4 | -4 | -4 |
| | Presence or absence of coloring agent other than heat shielding substance | - | - | - | - |
| | Presence or absence of heat shielding substance | - | - | - | - |
| | Minimum thickness | μm | 48 | 48 | 48 |
| | Coordinate of minimum thickness position | - | 0.1X | 0.1x | 0.1X |
| | Maximum thickness | μm | 79 | 79 | 79 |
| | Coordinate of maximum thickness position | - | 0.9X | 0.9X | 0.9X |
| Third layer (Surface layer) | Kind of material (kind of layer) | - | S | Y | Z |
| | Glass transition point (Tg) | °C | 27 | 27 | 27 |
| | Presence or absence of coloring agent other than heat shielding substance | - | ○ | ○ | ○ |
| | Presence or absence of heat shielding substance | - | - | - | - |
| | Minimum thickness | μm | 289 | 289 | 289 |
| | Coordinate of minimum thickness position | - | 0.1X to 0.9X | 0.1X to 0.9X | 0.1X to 0.9X |
| | Maximum thickness | μm | 289 | 289 | 289 |
| | Coordinate of maximum thickness position | - | 0.1X to 0.9X | 0.1X to 0.9X | 0.1X to 0.9X |

[Table 29]

| | | Example 17 | Example 27 | Example 28 |
|---|---|---|---|---|
| Total thickness (1) of colored layer at minimum thickness position of interlayer film | μm | 578 | 578 | 578 |
| Total thickness (2) of colored layer at maximum thickness position of interlayer film | μm | 578 | 578 | 578 |
| Absolute value of difference between total thickness (1) and total thickness (2) | μm | 0 | 0 | 0 |
| Tv2 of laminated glass A at minimum thickness position (X2) | % | 80.4 | 84.9 | 81.1 |
| Tv1 of laminated glass A at maximum thickness position (X1) | % | 80.4 | 84.9 | 81.1 |

(continued)

|  |  |  | Example 17 | Example 27 | Example 28 |
|---|---|---|---|---|---|
| ⊿Tv(=Tv2-Tv1) | Left-hand side of formula (1-1) | % | 0.0 | 0.0 | 0.0 |
| ⊿Tvideal | Right-hand side of formula (1-1) | % | 5.53 | 2.96 | 5.15 |
| Haze of laminated glass | | - | A | A | A |
| Color irregularities of laminated glass | | - | A | A | A |
| Double images | | - | A | B | A |

[Table 30]

|  |  | Example 18 | Example 19 | Example 20 | Example 21 | Comparative Example 1 |
|---|---|---|---|---|---|---|
| Sectional shape of interlayer film | | Fig. 12 | Fig. 13 | Fig. 14 | Fig. 15 | Fig. 16 |
| Distance (X) between one end and other end of interlayer film | mm | 1250 | 1250 | 1250 | 1250 | 1250 |
| Plane area of colored region in 100% of plane area of interlayer film | % | 100 | 100 | 100 | 100 | 100 |
| Maximum value of partial wedge angle of interlayer film (length 400 mm) | mrad | 0.9 | 0.9 | 0.9 | 0.9 | 0.9 |
| Wedge angle of interlayer film as a whole (θ) | mrad | 0.9 | 0.9 | 0.9 | 0.9 | 0.9 |
| Thickness of interlayer film at minimum thickness position (X2) (Tmin) | mm | 0.76 | 0.76 | 0.76 | 0.76 | 0.76 |
| Coordinate of minimum thickness position (X2) | - | 0.1X | 0.1X | 0.1X | 0.1X | 0.1X |
| Thickness of interlayer film at maximum thickness position (X1) (Tmax) | mm | 1.66 | 1.66 | 1.66 | 1.66 | 1.66 |
| Coordinate of maximum thickness position (X1) | - | 0.9X | 0.9X | 0.9X | 0.9X | 0.9X |

[Table 31]

|  |  |  |  | Example 18 | Example 19 | Example 20 | Example 21 | Comparative Example 1 |
|---|---|---|---|---|---|---|---|---|
| First layer (Surface layer) | Kind of material (kind of layer) | - | T | T | T | T | W |
| | Glass transition point (Tg) | °C | 27 | 27 | 27 | 27 | 27 |
| | Presence or absence of coloring agent other than heat shielding substance | - | ○ | ○ | ○ | ○ | ○ |
| | Presence or absence of heat shielding substance | - | - | - | - | - | - |
| | Minimum thickness | μm | 479 | 425 | 479 | 422 | 760 |
| | Coordinate of minimum thickness position | - | 0.1X | 0.9X | 0.1X to 0.9X | 0.4X | 0.1X |
| | Maximum thickness | μm | 563 | 538 | 479 | 530 | 1660 |
| | Coordinate of maximum thickness position | - | 0.5X | 0.3X | 0.1X to 0.9X | 0.9X | 0.9X |
| Second layer (Surface layer) | Kind of material (kind of layer) | - | A | A | A | A | - |
| | Glass transition point (Tg) | °C | 27 | 27 | 27 | 27 | - |
| | Presence or absence of coloring agent other than heat shielding substance | - | - | - | - | - | - |
| | Presence or absence of heat shielding substance | - | - | - | - | - | - |
| | Minimum thickness | μm | 281 | 281 | 281 | 281 | - |
| | Coordinate of minimum thickness position | - | 0.1X | 0.1X | 0.1X | 0.1X | - |
| | Maximum thickness | μm | 1163 | 1235 | 1181 | 1130 | - |
| | Coordinate of maximum thickness position | - | 0.9X | 0.9X | 0.9X | 0.9X | - |

[Table 32]

|  |  | Example 18 | Example 19 | Example 20 | Example 21 | Comparative Example 1 |
|---|---|---|---|---|---|---|
| Total thickness (1) of colored layer at minimum thickness position of inter-layer film | μm | 479 | 479 | 479 | 479 | 760 |
| Total thickness (2) of colored layer at maximum thickness position of inter-layer film | μm | 497 | 425 | 479 | 530 | 1660 |
| Absolute value of difference between total thickness (1) and total thickness (2) | μm | 18 | 54 | 0 | 51 | 900 |
| Tv2 of laminated glass A at minimum thickness position (X2) | % | 80.0 | 80.0 | 80.0 | 80.0 | 80.0 |
| Tv1 of laminated glass A at maximum thickness position (X1) | % | 79.7 | 80.9 | 80.0 | 79.1 | 69.8 |

(continued)

|  |  |  | Example 18 | Example 19 | Example 20 | Example 21 | Comparative Example 1 |
|---|---|---|---|---|---|---|---|
| ⊿Tv(=Tv2-Tv1) | Left-hand side of formula (1-1) | % | 0.3 | -0.9 | 0.0 | 0.9 | 10.2 |
| ⊿Tvideal | Right-hand side of formula (1-1) | % | 10.06 | 10.06 | 10.06 | 10.06 | 10.06 |
| Haze of laminated glass |  | - | A | A | A | A | D |
| Color irregularities of laminated glass |  | - | A | A | A | A | D |
| Double images |  | - | A | A | A | A | - |

[Table 33]

|  |  | Example 22 | Example 23 | Example 24 | Example 25 | Example 26 |
|---|---|---|---|---|---|---|
| Sectional shape of interlayer film |  | Fig. 3 | Fig. 3 | Fig. 3 | Fig. 3 | Fig. 3 |
| Distance (X) between one end and other end of interlayer film | mm | 1250 | 1250 | 1250 | 1250 | 1250 |
| Plane area of colored region in 100% of plane area of interlayer film | % | 100 | 100 | 100 | 100 | 100 |
| Maximum value of partial wedge angle of interlayer film (length 400 mm) | mrad | 0.9 | 0.9 | 0.9 | 0.9 | 0.9 |
| Wedge angle of interlayer film as a whole ($\theta$) | mrad | 0.9 | 0.9 | 0.9 | 0.9 | 0.9 |
| Thickness of interlayer film at minimum thickness position (X2) (Tmin) | mm | 0.76 | 0.76 | 0.76 | 0.76 | 0.76 |
| Coordinate of minimum thickness position (X2) | - | 0.1X | 0.1X | 0.1X | 0.1X | 0.1X |
| Thickness of interlayer film at maximum thickness position (X1) (Tmax) | mm | 1.66 | 1.66 | 1.66 | 1.66 | 1.66 |
| Coordinate of maximum thickness position (X1) | - | 0.9X | 0.9X | 0.9X | 0.9X | 0.9X |

[Table 34]

|  |  |  | Example 22 | Example 23 | Example 24 | Example 25 | Example 26 |
|---|---|---|---|---|---|---|---|
| First layer (Surface layer) | Kind of composition | - | U | U | U | U | V |
|  | Glass transition point (Tg) | °C | 27 | 27 | 27 | 27 | 27 |
|  | Presence or absence of coloring agent | - | ○ | ○ | ○ | ○ | ○ |
|  | Presence or absence of heat shielding substance | - | - | - | - | - | - |
|  | Minimum thickness | μm | 500 | 500 | 500 | 500 | 500 |
|  | Coordinate of minimum thickness position | - | 0.1X | 0.1X | 0.1X | 0.1X | 0.1X |
|  | Maximum thickness | μm | 922 | 720 | 619 | 547 | 547 |
|  | Coordinate of maximum thickness position | - | 0.9X | 0.9X | 0.9X | 0.9X | 0.9X |
| Second layer (Surface layer) | Kind of composition | - | A | A | A | A | A |
|  | Glass transition point (Tg) | °C | 27 | 27 | 27 | 27 | 27 |
|  | Presence or absence of coloring agent | - | - | - | - | - | - |
|  | Presence or absence of heat shielding substance | - | - | - | - | - | - |
|  | Minimum thickness | μm | 260 | 260 | 260 | 260 | 260 |
|  | Coordinate of minimum thickness position | - | 0.1X | 0.1X | 0.1X | 0.1X | 0.1X |
|  | Maximum thickness | μm | 738 | 940 | 1041 | 1113 | 1113 |
|  | Coordinate of maximum thickness position | - | 0.9X | 0.9X | 0.9X | 0.9X | 0.9X |

[Table 35]

|  |  |  | Example 22 | Example 23 | Example 24 | Example 25 | Example 26 |
|---|---|---|---|---|---|---|---|
| Total thickness (1) of colored layer at minimum thickness position of interlayer film |  | μm | 500 | 500 | 500 | 500 | 500 |
| Total thickness (2) of colored layer at maximum thickness position of interlayer film |  | μm | 922 | 720 | 619 | 547 | 547 |
| Absolute value of difference between total thickness (1) and total thickness (2) |  | μm | 422 | 220 | 119 | 47 | 47 |
| Tv2 of laminated glass A at minimum thickness position (X2) |  | % | 80.0 | 80.0 | 80.0 | 80.0 | 86.2 |
| Tv1 of laminated glass A at maximum thickness position (X1) |  | % | 73.4 | 76.5 | 78.0 | 79.2 | 85.9 |
| $\Delta$Tv(=Tv2-Tv1) | Left-hand side of formula (1-1) | % | 6.6 | 3.5 | 2.0 | 0.8 | 0.3 |
| $\Delta$Tvideal | Right-hand side of formula (1-1) | % | 10.06 | 10.06 | 10.06 | 10.06 | 3.87 |

(continued)

|  | - | Example 22 | Example 23 | Example 24 | Example 25 | Example 26 |
|---|---|---|---|---|---|---|
| Haze of laminated glass | - | A | A | A | A | A |
| Color irregularities of laminated glass | - | C | B | A | A | A |
| Double images | - | A | A | A | A | C |

[Table 36]

| Coordinate (mm) | Thickness of first layer (μm) | | | | | Thickness of second layer (μm) | | | |
|---|---|---|---|---|---|---|---|---|---|
| | Comparative Example 1 | Example 18 | Example 19 | Example 20 | Example 21 | Example 18 | Example 19 | Example 20 | Example 21 |
| 125 | 760 | 514 | 511 | 479 | 450 | 246 | 249 | 281 | 310 |
| 225 | 850 | 535 | 529 | 479 | 434 | 315 | 321 | 371 | 416 |
| 325 | 940 | 551 | 540 | 479 | 425 | 389 | 400 | 461 | 515 |
| 425 | 1030 | 560 | 544 | 479 | 422 | 470 | 486 | 551 | 608 |
| 525 | 1120 | 563 | 537 | 479 | 425 | 557 | 583 | 641 | 695 |
| 625 | 1210 | 561 | 535 | 479 | 435 | 649 | 675 | 731 | 775 |
| 725 | 1300 | 552 | 532 | 479 | 452 | 748 | 768 | 821 | 848 |
| 825 | 1390 | 537 | 486 | 479 | 475 | 853 | 904 | 911 | 915 |
| 925 | 1480 | 516 | 454 | 479 | 504 | 964 | 1026 | 1001 | 976 |
| 1025 | 1570 | 490 | 414 | 479 | 540 | 1080 | 1156 | 1091 | 1030 |
| 1125 | 1660 | 457 | 368 | 479 | 582 | 1203 | 1292 | 1181 | 1078 |

[Table 37]

| Coordinate (mm) | Visible light transmittance Tv(%) | | | | |
|---|---|---|---|---|---|
| | Comparative Example 1 | Example 18 | Example 19 | Example 20 | Example 21 |
| 125 | 80.0 | 80.0 | 80.0 | 80.0 | 80.0 |
| 225 | 79.1 | 79.5 | 79.6 | 80.0 | 80.4 |
| 325 | 78.1 | 79.2 | 79.2 | 80.0 | 80.7 |
| 425 | 77.2 | 78.9 | 79.0 | 80.0 | 80.9 |
| 525 | 76.3 | 78.7 | 79.0 | 80.0 | 81.0 |
| 625 | 75.4 | 78.6 | 79.1 | 80.0 | 81.0 |
| 725 | 74.5 | 78.6 | 79.1 | 80.0 | 80.8 |
| 825 | 73.6 | 78.7 | 79.4 | 80.0 | 80.6 |
| 925 | 72.7 | 79.0 | 79.8 | 80.0 | 80.2 |
| 1025 | 71.9 | 79.3 | 80.3 | 80.0 | 79.7 |
| 1125 | 71.0 | 79.7 | 80.9 | 80.0 | 79.2 |

**EXPLANATION OF SYMBOLS**

1, 1A, 1B, 1C, 1D, 1E, 1F, 1G, 1H, 1I, 1J, 1K, 1L, 1M, 1N: First layer
2, 2A, 2B, 2C, 2D, 2E, 2F, 2G, 2H, 2I, 2J, 2K, 2L, 2M, 2N: Second layer
3, 3A, 3D, 3E, 3F, 3G, 3H, 3I, 3J: Third layer
4F, 4H, 4I, 4J: Fourth layer
5I, 5J: Fifth layer
11, 11A, 11B, 11C, 11D, 11E, 11F, 11G, 11H, 111, 11J, 11K, 11L, 11M, 11N: Interlayer film
11a: One end
11b: Other end

**Claims**

1. An interlayer film for laminated glass, having one end and the other end,

   the interlayer film having a part satisfying a formula (1-1) below when
   a distance between the one end and the other end of the interlayer film is referred to as X,
   a thickness of the interlayer film at an arbitrary position (1) of the interlayer film within a region of 0.1X to 0.9X from the one end toward the other end is referred to as T1 mm,
   a thickness of the interlayer film at a position (2) where the thickness of the interlayer film is smaller than the thickness of the interlayer film at the position (1) within a region of 0.1X to 0.9X from the one end toward the other end by 25 $\mu$m or more is referred to as T2 mm, and
   in a laminated glass A obtained by sandwiching the interlayer film between two sheets of clear glass, a visible light transmittance of the laminated glass A at the position (1) is referred to as Tv1%, and a visible light transmittance of the laminated glass A at the position (2) is referred to as Tv2%:
   [Numerical formula 1]

$$\Delta Tv < Tv2 - \left(\frac{Tv2}{f(T2)}\right)^{\frac{T1}{T2}} \times f(T1) \qquad \cdot \cdot \cdot (1-1)$$

   in the formula (1-1), $\Delta$Tv and f(T) being values indicated by a formula (1-1A) and a formula (1-1B), respectively:

[Numerical formula 2]

$$\Delta Tv = Tv2 - Tv1 \qquad \cdot \cdot \cdot (1 - 1\text{A})$$

$$f(T) = -1.374T + 89.596 \qquad \cdot \cdot \cdot (1 - 1\text{B})$$

2. The interlayer film for laminated glass according to claim 1, wherein

   the position (1) is a maximum thickness position (X1) of the interlayer film within a region of 0.1X to 0.9X from the one end toward the other end, and
   the position (2) is a minimum thickness position (X2) of the interlayer film within a region of 0.1X to 0.9X from the one end toward the other end.

3. The interlayer film for laminated glass according to claim 1 or 2, wherein the interlayer film has a part where the visible light transmittance of the laminated glass A within a region of 0.1X to 0.9X from the one end toward the other end is a numerical value calculated from the formula (1-1B) or less.

4. The interlayer film for laminated glass according to any one of claims 1 to 3, wherein the interlayer film contains a coloring agent.

5. The interlayer film for laminated glass according to any one of claims 1 to 4, wherein the colored region has a plane area of 70% or more in 100% of a total plane area of the interlayer film.

6. The interlayer film for laminated glass according to claim 5, wherein

   the colored region exists at the position (1), and
   the colored region exists at the position (2).

7. The interlayer film for laminated glass according to any one of claims 1 to 6, wherein

   the interlayer film has a colored layer containing a coloring agent, and
   the colored layer has a minimum thickness of 30 $\mu$m or more.

8. The interlayer film for laminated glass according to claim 7, wherein the colored layer exists at the position (1).

9. The interlayer film for laminated glass according to claim 7 or 8, wherein in 100% by weight of the colored layer, a content of the coloring agent is 0.00001% by weight or more and 7% by weight or less.

10. The interlayer film for laminated glass according to any one of claims 7 to 9, wherein the interlayer film includes two or more colored layers.

11. The interlayer film for laminated glass according to any one of claims 1 to 10, wherein when a distance from a first outer surface to a second outer surface of the interlayer film is referred to as t, the coloring agent exists in a region of 0t to 0.2t from the first outer surface toward the second outer surface.

12. The interlayer film for laminated glass according to any one of claims 1 to 11, wherein when a distance from a first outer surface to a second outer surface of the interlayer film is referred to as t, the coloring agent exists in a region of more than 0.2t to 0.4t from the first outer surface toward the second outer surface.

13. The interlayer film for laminated glass according to any one of claims 1 to 12, wherein when a distance from a first outer surface to a second outer surface of the interlayer film is referred to as t, the coloring agent exists in a region of more than 0.4t to 0.5t from the first outer surface toward the second outer surface.

14. The interlayer film for laminated glass according to any one of claims 1 to 13, that satisfies a formula (2) below:
[Numerical formula 3]

$$\Delta Tv < K \times \left( Tv2 - \left(\frac{Tv2}{f(T2)}\right)^{\frac{T1}{T2}} \times f(T1) \right) \quad \cdot \cdot \cdot (2)$$

in the formula (2), $\Delta$Tv and f(T) being values indicated by the formula (1-1A) and the formula (1-1B), respectively, and K is 0.95.

15. The interlayer film for laminated glass according to any one of claims 1 to 14, that satisfies a formula (3) below:
[Numerical formula 4]

$$|\Delta Tv| < \left| Tv2 - \left(\frac{Tv2}{f(T2)}\right)^{\frac{T1}{T2}} \times f(T1) \right| \quad \cdot \cdot \cdot (3)$$

in the formula (3), $\Delta$Tv and f(T) being values indicated by the formula (1-1A) and the formula (1-1B), respectively.

16. The interlayer film for laminated glass according to any one of claims 1 to 15, that satisfies a formula (4) below:
[Numerical formula 5]

$$|\Delta Tv| < K \times \left| Tv2 - \left(\frac{Tv2}{f(T2)}\right)^{\frac{T1}{T2}} \times f(T1) \right| \quad \cdot \cdot \cdot (4)$$

in the formula (4), $\Delta$Tv and f(T) being values indicated by the formula (1-1A) and the formula (1-1B), respectively, K being 0.95.

17. The interlayer film for laminated glass according to any one of claims 1 to 16, that satisfies $\Delta$Tv < 0 in the formula (1-1).

18. The interlayer film for laminated glass according to any one of claims 1 to 17, wherein the interlayer film has a region where a partial wedge angle in a length of 400 mm in a direction connecting the one end and the other end is 0.05 mrad or more.

19. The interlayer film for laminated glass according to any one of claims 1 to 18, wherein the interlayer film as a whole has a wedge angle of 0.05 mrad or more.

20. The interlayer film for laminated glass according to any one of claims 1 to 18, wherein

the interlayer film has a region where a partial wedge angle in a length of 400 mm in the direction connecting the one end and the other end is 0.05 mrad or more, and
the interlayer film as a whole has a wedge angle of less than 0.05 mrad.

21. The interlayer film for laminated glass according to any one of claims 1 to 20, wherein a position where the visible light transmittance of the laminated glass A shows a maximum value within a region of 0.1X to 0.9X from the one end toward the other end is different from the position (1) and is different from the position (2).

22. The interlayer film for laminated glass according to any one of claims 1 to 20, wherein a position where the visible light transmittance of the laminated glass A shows a maximum value within a region of 0.1X to 0.9X from the one end toward the other end is the position (1) or the position (2).

23. The interlayer film for laminated glass according to any one of claims 1 to 22, wherein a position where the visible light transmittance of the laminated glass A shows a minimum value within a region of 0.1X to 0.9X from the one end toward the other end is different from the position (1) and is different from the position (2).

24. The interlayer film for laminated glass according to any one of claims 1 to 22, wherein a position where the visible light transmittance of the laminated glass A shows a minimum value within a region of 0.1X to 0.9X from the one end toward the other end is the position (1) or the position (2).

25. The interlayer film for laminated glass according to any one of claims 1 to 24, wherein the interlayer film has a region where the visible light transmittance of the laminated glass A is 85% or less.

26. The interlayer film for laminated glass according to any one of claims 1 to 25, wherein

the interlayer film includes a layer having a storage modulus at 20°C of 4 MPa or more,
the interlayer film has uneven surface given by an emboss roll method or a melt fracture method, the uneven surface has a ten-point average roughness of 1 $\mu$m or more and 100 $\mu$m or less, and
the interlayer film has a refractive index of 1.46 or more.

27. An interlayer film for laminated glass having one end and the other end,

the interlayer film including a colored layer containing a coloring agent,
in a laminated glass A obtained by sandwiching the interlayer film between two sheets of clear glass, the interlayer film having a shading region that corresponds to a region having a visible light transmittance of less than 60% in the laminated glass A, and a second region having a visible light transmittance of 60% or more in the laminated glass A,
the second region having a region P that is a region of 200 mm toward the second region side from a boundary between the second region and the shading region, and a region Q that is a region other than the region P,
in 100% of a total plane area of the region Q of the interlayer film, a plane area of a part where the colored layer exists being 80% or more,
the interlayer film having a part satisfying a formula (1-2) below
when a thickness of the interlayer film at an arbitrary position (Q1) of the interlayer film in the region Q existing within a region of 0.1X to 0.9X from the one end toward the other end is referred to as T1 mm,
a thickness of the interlayer film at a position (Q2) where the thickness of the interlayer film is smaller by 25 $\mu$m or more than the thickness of the interlayer film at the position (Q1) in the region Q existing within a region of 0.1X to 0.9X from the one end toward the other end is referred to as T2 mm,
a visible light transmittance of the laminated glass A in the position (Q1) is referred to as Tv1%, and
a visible light transmittance of the laminated glass A in the position (Q2) is referred to as Tv2%:
[Numerical formula 6]

$$\Delta Tv < Tv2 - \left(\frac{Tv2}{f(T2)}\right)^{\frac{T1}{T2}} \times f(T1) \qquad \cdot \cdot \cdot (1-2)$$

in the formula (1-2), $\Delta$Tv and f(T) being values indicated by the following formula (1-2A) and the following formula (1-2B), respectively:

[Numerical formula 7]

$$\Delta Tv = Tv2 - Tv1 \qquad \cdot \cdot \cdot (1-2A)$$

$$f(T) = -1.374T + 89.596 \qquad \cdot \cdot \cdot (1-2B)$$

**28.** The interlayer film for laminated glass according to claim 27, wherein

the position (Q1) is a maximum thickness position (XQ1) of the interlayer film in the region Q existing within a region of 0.1X to 0.9X from the one end toward the other end, and
the position (Q2) is a minimum thickness position (XQ2) of the interlayer film in the region Q existing within a region of 0.1X to 0.9X from the one end toward the other end.

**29.** A laminated glass comprising:

a first lamination glass member;
a second lamination glass member; and
the interlayer film for laminated glass according to any one of claims 1 to 28,
the interlayer film for laminated glass being arranged between the first lamination glass member and the second lamination glass member.

**30.** The laminated glass according to claim 29, wherein

the first lamination glass member has a uniform thickness, and
the second lamination glass member has a uniform thickness.

**31.** A production method that fits either of 1) and 2) below:

1) A method for producing the interlayer film for laminated glass according to any one of claims 1 to 28, and
2) A method for producing a laminated glass according to claim 29 or 30.

[FIG. 1]

11

1    2

11a    11b

3

0. 1X    0. 1X

[FIG. 2]

11A

1A    2A

11a    11b

3A

0. 1X    0. 1X

EP 4 509 476 A1

[FIG. 3]

<u>11B</u>

2B

1B

11b

11a

0. 1X    0. 1X

[FIG. 4]

<u>11C</u>

2C

1C

11b

11a

0. 1X    0. 1X

[FIG. 5]

11D

1D          2D

11a          11b

3D

0. 1X          0. 1X

[FIG. 6]

11E

1E          2E

11a          11b

3E

0. 1X          0. 1X

[FIG. 7]

11F

[FIG. 8]

11G

[FIG. 9]

11H

4H

2H

11b

11a

1H

3H

0. 1X      0. 1X

[FIG. 10]

11I

4I

2I  5I

11b

11a

1I   3I

Q        P    Tv<60%

[FIG. 11]

11J

4J 1J 2J

11a

5J 3J

11b

0. 1X          0. 1X

[FIG. 12]

11K

2K

1K

11a

11b

0. 1X          0. 1X

EP 4 509 476 A1

[FIG. 13]

[FIG. 14]

70

[FIG. 15]

<u>11N</u>

2N

1N

11b

11a

0. 1X    0. 1X

[FIG. 16]

<u>100</u>

[FIG. 17]

y = -1.374x + 89.596

[FIG. 18]

# EP 4 509 476 A1

## INTERNATIONAL SEARCH REPORT

International application No.

**PCT/JP2023/015239**

### A. CLASSIFICATION OF SUBJECT MATTER

***C03C 27/12***(2006.01)i; ***B60J 1/02***(2006.01)i
FI: C03C27/12 Z; C03C27/12 N; B60J1/02 M

According to International Patent Classification (IPC) or to both national classification and IPC

### B. FIELDS SEARCHED

Minimum documentation searched (classification system followed by classification symbols)

C03C27/12; B32B1/00-43/00; B60J1/00-1/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/189741 A1 (SEKISUI CHEMICAL CO., LTD.) 03 October 2019 (2019-10-03) paragraphs [0013]-[0026], [0074], [0075], [0077], [0203]-[0232], tables 1, 2, examples 1-8, fig. 2 | 1-16, 18-19, 21-25, 27-31 |
| Y | | 20, 26 |
| A | | 17 |
| X | WO 2021/261507 A1 (SEKISUI CHEMICAL CO., LTD.) 30 December 2021 (2021-12-30) paragraphs [0010]-[0014], [0224]-[0241], tables 1, 2, examples 3, 4, 7, 9, fig. 1-3 | 1-4, 7, 9, 11-17, 21-25, 29-31 |
| Y | | 26 |
| A | | 5-6, 8, 10, 18-20, 27-28 |
| Y | JP 2004-536009 A (E.I. DU PONT DE NEMOURS AND CO.) 02 December 2004 (2004-12-02) paragraphs [0013]-[0016], fig. 1, 3-8 | 20 |
| Y | JP 2020-528039 A (SAINT-GOBAIN GLASS FRANCE) 17 September 2020 (2020-09-17) paragraphs [0036]-[0038], fig. 4 | 20 |

☑ Further documents are listed in the continuation of Box C.  ☑ See patent family annex.

\*  Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 June 2023** | **04 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

73

**INTERNATIONAL SEARCH REPORT**

| International application No. |
| --- |
| **PCT/JP2023/015239** |

### C. DOCUMENTS CONSIDERED TO BE RELEVANT

| Category* | Citation of document, with indication, where appropriate, of the relevant passages | Relevant to claim No. |
| --- | --- | --- |
| Y | WO 2017/135470 A1 (KURARAY CO., LTD.) 10 August 2017 (2017-08-10) paragraphs [0072]-[0073], [0129]-[0132] | 26 |
| Y | WO 2021/002035 A1 (SEKISUI CHEMICAL CO., LTD.) 07 January 2021 (2021-01-07) paragraphs [0095]-[0102] | 26 |
| A | WO 2017/039004 A1 (SEKISUI CHEMICAL CO., LTD.) 09 March 2017 (2017-03-09) entire text | 1-31 |

Form PCT/ISA/210 (second sheet) (January 2015)

INTERNATIONAL SEARCH REPORT
Information on patent family members

International application No.

**PCT/JP2023/015239**

| Patent document cited in search report | | | Publication date (day/month/year) | Patent family member(s) | | | Publication date (day/month/year) |
|---|---|---|---|---|---|---|---|
| WO | 2019/189741 | A1 | 03 October 2019 | US | 2021/0078303 | A1 | |
| | | | | paragraphs [0014]-[0027], [0076], [0077], [0079], [0213]-[0255], tables 1, 2, examples 1-8, fig. 2 | | | |
| | | | | EP | 3778517 | A1 | |
| | | | | CN | 111918850 | A | |
| | | | | KR | 10-2020-0138191 | A | |
| WO | 2021/261507 | A1 | 30 December 2021 | TW | 202212286 | A | |
| JP | 2004-536009 | A | 02 December 2004 | US | 2004/0166288 | A1 | |
| | | | | paragraphs [0022]-[0025], fig. 1, 3-8 | | | |
| | | | | EP | 1395867 | A1 | |
| | | | | CN | 1537247 | A | |
| | | | | WO | 2002/103434 | A1 | |
| JP | 2020-528039 | A | 17 September 2020 | US | 2020/0147934 | A1 | |
| | | | | paragraphs [0036]-[0038], fig. 4 | | | |
| | | | | EP | 3658371 | A1 | |
| | | | | CN | 109562606 | A | |
| | | | | KR | 10-2020-0019988 | A | |
| | | | | WO | 2019/020432 | A1 | |
| WO | 2017/135470 | A1 | 10 August 2017 | US | 2019/0054723 | A1 | |
| | | | | paragraphs [0086], [0087], [0143]-[0146] | | | |
| | | | | EP | 3412450 | A1 | |
| | | | | CN | 108602333 | A | |
| | | | | KR | 10-2018-0111929 | A | |
| WO | 2021/002035 | A1 | 07 January 2021 | US | 2022/0288896 | A1 | |
| | | | | paragraphs [0102]-[0109] | | | |
| | | | | EP | 3995466 | A1 | |
| | | | | CN | 114072365 | A | |
| | | | | KR | 10-2022-0023759 | A | |
| WO | 2017/039004 | A1 | 09 March 2017 | TW | 201718429 | A | |

Form PCT/ISA/210 (patent family annex) (January 2015)

**REFERENCES CITED IN THE DESCRIPTION**

**Patent documents cited in the description**

- WO 2021145328 A1